(19) **Europäisches Patentamt**
**European Patent Office**
**Office européen des brevets**

(11) **EP 3 682 417 B1**

(12) **EUROPEAN PATENT SPECIFICATION**

(45) Date of publication and mention
of the grant of the patent:
**10.01.2024 Bulletin 2024/02**

(51) International Patent Classification (IPC):
***G06C 7/04*** *(2006.01)*     ***B60W 40/06*** *(2012.01)*

(21) Application number: **18854367.2**

(22) Date of filing: **07.09.2018**

(52) Cooperative Patent Classification (CPC):
**B60W 40/06; B60W 40/076; B60W 40/13;
G01C 7/04; G01C 21/3815; G01C 21/3848;
G01C 21/3878;** B60W 2552/20; B60W 2555/40

(86) International application number:
**PCT/IB2018/056844**

(87) International publication number:
**WO 2019/049080 (14.03.2019 Gazette 2019/11)**

(54) **METHOD AND APPARATUS FOR EVALUATING A WEIGHT OF THE VEHICLE**

VERFAHREN UND VORRICHTUNG ZUR GEWICHTSERMITTLUNG EINES FAHRZEUGS

MÉTHODE ET DISPOSITIF POUR ÉVALUER LE POIDS DU VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.09.2017 US 201762556443 P
10.09.2017 US 201762556444 P
10.09.2017 US 201762556445 P
10.09.2017 US 201762556447 P
28.09.2017 US 201762564270 P
18.10.2017 US 201762573828 P
23.10.2017 US 201762575544 P
24.08.2018 US 201862722210 P**

(43) Date of publication of application:
**22.07.2020 Bulletin 2020/30**

(73) Proprietor: **Tactile Mobility Ltd.
3326226 Haifa (IL)**

(72) Inventors:
• **MIZRAHI, Boaz**
  **3254705 Haifa (IL)**
• **ADLER, Yaron**
  **2623737 Kiryat Haim (IL)**
• **SHAPIRA, Stanislav**
  **2244411 Nahariya (IL)**
• **MATUKY, Yigal**
  **32584 Haifa (IL)**
• **ROSENBERG, Aviv**
  **3601801 Kiryat Tivon (IL)**

(74) Representative: **Noble, Frederick
Albright IP Limited
County House
Bayshill Road
Cheltenham, Glos. GL50 3BA (GB)**

(56) References cited:
**WO-A2-02/25291**     **US-A1- 2010 235 039**
**US-A1- 2016 047 648**     **US-A1- 2016 244 067**
**US-A1- 2016 258 749**     **US-A1- 2017 010 174**
**US-A1- 2017 010 174**     **US-B1- 7 035 733**

Remarks:
The file contains technical information submitted after the application was filed and not included in this specification

EP 3 682 417 B1

**Description**

CROSS REFERENCE

This application claims priority from the following provisional patents:

a. US provisional patent 62/573,828 filing date October 18, 2017.
b. US provisional patent 62/556,447 filing date September 10, 2017.
c. US provisional patent 62/556,445 filing date September 10, 2017.
d. US provisional patent 62/564,270 filing date September 28, 2017.
e. US provisional patent 62/575,544 filing date October 23, 2017.
f. US provisional patent 62/556,444 filing date September 10, 2017.
g. US provisional patent 62/556,443 filing date September 10, 2017.
h. US provisional patent 62/722,210 filing date August 24 2018.

BACKGROUND

Elevation data

Human driver and autonomous vehicles may benefit from highly accurate information about roads.
There is a growing need to provide an efficient method for generating highly accurate information about roads.

Measuring physical events

Autonomous Vehicles (AV) applications and Advanced Driver Assistance Systems (ADAS) applications today has several knowledge gaps, that make their solutions vulnerable, mainly due to usage of visual sensors.
One of the major problems for AV is the map localization - given a map, pinpoint the current location on the map, in relatively high accuracy.
The initial sensor used for localization is the GPS. This normally gives the general area on the map. Sometimes it can be accurate as few meters, but sometimes far than that, and even missing (when sky are not clear, urban environments, or under roofs and covers).
Following the rough information given by the GPS, the main sensors used today for localization fine-tuning are the visual sensors: Camera, LiDAR, RADAR, IR Camera. These sensors normally compare the visual image post processing to image data that was mapped/collected before. When working fine, it may yield accuracy of centimeters.
The main problem is that these sensors are not functioning 100% of the time due to problems such as: bad weather, headlight blindness, jamming, change in the scene, etc.
In such cases, the vehicle my not be able to localize itself accurately: longitudinal and latitudinal.
Furthermore- the knowledgebase required for exact positioning when using visual sensor is very large as it include a large number of images. Updating the database may require vast communication and processing resources.

Vehicle Profile

Autonomous Vehicles (AV) applications and Advanced Driver Assistance Systems (ADAS) applications are based on the vehicle behavior and on road conditions.
A vehicle behavior depends on a vast number of parameters - thus making the vehicle behavior unpredictable - even when allocating vast computational and storage resources to the estimation of the vehicle behavior.
There is a growing need to provide an accurate and effective estimate of a behavior of a vehicle.

Weight

The weight of a vehicle may have a significant influence on the performance of the vehicle. For example, the weight of the vehicle affects the break distance. The weight of the vehicle also affects the fuel consumption, the ware of various modules of the vehicle, and the like.
The document US2016244067 discloses a method and a system for evaluating a weight of a vehicle with a data acquisition component disposed at the vehicle to collect time indexed vehicle data and a processor which determines the mass of the vehicle at a specific point in time.
Autonomous Vehicles (AV) applications and Advanced Driver Assistance Systems (ADAS) applications may benefit from receiving in real time accurate measurements of the weight of the vehicle.

The weight of a vehicle may be of commercial importance when the vehicle is conveying goods, and the total weight of the vehicle provides an estimate of the overall weight of goods that are conveyed by the vehicle.

There is a growing need to provide accurate estimates of the weight of the vehicle.

Grip

An anti-lock braking system or anti-skid braking system (ABS) is an automobile safety system that allows the wheels on a motor vehicle to maintain tractive contact with the road surface according to driver inputs while breaking, preventing the wheels from locking up (ceasing rotation) and avoiding uncontrolled skidding (www.wikipedia.org). A typical ABS system prevents the wheels from locking up by releasing the brakes - usually by pumping the breaks when the marginal grip reaches a certain threshold. The pumping of the breaks is energy consuming and there is a growing need to reduce this energy consumption. Furthermore - when reaching a marginal grip value the breaking effectiveness reduces. There is a growing need to improve the breaking effectiveness.

Autonomous Vehicles (AV) applications and Advanced Driver Assistance Systems (ADAS) applications are based on various parameters including but not limited to vehicle parameters and on road conditions.

The road conditions and the vehicle parameters may change over time and the grip may change over time in an unpredicted manner. These grip changes may affect the manner in which the vehicle should be driven.

There is a growing need to determine the grips of path segments is a fast and accurate manner.

SUMMARY

WEIGHT

There are provided methods, systems and non-transitory computer readable media as illustrates in the claims and/or the specification and/or drawings.

According to claim 1, a method for evaluating a weight of a vehicle, the method includes obtaining during a learning period and by vehicle sensors, vehicle sensor measurements regarding driving sessions of the vehicle, wherein the vehicle sensor measurement comprise (a) height measurements of paths related to the driving sessions, (b) fuel consumption measurements related to the driving sessions, (c) length measurements of the of road segments related to the driving sessions; and (d) velocity measurements related to the driving sessions; and calculating, based on the vehicle sensor measurements, an evaluated weight of the vehicle; wherein the calculating is based on values of energy coefficients that are indicative of energy wasted by the vehicle; wherein the calculating comprises (a) searching for values of the energy coefficients that provide at least one distribution related to weight estimates of the vehicle, the at least one distribution fulfills at least one predefined statistical significance criterion; and (b) determining weight estimates for each path segment of the plurality of path segments and for different values of the energy coefficients.

The determining of the evaluated weight may include determining weight estimates for each path segment of the plurality of path segments, according to the following equation

$$ m = \frac{ame \cdot fe \cdot fuel - k_1 x - k_3 x v^2}{g \Delta h + \frac{(v_2{}^2 - v_1{}^2)}{2} + k_2 x + k_4 x v^2} $$

wherein the group of energy coefficients may include k1 k2 k3 and k4;

wherein ame may be a value of the estimated motor efficiency function;

wherein v $_{may\ be}$ a velocity of the vehicle at an end of the path segment;

v $_{may\ be}$ a velocity of the vehicle at a start of the path segment;

v represents at least one value of a velocity of the vehicle when driving over the path segment; x may be a length of the path segment;

$\Delta$h may be a height difference between the end and the start of the path segment; and fuel may be an error corrected fuel consumption related to the path segment.

The calculating includes searching for values of the energy coefficients that provide at least one distribution related to weight estimates of the vehicle, the at least one distribution fulfills at least one predefined statistical significance criterion

The predefined statistical significance criterion may be a maximal statistical significance.

The predefined statistical significance criterion may be a smallest standard deviation of at least one of the weight estimate distributions.

The determining of the evaluated weight includes determining weight estimates for each path segment of the plurality of path segments and for different values of the energy coefficients.

The determining of the evaluated weight may include determining weight estimates for each path segment of the plurality of path segments, for different values of the energy coefficients and for different motor efficiency function values.

The determining of the evaluated weight may include determining weight estimates for each path segment of the plurality of path segments, for different values of the energy coefficients and for different fuel consumption error correction function values.

The determining of the evaluated weight may include determining weight estimates for each path segment of the plurality of path segments, for different values of the energy coefficients, for different motor efficiency function values and for different fuel consumption error correction function values.

The determining of the evaluated weight may include associating a quality attribute with each weight estimate.

The determining of the evaluated weight may include associating a quality attribute with each weight estimate, wherein the at least one distribution related to weight estimates of the vehicle may be responsive to the quality attribute assigned to each weight estimate.

The determining of the evaluated weight may include associating a quality attribute with each weight estimate, wherein the at least one distribution related to weight estimates of the vehicle may be a histogram, wherein the histogram may include bins, wherein each bin may be associated with a weight estimate range and has a value that represents quality attributes of weight estimates that belong to the bin.

The determining of the evaluated weight may include associating a quality attribute with each weight estimate, wherein the at least one distribution related to weight estimates of the vehicle may be a histogram, wherein the histogram may include bins, wherein each bin may be associated with a weight estimate range and has a value that represents a sum of quality attributes of weight estimates that belong to the bin.

The method may include assigning quality attributes to at least some of the vehicle sensor measurements.

The method may include assigning quality attribute to vehicle sensor measurements related to a certain path segment based on a difference related to velocities of the vehicle at a start and at an end of the certain path segment.

The method may include assigning quality attribute to vehicle sensor measurements related to a certain path segment based on a maximal velocity of the vehicle during the certain driving session.

The method may include ignoring vehicle sensor measurements obtained at path segments in which the vehicle descended.

The calculating may include applying machine learning.

There is provided according to claim 12, a non-transitory computer readable medium for evaluating a weight of a vehicle, the non-transitory computer readable medium stores instructions for: obtaining during a learning period, vehicle sensor measurements regarding driving sessions of the vehicle, wherein the vehicle sensor measurement comprise (a) height measurements of paths related to the driving sessions, (b) fuel consumption measurements related to the driving sessions, (c) length measurements of the of road segments related to the driving sessions; and (d) velocity measurements related to the driving sessions; and calculating, based on the vehicle sensor measurements, an evaluated weight of the vehicle; wherein the calculating is based on values of energy coefficients that are indicative of energy wasted by the vehicle; wherein the calculating comprises (a) searching for values of the energy coefficients that provide at least one distribution related to weight estimates of the vehicle, the at least one distribution fulfills at least one predefined statistical significance criterion; and (b) determining weight estimates for each path segment of the plurality of path segments and for different values of the energy coefficients.

The determining of the evaluated weight may include determining weight estimates for each path segment of the plurality of path segments, according to the following equation

$$m = \frac{ame \cdot fe \cdot fuel - k_1 x - k_3 x v^2}{g \Delta h + \frac{(v_2{}^2 - v_1{}^2)}{2} + k_2 x + k_4 x v^2}$$

wherein the group of energy coefficients may include k1 k2 k3 and k4;
wherein ame may be a value of the estimated motor efficiency function;
wherein v $_{may\ be}$ a velocity of the vehicle at an end of the path segment;
v $_{may\ be}$ a velocity of the vehicle at a start of the path segment;
v represents at least one value of a velocity of the vehicle when driving over the path segment;
x may be a length of the path segment;
may be a height difference between the end and the start of the path segment; and
fuel may be an error corrected fuel consumption related to the path segment.

The calculating includes searching for values of the energy coefficients that provide at least one distribution related to weight estimates of the vehicle, the at least one distribution fulfills at least one predefined statistical significance criterion

The predefined statistical significance criterion may be a maximal statistical significance.

The predefined statistical significance criterion may be a smallest standard deviation of at least one of the weight estimate distributions.

The determining of the evaluated weight includes determining weight estimates for each path segment of the plurality of path segments and for different values of the energy coefficients.

The determining of the evaluated weight may include determining weight estimates for each path segment of the plurality of path segments, for different values of the energy coefficients and for different motor efficiency function values.

The determining of the evaluated weight may include determining weight estimates for each path segment of the plurality of path segments, for different values of the energy coefficients and for different fuel consumption error correction function values.

The determining of the evaluated weight may include determining weight estimates for each path segment of the plurality of path segments, for different values of the energy coefficients, for different motor efficiency function values and for different fuel consumption error correction function values.

The determining of the evaluated weight may include associating a quality attribute with each weight estimate.

The determining of the evaluated weight may include associating a quality attribute with each weight estimate, wherein the at least one distribution related to weight estimates of the vehicle may be responsive to the quality attribute assigned to each weight estimate.

The determining of the evaluated weight may include associating a quality attribute with each weight estimate, wherein the at least one distribution related to weight estimates of the vehicle may be a histogram, wherein the histogram may include bins, wherein each bin may be associated with a weight estimate range and has a value that represents quality attributes of weight estimates that belong to the bin.

The determining of the evaluated weight may include associating a quality attribute with each weight estimate, wherein the at least one distribution related to weight estimates of the vehicle may be a histogram, wherein the histogram may include bins, wherein each bin may be associated with a weight estimate range and has a value that represents a sum of quality attributes of weight estimates that belong to the bin.

The non-transitory computer readable medium may store instructions for assigning quality attributes to at least some of the vehicle sensor measurements.

The non-transitory computer readable medium may store instructions for assigning quality attribute to vehicle sensor measurements related to a certain path segment based on a difference related to velocities of the vehicle at a start and at an end of the certain path segment.

The non-transitory computer readable medium may store instructions for assigning quality attribute to vehicle sensor measurements related to a certain path segment based on a maximal velocity of the vehicle during the certain driving session.

The non-transitory computer readable medium may store instructions for ignoring vehicle sensor measurements obtained at path segments in which the vehicle descended.

The calculating may include applying machine learning.

The method may further include obtaining, during a new driving session and by the vehicle sensors, new vehicle sensor measurements related to the new driving session; and calculating the weight of the vehicle, by a vehicle computer, based on the values of the energy coefficients and the new vehicle sensor measurements.

The method may include receiving information regarding a motor efficiency function of the vehicle and wherein the calculating of the weight of the vehicle may be further responsive to the motor efficiency function of the vehicle.

The information regarding the motor efficiency function may include motor efficiency function coefficients.

The number of motor efficiency function coefficients may not exceed fifty.

The method may include receiving information regarding a fuel consumption error correction function of the vehicle and wherein the calculating of the weight of the vehicle may be further responsive to the fuel consumption error correction function.

The information regarding a fuel consumption error correction function may include fuel consumption error correction function coefficients.

The number of fuel consumption error correction function coefficients may not exceed ten.

The method may include receiving information regarding a motor efficiency function of the vehicle and a fuel consumption error correction function of the vehicle, and wherein the calculating of the weight of the vehicle may be further responsive to the motor efficiency function of the vehicle and to the fuel consumption error correction of the vehicle.

The calculating of the weight of the vehicle may be performed in real time.

The method may include transmitting the new vehicle sensor measurements related to the new driving session.

The method may include receiving updated values of energy coefficients and wherein the calculating of the weight may be responsive to the updated values of energy coefficients.

The calculating of the weight may include calculating, for a new path segments of the new session, the following equation:

$$m = \frac{ame \cdot fe \cdot fuel - k_1 x - k_3 x v^2}{g\Delta h + \frac{(v_2^2 - v_1^2)}{2} + k_2 x + k_4 x v^2}$$

wherein the group of energy coefficients may include $k_1$, $k_2$, $k_3$ and $k_4$;

wherein ame may be a value of the estimated motor efficiency function;

wherein $v_2$ may be a velocity of the vehicle at an end of the new path segment;

vi may be a velocity of the vehicle at a start of the new path segment;

v represents at least one value of a velocity of the vehicle when driving over the new path segment;

x may be a length of the new path segment;

may be a height difference between the end and the start of the new path segment; and

fuel may be an error corrected fuel consumption related to the new path segment.

The instructions stored in the non-transitory computer readable medium may further include obtaining, during a new driving session and by the vehicle sensors, new vehicle sensor measurements related to the new driving session; and calculating the weight of the vehicle, by a vehicle computer, based on the values of the energy coefficients and the new vehicle sensor measurements.

The non-transitory computer readable medium may store instructions for receiving information regarding a motor efficiency function of the vehicle and wherein the calculating of the weight of the vehicle may be further responsive to the motor efficiency function of the vehicle.

The information regarding the motor efficiency function may include motor efficiency function coefficients.

The number of motor efficiency function coefficients does not exceed fifty. The number of per gear may not exceed three.

The non-transitory computer readable medium may store instructions for receiving information regarding a fuel consumption error correction function of the vehicle and wherein the calculating of the weight of the vehicle may be further responsive to the fuel consumption error correction function.

The information regarding a fuel consumption error correction function may include fuel consumption error correction function coefficients.

The number of fuel consumption error correction function coefficients may not exceed ten.

'The non-transitory computer readable medium may store instructions for receiving information regarding a motor efficiency function of the vehicle and a fuel consumption error correction function of the vehicle, and wherein the calculating of the weight of the vehicle may be further responsive to the motor efficiency function of the vehicle and to the fuel consumption error correction of the vehicle.

The calculating of the weight of the vehicle may be performed in real time.

The non-transitory computer readable medium may store instructions for transmitting the new vehicle sensor measurements related to the new driving session.

The non-transitory computer readable medium may store instructions for receiving updated values of energy coefficients and wherein the calculating of the weight may be responsive to the updated values of energy coefficients.

The calculating of the weight may include calculating, for a new path segments of the new session, the following equation:

$$m = \frac{ame \cdot fe \cdot fuel - k_1 x - k_3 x v^2}{g\Delta h + \frac{(v_2^2 - v_1^2)}{2} + k_2 x + k_4 x v^2}$$

wherein the group of energy coefficients may include $k_1$, $k_2$, $k_3$ and $k_4$;

wherein ame may be a value of the estimated motor efficiency function;

wherein $v_2$ may be a velocity of the vehicle at an end of the new path segment;

vi may be a velocity of the vehicle at a start of the new path segment;

v represents at least one value of a velocity of the vehicle when driving over the new path segment;

x may be a length of the new path segment;

may be a height difference between the end and the start of the new path segment; and

fuel may be an error corrected fuel consumption related to the new path segment.

BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

FIG. 1 illustrates an example of some road segments and some sessions;
FIG. 2 illustrates an example of nodes and edges that represent the sessions;
FIG. 3 illustrates an example of vehicle, a network and a computerized system;
FIG. 4 illustrates an example of vehicle, a network and a computerized system;
FIG. 5 illustrates an example of a method not covered by the claims;
FIG. 6 illustrates an example of a method not covered by the claims;
FIG. 7 illustrates an example of a method not covered by the claims;
FIG. 8 illustrates height measurements relating to two sequences of road segments, and a welding error;
FIGs. 9 and 10 provide examples of multiple sessions and various height estimation processes;
FIG. 11 illustrates an example of a method not covered by the claims;
FIG. 12 illustrates an example of a method not covered by the claims;
FIG. 13 illustrates an example of a method not covered by the claims;
FIG. 14 illustrates an example of a reference map;
FIG. 15 illustrates an example of a step of the method of FIG. 12 and of the method of FIG. 13;
FIGs. 16 and 17 illustrate an example of roads, road segments, ways and nodes;
FIG. 18 illustrates the bottom of a vehicle;
FIG. 19 illustrates a calibration function;
FIG. 20 illustrates an example of a vehicle;
FIG. 21 illustrates a method not covered by the claims;
FIG. 22 illustrates an example of a method not covered by the claims;
FIG. 23 illustrates an example of a vehicle profile;
FIG. 24 illustrates an example of a cruise table;
FIG. 25 illustrates an example of an idle acceleration table;
FIG. 26 illustrates an example of an acceleration table;
FIG. 27 illustrates an example of generating or updating the vehicle profile;
FIG. 28 illustrates an example of a method not covered by the claims;
FIG. 29 illustrates an example of a road path, maximal allowable speed, and a suggested velocity of the vehicle;
FIG. 30 illustrates an example of a method according to the invention;
FIG. 31 illustrates an example of a method;
FIG. 32 illustrates an example of an approximation of a motor efficiency function;
FIG. 33 illustrates a table that includes forty-eight coefficients;
FIG. 34 illustrates an example of a non-linear approximation of a motor efficiency function;
FIG. 35 is an example of an approximation of a fuel consumption error correction function;
FIG. 36 illustrates a histogram of a distribution related to weight estimates;
FIG. 37 illustrates a histogram of a distribution related to weight estimates;
FIG. 38 illustrates an example of a method;
FIG. 39 illustrates an example of a method;
FIG. 40 illustrates an example of a vehicle, a network, and a computerized system;
FIG. 41 illustrates an example of a vehicle, a network, and a computerized system;
FIG. 42 illustrates an example of a vehicle, a network, and a computerized system;
FIG. 43 illustrates an example of a method;
FIG. 44 illustrates an example of a method;
FIG. 45 illustrates an example of a method;
FIG. 46 illustrates an example of a method and of breaking profiles;
FIG. 47 illustrates an example of a method not covered by the claims;
FIG. 48 illustrates an example of a method not covered by the claims;
FIG. 49 illustrates an example of a method not covered by the claims;
FIG. 50 illustrates an example of a vehicle, a network and a computerized system;

FIG. 51 illustrates an example of normalized slip curves;

FIG. 52 illustrates an example of a a vehicle speed and of a wheel speed;

FIG. 53 illustrates an example of a method not covered by the claims;

FIG. 54 illustrates an example of a method not covered by the claims;

FIG. 55 illustrates an example of a method not covered by the claims;

FIG. 56 illustrates an example of a method not covered by the claims;

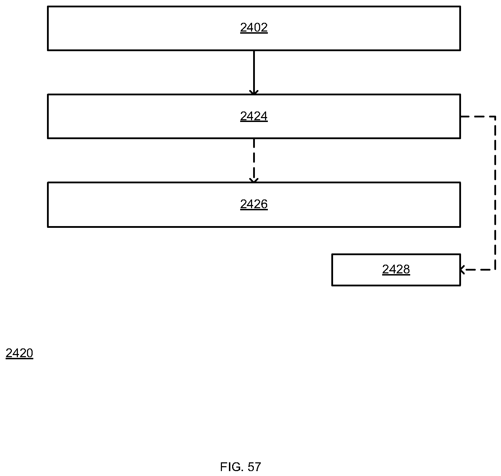

FIG. 57 illustrates an example of a method not covered by the claims.

DETAILED DESCRIPTION OF THE DRAWINGS

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

Any reference in the specification to a system should be applied mutatis mutandis to a method that can be executed by the system.

Because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system should be applied mutatis mutandis to a method that can be executed by the system and should be applied mutatis mutandis to a non-transitory computer readable medium that stores instructions that once executed by a computer result in the execution of the method.

ELEVATION DATA AND BAROMETER NOISE ESTIMATION

According to an example not covered by the claims the method may include an initial error correction process and a location process of associating barometer readings to the location of the vehicle.

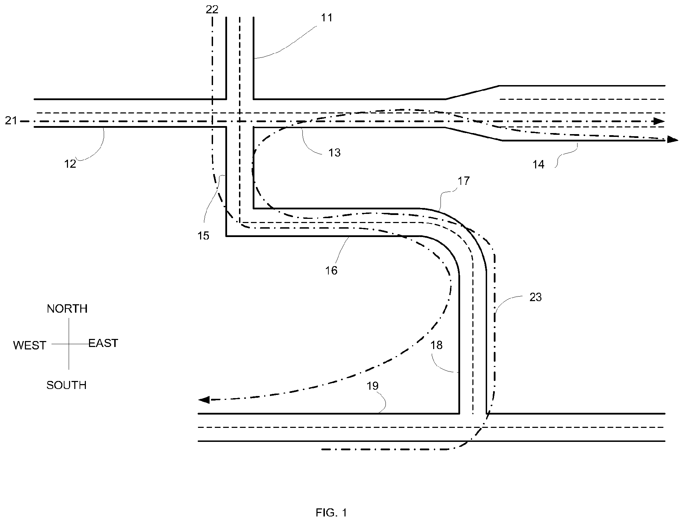

Figure 1 illustrates an example of some road segments that include north-south road segments 11, 15 and 18, east-west road segments 12, 13, 14, 16 and 19, and a curved road segment 17. All road segments except road segment 14 are bi-directional roads that have one lane per direction and road segment 14 has two lanes per direction.

There are three driving sessions, each driving session is represented by location readings such as GPS readings that may or may not be aligned with the road segments.

A first driving session is denoted 21 and passes through road segments 12, 13 and a left lane of road segment 14.

A second driving session is denoted 22 and passes through road segments 11, 15, 16, 17, 18 and 19.

A third driving session is denoted 23 and passes through road segments 19, 18, 17, 16, 15, 13 and a right lane of road segment 14.

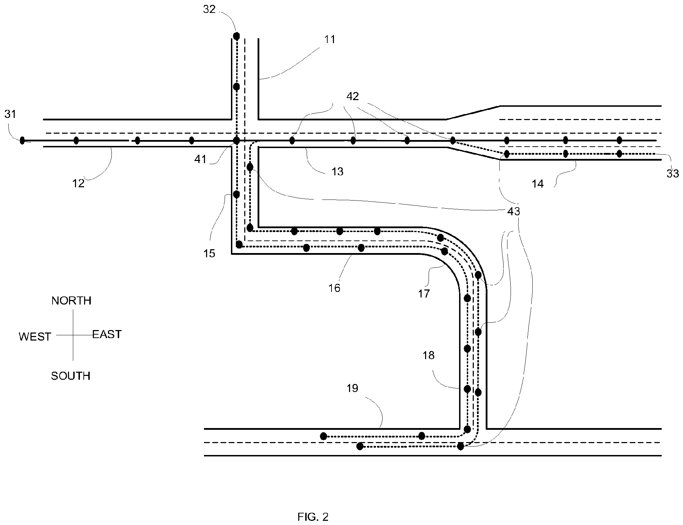

Figure 2 illustrates an example of nodes and edges that represent the sessions.

First session 21 is represented by a first sequence of nodes and edges 31.

Second session 22 is represented by a second sequence of nodes and edges 32.

Third session 23 is represented by a third sequence of nodes and edges 33.

The first, second and third sequences of nodes and edges 31, 32 and 33 respectively share an overlapping node 41 - that represents a junction formed by road segments 11, 13 11 and 15.

The height of overlapping node 41 should be the same in each one of the first and second sequences of nodes and edges 31 and 32.

The third and second sequences of nodes and edges 33 and 32 share multiple overlapping nodes 42 - that represents an overlap between these sessions.

The height of each one of the overlapping nodes 41 should be the same in each one of the third and second sequences of nodes and edges 33 and 32.

It should be noted that the suggested method may be applicable on other road networks- and is usually used for mapping much larger road networks that may include hundreds, thousands and even more roads, may be nationwide road networks, regional road networks and the like.

Overlapping nodes may become as welding nodes - when the overlapping nodes are subjected to a welding process.

A welding process of a welding point involves equalizing the height estimates of the welding point at different sessions - despite the initial differences in the height estimates (welding errors). The error is then distributed along the different nodes of the graph. The distribution may be any distribution- and especially a distribution that reduces the effect of the welding process with an increment of a distance from the welding point.

The welding operation may take into account many (any number between 10 and 100,000 and even more) of overlapping nodes that are shared between multiple road segments (between multiple sequence of nodes).

The welding process may calculate welding errors (different height measurements associated with the same overlapping nodes) and attempt to distribute the welding errors between nodes while taking into account the propagation process - for example by limiting the distance of propagation of a welding error and/or by ignoring welding errors (before or after propagation) that are smaller than a threshold.

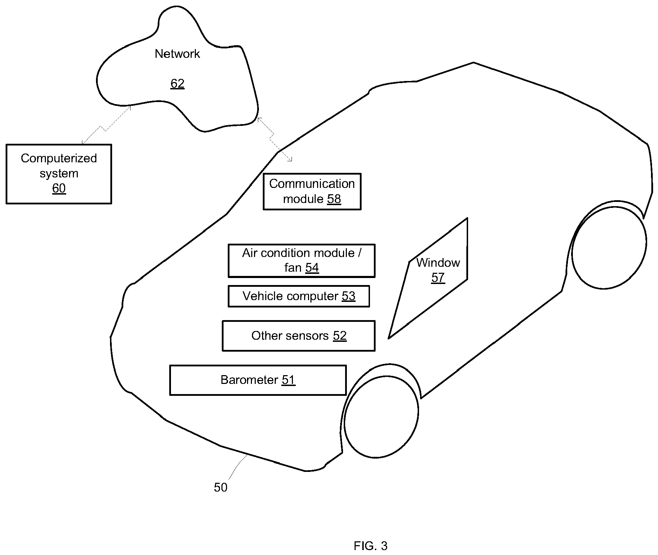

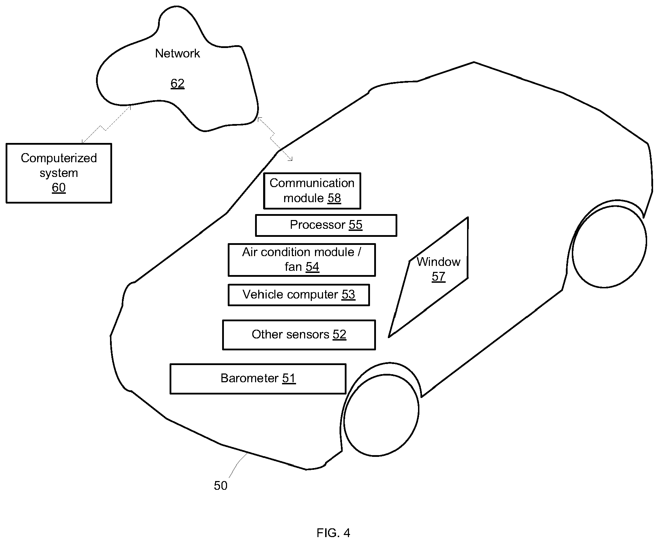

Figure 3 illustrates an example of vehicle 50, a network 62 and a computerized system 60. Figure 4 illustrates another example of vehicle 50, a network 62 and a computerized system 60. Figure 4 differs from figure 3 by further including processor 55.

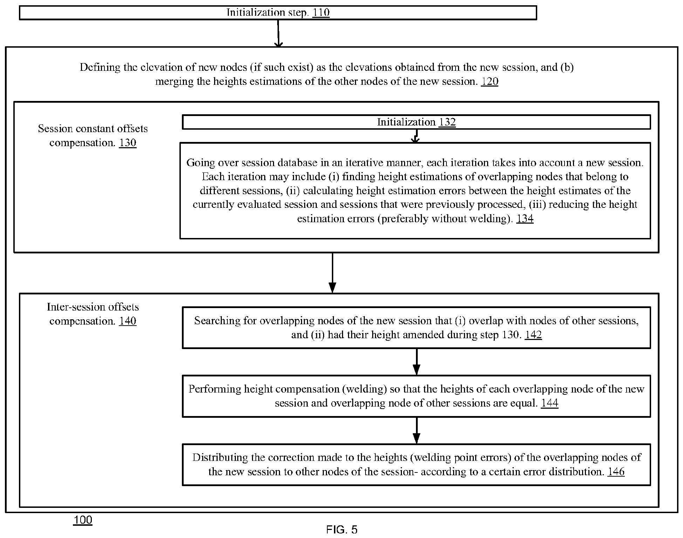

The vehicle 50 may be any type of vehicle. Figure 5 illustrates the vehicle as including a barometer 51, other sensors 52, vehicle computer 53, air condition module / fan 54, window 57, and communication module 58.

The barometer 51 is illustrated as being located at the front of the vehicle 50. The barometer may be located in any location within vehicle 50. There may be more than a single barometer.

The other sensors 52 may sense various parameters related to the vehicle and/or ambient conditions. The other sensors 52 may include at least one out of an accelerometer, a speedometer, a thermometer, a window status sensor, an air condition module/ fan status sensor, an engine sensor (such as fuel consumption sensor) or any other sensor.

The vehicle computer 53 may monitor the status of various components and/or systems of the vehicle, may control various components and/or systems of the vehicle and may or may not participate in the execution of any of the methods illustrated in the specification.

The communication module 58 may communicate with computerized system 60 via network 62.

The communication module 58 may be a short-range communication module, a long-range communication module such as a radio frequency communication module, a satellite communication module, a cellular communication network, and the like.

The vehicle may include multiple windows and for simplicity of explanation only a single window 57 is shown.

Vehicle computer 53 may include a processor and a memory unit. The processor may include hardware components and may be a general-purpose processor, an image processor, a hardware accelerator, an FPGA, an ASIC, and the like. The memory unit may be a non-volatile memory.

The computerized system 60 may be located in a cloud computing environment, may include one or more servers or any combination of computers.

Any step that includes processing, calculating and the like (and is illustrated in the application) may be executed by the vehicle computer 53, by processor 55 and/or by computerized system 60.

Initial error correction process

The initial error correction process that may involve correcting barometer errors that result from barometer affecting events such as the driving itself (for example - acceleration, deceleration), road conditions (for example - bumps, holes), and other barometer affecting events such as opening and/or closing one or more window (or other opening of the vehicle), operating a fan and/or an air condition module, and the like.

It is beneficial to perform the initial error correction process before affecting barometer readings from other vehicles thereby reducing the influence of the barometer errors.

The initial error correction step may include detecting a barometer affecting event by directly or indirectly sensing the barometer affecting events. The sensing may consider only the barometer reading (finding barometer reading patterns that characterize a barometer affecting event - such as a steep change in the barometer reading), but the sensing may also include using readings from other sensors (such as other sensors 52) such as an accelerometer, a speed sensor, a fuel consumption sensor, an air condition and/or fan sensor or control module.

The barometer affecting events may include speed changes. For example, when the vehicle accelerates, the air inside the cabin is pressed backwards. If the barometer is located at the dashboard of the vehicle the acceleration creates an under-pressure in the environment of the barometer, which might be interpreted by mistake as higher altitude (lower pressure reading). On the other hand, when vehicle decelerates, air is moving forward, which creates over-pressure around the barometer - can be interpreted by mistake as a higher altitude (higher pressure reading). The acceleration and deceleration may include linear and non-linear accelerations and decelerations. Non-linear accelerations may result from turns.

The barometer affecting events may include opening a window. When the window is opened, especially when driving at a high speed, this may generate wind gusts inside the vehicle, or under-pressure due to air suction.

The initial error correcting process may include learning the relationship between barometer affecting events and the barometer readings, receiving information about the relationship between barometer affecting events and the barometer readings, dynamically updating the relationship between the barometer affecting events and the barometer readings, and the like.

Air pressure changes occur in a relatively gradual manner. Unless extraordinary conditions exist - the air pressure of the environment should change very gradually are maintain substantially constant over regions that may be hundreds of meters long- and even more. Abrupt changes in the barometer readings can be associated with barometer affecting events. An occurrence of a barometer affecting event may be validated or detected using other vehicle sensors such as accelerometers, vent control unit sensor, temperature sensors that sense a fast change in the temperature of the interior space of the vehicle due to an opening of the window, an acoustic sensor that may sense sounds related to opening the window, operating an air conditioning unit, and the like.

Once a barometer affecting event is detected the barometer readings obtained during the occurrence of the barometer affecting event may be discarded and/or may be corrected by compensating for the errors introduced by the barometer affecting event.

For example - the method may include detecting speed changes that may result in faked slopes in the barometer readings. These fake slopes may be smoothed. The fake slopes may appear in predefined location (for example decelerating before entering a junction - especially an intersected junction - and acceleration after exiting the junction). The location of the junction (especially an intersected junction) may be known in advance - and this may assist in locating the fake slopes associated with the junction.

The location of the junction may be learnt from a map or other database that stores the location of the junction and/or may be learnt from the appearance of fake slopes in the barometer readings of many vehicle that passes through the junction.

The change of pressure and the change of heights per distance are relatively limited or at least may be estimated or known in advance. For example- the slope of a road - especially in non-mountainous area is moderate - and barometer readings that represent an elevation change that exceeds that slope can be discarded or be filtered (for example low pass filtered). Low pass- for example low pass filtering of about 5 Hertz or any other selected frequency.

location process

The location process includes transforming vehicle location data to nodes of a graph that represents a network of roads. The nodes and the graph are merely a non-limiting example of a virtual representation of the network of roads.

The transformation may include, for example, mapping GPS readings to a list of nodes of a graph. The mapping may include finding the best match (or a sub-optimal match) between GPS readings and the nodes. The match may include finding the closest road that may match the GPS readings.

GPS readings are merely a non-limiting example of a vehicle location data. Other sensors and/or location modules (within the vehicle or without the vehicle) may provide the vehicle location data.

The location process continues by associating barometer readings to nodes of the graph - thereby facilitating a height estimation process that considers barometer readings from multiple vehicles and during multiple points in time.

For example - referring to figures 1 and 2 - GPS readings that represent driving sessions 21, 22 and 23 should be mapped to the corresponding road segments and to the corresponding first, second and third sequences of nodes and edges 31, 32 and 33.

The height estimation process may consider barometer readings that were acquired during multiple sessions. A session represents a propagation of the vehicle along a path during a certain period.

The session may have a maximal allowed length, a maximal allowed duration (time) and may be associated with continuous barometer readings. A gap of a predefined number of barometer readings (a predefined number of consecutive nodes in the graph that are without a barometer reading) may be defined as a border between two sessions. The maximal allowable length may be driven from expected changes in the ambient pressure.

After assigning barometer readings to the nodes of the graph then the method may include estimating barometer readings of nodes that are not associated with barometer readings. The estimation may involve extrapolation or any other estimation method.

The initial error correction process may be executed after mapping barometer readings of a session to nodes of the graphs and/or before the mapping.

The barometer readings associated with the different nodes may be converted to height estimations of the nodes.

After assigning barometer readings and/or height estimations to nodes of a session the height estimation process may perform a multi-session height estimation process that considers barometer readings that were obtained during other sessions.

The multi-session height estimation process may be an iterative process during which barometer readings from a new session are merged with barometer readings taken from other sessions.

The multi-session height estimation process may compensate for (a) session constant offsets - elevation shift (elevation error) of an entire path, due to change in the ambient pressure, and (b) inter session offsets - changes of the ambient pressure along the session, due to change in time, or defining a too long session.

Figure 5 illustrates method 100 according to an example not covered by the claims.

Method 100 is a height estimation process.

Method 100 may start by an initialization step 110.

Step 110 may include determining the relationships between the nodes of the new session and the nodes of the previous sessions.

New nodes are nodes of the new session that were not included in the previous sessions.

Step 110 is followed by step 120 of (a) defining the elevation of new nodes (if such exist) as the elevations obtained from the new session, and (b) merging the heights estimations of the other nodes of the new session.

For example- if previous sessions include first and second sessions 21 and 22 then when evaluating the third session 23 step 120 will find overlapping nodes 42, overlapping node 41 and multiple new nodes 43.

The merging may include compensating for session constant offsets and for inter-session offsets.

The following example of step 120 may be explained using the following annotations and Acronyms:

AC offset - inter-session offsets.
AOA - AC Offset algorithm (also referred to inter-session offset algorithm)
DC offset - session constant offsets.
MDB - Map Database, holding the result of the Learn and Merge process: elevation per node
DOA - DC Offset Algorithm (also referred to session constant offset algorithm)
SDB - the session database, holding the data for each session as a result of the Learn stage.
N - number of sessions in SDB
q - iteration # in DOA, q=1,2,...,N
$OLN_{i,q}$ - Overlapping nodes - during iteration #q, the group of overlapping nodes $\{N_j\}$ between session $S_i$ and the reset of sessions $S_1, S_2,... S_q$, excluding $S_i$
$OLN_i$ - Overlapping Nodes - the group of overlapping nodes $\{N_j\}$ between session $S_i$ and the reset of sessions in SDB
$M_{i,q}$ - number of nodes in $OLN_{i,q.}$ so that j=1,2,... ,$M_{i,q}$
$M_i$ - number of nodes in $OLN_i$
$C_{Nj}$ - $N_j$ Counter - the number of different sessions, from Server init, that include node Nj
TCi - Total Ci - total counts of all nodes in OLNi
$M_{Sk}$ - total number of nodes in session $S_k$
$P(N_j, S_k)$ - [P] - original pressure height at node $N_j$, as recorded at session $S_k$, k=1,2,...,N, j=1,2,...,$M_{Sk}$
$DCOFF(S_k)$ - [P] - current known DC-offset of session $S_k$, k=1,2,...,N, to be added to $P(N_j, S_k)$, j=1,2,...,$M_{Sk}$
$OLS_{q,j}$ - OverLapping Sessions per Node - sub-group of $\{S_1, S_2, ..., S_q\}$ holding node $N_j$
$OLSe_{q,j}$ - OverLapping Sessions Excluding - sub-group of $\{S_1, S_2, ..., S_q\}$ holding node $N_j$, excluding $S_q$ itself
OLSi - OverLapping Sessions per Session - sub-group of $\{S_1, S_2, ..., S_q\}$ holding at list one Nodes $N_m$ that is included also in Si
$M_{qj}$ - size of sub-group $OLS_{q,j}$
$Me_{qj}$ - size of sub-group $OLSe_{q,j}$
$dOF(OLSe_{q,j})$ - [P] - new incremental DC-offset to add to each session at $OLSe_{qj}$
$P_m(OLS_{q,j})$ - [P] - mean of DC-compensated pressure height at node $N_j$: $P(N_j, S_k)+DCOFF(S_k)$, for each $S_k$ in $OLS_{q,j}$
$P_{Nj}$ - Pressure assigned to node $N_j$, following Learn and Merge of $S_1, S_2,... ,S_{N-1}$
$E_{min}$ - [P] - min change (threshold) in $P_m$, that requires propagated update of the sessions' DCOFF.
$ACOFF(S_k,N_j)$ - [P] - calculated additional offset to $DCOFF(S_k)$ for specific node $N_j$ in $S_k$
MS - Modified Sessions - list of all session IDs that their DCOFF was updated during DOA.
MN - Modified Nodes - list of all Node IDs $N_j$ that their $P_{Nj}$ was updated during DOA.

Session constant offsets compensation

This process is aimed to overcome fixed changes (in time and space) of the ambient pressure. This process may go over all new sessions in SDB after learn stage, and tries to find how to best correlate them to each other in order to generate a 3D frame of map.

Given - SDB holding N sessions with data after Learn stage

Target - find DCOFF($S_k$), k=1, 2,...,N - the delta that needs to be added to each of the sessions elevations, so that it will best fit each other

Step 120 may include step 130 of a session constant offsets compensation.

Step 130 may include an initialization step 132 of setting parameters:

DCOFF($S_k$) = 0, k=1,2,...,N

$$E_{min} = 2[P] = \sim 20[cm]$$

Agg_cntr = 0.

Step 132 may be followed by step 134 of going over SDB in an iterative manner, each iteration takes into account a new session. Each iteration may include:

    a. Finding height estimations of overlapping nodes that belong to different sessions.

    b. Calculating height estimation errors between the height estimates of the currently evaluated session and sessions that were previously processed.

    c. Trying to reduce an attribute that is related to the height estimation errors- preferably without welding. This may include, for example, reducing the overall height error.

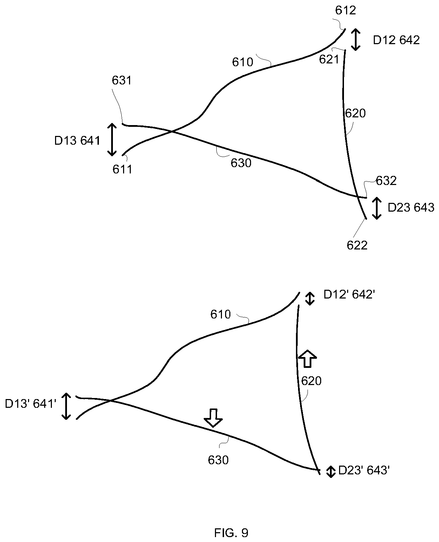

Figure 9 illustrates three sessions 610, 620 and 620 that have different height estimates. There are three pairs of overlapping nodes:

    a. A first pair that includes node 611 of session 610 and node 631 of session 630.

    b. A second pair that includes node 612 of session 610 and node 621 of session 620.

    c. A third pair that includes node 622 of session 620 and node 632 of session 630.

Each pair of overlapping nodes refer to the same location and each pair is associated with height estimation error - the difference between the height estimates related to the pair of nodes - D13 641 of the first pair, D12 642 of the second pair, and D23 643 of the third pair.

Step 134 may include reducing the overall height errors - for example- reducing the sum of the height errors, reducing a weighted sum of the height errors, reducing a sum of squares of height errors, and the like.

It may be assumed that all the sessions are new sessions or at least one session may be a new session.

The bottom part of figure 9 illustrates the three sessions after the height error compensation process of step 134 - session 630 was lowered (height estimates of nodes related to the session were lowered) and session 620 was elevated (height estimates of nodes related to the session were increased).

The updated height errors D13' 641', D12' 642', and D23' 643' are smaller than height errors D13 641, D12 642 and D23 643.

Step 134 may include iterating for each $S_q$ in SDB, q=1,2,...,N.

Step 134 may include:

Inserting $S_q$ into Queue

For each new session, finding its best DCOFF, and propagate changes in frame -

    1. While Queue not empty

    2. $S_i$ = session from top of Queue

    3. Find $OLN_{iq}$

    4. For each $N_j$ in $OLN_{iq}$ Calculate mean P of $N_j$, prior to adding (i.e. excluding) $S_i$: $P_m(OLSe_{i,j}) = (1/Me_{i,J})*sigma(k=1, k<=Me_{i,j})[P(N_j, S_k)+DCOFF(S_k)]$

    5. Calculate offset for the new session Si, so that deviation of its overlapping nodes $N_j$ from their $P_m$ will be evenly distributed (or distributed in another predefined manner):

$$Delta\_DCOFF(S_i) = (1/M_i)*sigma(k=1,k<=M_i)[P_m(OLS_{i-1,j})-P(N_j,S_i)]$$

6. If Delta DCOFF(Si) > $E_{min}$

    a. DCOFF($S_i$) += Delta DCOFF(Si)
    b. Propagation: Calculate the small offset to propagate into the map: for each $N_j$ in OLNi

        i. Calculate dOF($OLS_{i,j}$) = Pm($OLS_{i,j}$) - Pm($OLS_{i-1,j}$).
        ii. For each $S_q$ in {$OLS_{i,j}$} excluding Si update:

            1. Agg_DCOFF($S_q$) += dOF($OLS_{i,j}$)
            2. Agg_cntr++

    c. If ABS(Agg_DCOFF($S_q$)/ Agg_cntr) > $E_{min}$ // in case of substantial change

        i. DCOFF($S_q$) += Agg DCOFF($S_q$)/ Agg_cntr
        ii. Insert $S_q$ into end of Queue

End:
Update DC-Offsets: Insert DCOFF($S_i$) into SDB, for all session Si, i=1,2,..,N

In step 130 all nodes of a session may be elevated or lowered in the same manner.

Step 120 may also include step 140. Step 140 may include inter-session offsets compensation.

Step 140 may include compensating for local-by-nature changes in the ambient pressure, such as:
Selecting a session that is too long in the sense that is covers places with different ambient pressures.

Selecting a session that has a long duration - during which the ambient pressure has changed.

Step 140 may include (a) searching (142) for overlapping nodes of the new session that (i) overlap with nodes of other sessions, and (ii) had their height amended during step 120 of session constant offsets compensation; (b) performing (144) height compensation so that the heights of each overlapping node of the new session and overlapping node of other sessions are equal, and (c) distributing (146) the correction made to the heights of the overlapping nodes of the new session to other nodes of the session- according to a certain error distribution.

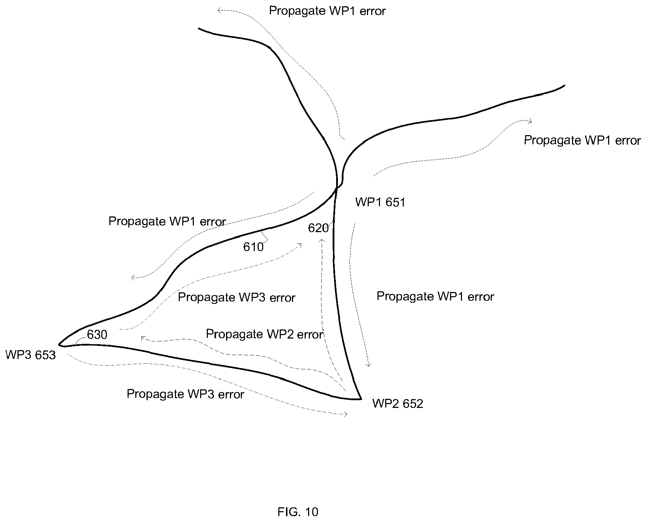

Figure 10 illustrates the three sessions after the three overlapping nodes were welded (height equalized) to provide three welding points. The welding may include adopting the height of one of the overlapping nodes (after the session constant compensations), or calculating a new weight of the welding point based on the height of at least one updated overlapping node.

Non-limiting assumptions:

    a. Ambient pressure changes are graduate, therefore the AC-offset should be graduate.
    b. A predefined behavior of ambient pressure may be assumed- for example - a unified distribution of the ambient pressure change
    c. Ambient pressure at each node changes in time is unified distributed. So, looking at the values histogram per node we will get Gaussian-like structure

Target - given $S_q$, q=1,2,...,N, sessions in SDB, with their DCOFF($S_q$) updated using DOA (DC offset algorithm),

Find ACOFF($S_q$,$N_j$) for each node in $S_q$, so that:

    a. All overlapping nodes in SDB have same height after applying DCOFF($S_q$) + ACOFF($S_q$,$N_i$)
    b. "noise" is distributed according to a predefined distribution - for example an even distribution along sessions.

Output - update elevation for each node in MDB

Step 140 may include

Init - Insert into SQueue, all sessions $S_q$, that their DCOFF($S_q$) has changed // stage#1 "Welding": calculate height of OLN in MDB, and collect updated nodes in NQueue for each $S_i$ in SQueue:

- For each $N_j$ in $OLN_i$ and not in NQueue

    Calculate $P_m(N_j)$ = (1/$M_i$)*sigma(k=1, k<=$M_i$)[P($N_j$,$S_k$) + DCOFF($S_k$)]
    Update $P_m(N_j)$ in MDB, as the elevation for $N_j$

Insert $N_j$ into NQueue
// stage#2 "Smoothing": fine tune nodes height adjacent to "welded" nodes from stage# 1
while NQueue not empty:

```
Take N_j from top of NQueue
For each S_k in OLS_ij
Find an adjacent OLN on S_k, closest to N_j. Denoted by: {N_A^jk}
For each N_a in {N_A^jk}
Calculate ACOFF_1 = P(S_k,N_a) + DCOFF(S_k) - P_m(N_a)
Calculate ACOFF_2 = P(S_k,N_j) + DCOFF(S_k) - P_m(N_j)
Go over all nodes N_z on S_k, located between N_a and N_j, and refine their elevation P(S_k, N_z) to be linearly
distributed (or according to another predefined distribution) between ACOFF_1 and ACOFF_2
Update elevation of N_z in MDB
```

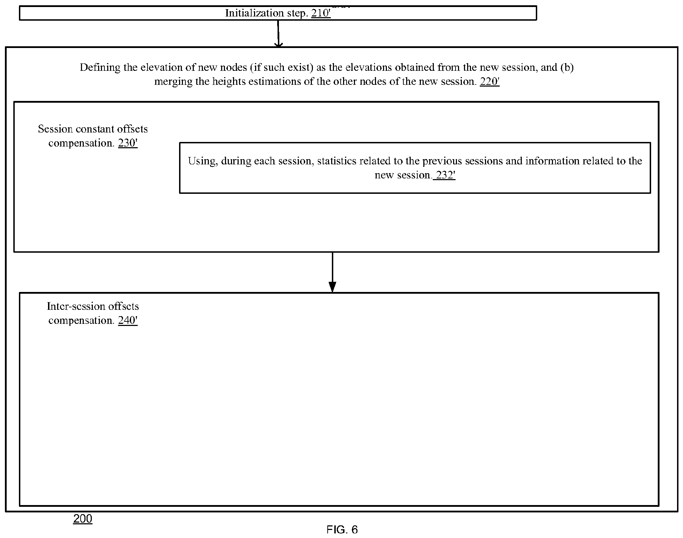

Figure 6 illustrates method 200' according to an example not covered by the claims.

Method 200' is a height estimation process.

Method 200' is more efficient than method 100 as it does not recalculate the heights or height correction parameters for each node of the previous sessions.

Method 200' may rely on one or more databases or fields that were not used by method 100- including but not limited to - the following MDB fields:

MW_NODES - new field P_COUNT integer - holds $C_{Nj}$, total number of times we got pressure value for Node $N_j$ - init to 0.

MW_NODES - replace field ELEVATION with field PRESSURE - holds $P_{Nj}$ - average pressure height (instead of elevation), init to NotAvailable.

SQL formula/view: convert PRESSURE to ELEVATION using the standard formula, where ambient pressure = 101300[Pascal] (standard pressure)

Method 200' may include an elevation learn modification - for defining pressure pre-processing noise-reduction algorithm, as part of elevation learn stage, to run prior to the merging of data related to a new session and previous sessions.

Instead of reading the pressures related to all previous sessions and generating weighted average between new session and old sessions - method 200' stores a last average $P_{Nj}$ and its counter $C_{Nj}$. Nj is the j'th overlapping node. Cnj - number of sessions that are associated with the overlapping node.

In method 100 the DOA may be performed over all sessions from scratch and this is followed by performing AOA to get the elevation at Node N. Method 200', on the other hand, may be more incremental in nature: given new session Si, the method uses statistics about the previous sessions - such as $P_{Nj}$ from MW_NODES instead of $P(N_j, S_q)$ + $DCOFF(S_q)$. This way we take into the account the AOA results as well.

In method 200' the welding stage (weighted average of $P_{Nj}$) is done now in DOA and not in AOA

Method 200' may include calculating Delta_DCOFF(Si) - need to weight according to the different $C_{Nj}$ of each $N_j$, where $N_j$ are the overlapping nodes in Si.

Method 200' may include using a new list called Modified Sessions (MS) that holds the IDs of the sessions that their DCOFF was updated during DOA stage. This will be used in the AOA stage.

Method 200' may include adding a new list called Modified Nodes (MN) that holds the IDs of the Nodes that their $P_{Nj}$ was updated during DOA stage. This will be used in the AOA stage.

Method 200' may include an initialization step 210' that may be followed by step 220' of Defining the elevation of new nodes (if such exist) as the elevations obtained from the new session, and (b) merging the heights estimations of the other nodes of the new session.

Step 220' may include step 240' of a session constant offsets compensation.

Step 240' may include using (232'), during each session, statistics related to the previous sessions and information related to the new session. Especially - step 240' may include calculating offset updates for a new session Si, so that deviation of its overlapping nodes $N_j$ from their $P_{Nj}$, weighted by their $C_{Nj}$, will be evenly distributed (or distributed in another manner).

Assumed status:

SDB holding N-1 sessions with data after Elevation Learn and Elevation Merge stages (both DOA and AOA)

$P_{Nj}$ and $C_{Nj}$ values, per each Node $N_j$ we have visited before, are updated in MDB

Session $S_N$ has passed Elevation Learn stage (noise reduction and pressure to nodes)

Given - New Session $S_N$ after Elevation Learn stage

Target

Update DCOFF($S_k$), k=1, 2,...,N - the DC offset that needs to be added to each of the previous sessions elevations, so that it will best fit the each other

Update $P_{Nj}$ and $C_{Nj}$ for each effected Node $N_j$ - "welding"

Step 240' may include:

Init:

Set default DCOFF for the new session - DCOFF(Srr) = 0

Set propagation threshold: $E_{min}$ = 2[Pascal] = ~17[cm]

Start with empty Modified Session and Modified Nodes list: NM and MS = {}

Start with processing the new session:

Insert $S_N$ into Queue

Process all modified sessions, until nothing to propagate

While Queue not empty

Get the next session to process: Si = top of Queue

Indicate for AOA that Si was modified - Add Si to MS list

Find the group of nodes {$N_j$} that exist in Si and in some other Session in SDB - Get OLNi Assign - Mi = sizeof(OLNi)

Retrieve last set Pressure and Counters from MDB:

For each $N_j$ in $OLN_{Si}$ - Get $P_{Nj}$ and $C_{Nj}$ from MW_NODES

Calculate total count of Nodes in OLNi TCi = sigma(j = 1, j <= $M_i$)[$C_{Nj}$]

Calculate offset update for session Si, so that deviation of its overlapping nodes $N_j$ from their $P_{Nj}$, weighted by their $C_{Nj}$, will be evenly distributed:

$$\text{Delta\_DCOFF}(S_i) =$$

$$= (1 / TC_i) * \text{sigma}(j = 1, j <= M_i)[C_{Nj} * (P_{Nj} - (P(N_j, S_i) + DCOFF(S_i)))]$$

$$= (1 / TC_i) * \text{sigma}(j = 1, j <= M_i)[C_{Nj} * (P_{Nj} - P(N_j, S_i))] - DCOFF(S_i)$$

Check if change is substantial - if Delta DCOFF(Si) > $E_{min}$

update offset of current processed session DCOFF($S_i$) += Delta DCOFF(Si)

update MDB pressures for Nodes in OLNi - weighted average with the new value of Si - "welding" - for each $N_j$ in OLNsi

$$P_{Nj} = (P(N_j, S_i) + DCOFF(S_i) + C_{Nj} * P_{Nj}) / (1 + C_{Nj})$$

Add Node ID to Modified Nodes list - Add $N_j$ to MN list

Find the sessions that might be affected due to $P_{Nj}$ change - Get OLSi

Propagation - Go over the Sessions with potential to change:

For each $S_k$ in $OLS_i$:

Find the group of nodes {$N_j$}, common to $S_k$ and Si-Get $OLN_{Sk,Si}$

Assign: $M_{k,i}$ = sizeof($OLN_{Sk,Si}$)

Calculate total count of the group $OLN_{Sk,Si}$-- $TC_{k,i}$ = sigma(j = 1, j <= $M_{k,i}$)[$C_{Nj}$]

Calculate the combined offset change for $S_k$:

$$\text{Delta\_DCOFF}(S_k) =$$

$$= (1 / TC_{k,i}) * \text{sigma}(j = 1, j <= M_{k,i})[C_{Nj} * (P_{Nj} - (P(N_j, S_k) + DCOFF(S_k)))] = (1 / TC_{k,i}) *$$

$$\text{sigma}(j = 1, j <= M_{k,i})[C_{Nj} * (P_{Nj} - P(N_j, S_k))] - DCOFF(S_k)$$

Check if this is a substantial change to DCOFF($S_k$):

If (ABS (Delta _DCOFF($S_k$)) > $E_{min}$) Update the DCOFF:
DCOFF($S_k$) += Delta DCOFF($S_k$)
Add Sk to queue to check for furthur propagation - Insert $S_k$ into end of Queue End:

Make sure SDB and MDB are updated according to the above changes

Send MS and MN to next stage - AOA

Step 240' may also include step 240. Step 240 may include inter-session offsets compensation.

AC Offset Algorithm

The AC Offset Algorithm (AOA) deals with local noise and environment air pressure shift over time and space that might have distorted or skewed the signal we use to learn elevations (air pressure). The Idea is that after the DOA has done its job, the pressures of the sessions that overlap, should be leveled, and any misses should be a result of the above reasons (local noise and skew over time and space).

Noise is reduced or cancelled by applying a heuristic approach that approach the problem under the assumption that there cannot be a "singular" point in the road network - meaning it's impossible that a single node (or multiple nodes) will have a very big slope with regards to its neighbors (meaning its elevation is significantly different than its neighbors').

The heuristic examines "welding points" (i.e: nodes that are shared across different sessions, and therefore have an averaged pressure value), and tries to maintain the shape the road had before welding. Let's look at an example to understand this approach:

Notation
$S_i$ - Session $i$
$N_j$ - Node $j$
$P_{Nj}$ - The final pressure of node $N_j$
$\overline{P_{NJ}}$ - The average pressure of node $N_j$ after DOA (for non-welding points it's their original pressure + DC offset).
$P_{Nj, Sk}$ - The pressure of node $N_j$ on session $S_k$ (ignoring DC offset)
$\Delta_{jk}$ - The change in pressure difference between node J and node K (effectively - the slope change between the nodes)
$\Delta_{Jk}$ - The average pressure difference between nodes $N_j$ and $N_k$ across all sessions both appear in.
$E_{jk}$ - The directed edge from node $N_j$ to node $N_k$
$|E_{jk}|$ - The accumulated cost traversing to node $N_k$ through the edge $E_{jk}$
$d_{Nj, Nk}$ - The driving distance from $N_j$ to $N_k$
$D_{err}$- The error factor (defines how far a welding error should be spread, default: $\frac{1m}{1km}$ )

Input

{Welding Points} - A set of the node ids of the welding points created by the DOA.
{Nodes} - a hash mapping the Node data to its Id.
Graph - A graph containing all welding points with a "sufficient" radius around them - each vertex in the graph represent a node in the road network, and each edge represents a road segment, with its length ($d_{jk}$) and average pressure difference ($\Delta_{jk}$). The graph may be built assuming that a maximal height error is associated with a welding point (under maximal difference in weather conditions), and the minimal error that will be propagated.
Allowed_Error - The error we allow each node to absorb from a single welding point (given as percentage)Output
{Dirty Nodes} - A set of all nodes that have been updated by the algorithm
Data Structures
Graph - Given as an input, the graph facilitates the traversal over the road network from each Welding Point. Note that the graph stores both $d_{jk}$ and $\overline{\Delta_{jk}}$ on each edge $E_{jk}$.
{Traversal Front} - a DS used to store the current traversal points ("wave front")

Description

For each node $N_j$ in {Welding Points}:

If $\overline{P'_{N_J}} \neq \overline{P_{N_J}}$

For each node $N_k$, neighbor of $N_j$

Add $E_{jk}$ to the {*Traversal Front*} $|E_{jk}| = d_{Nj,Nk}$

Initialize $N_j$'s pressure to be the average pressure: $P_{Nj} = \overline{P_{NJ}}$

While {*Traversal Front*} isn't empty:

Pop edge $E_{jk}$ from the {*Traversal Front*} queue, where $|E_{jk}|$ is minimal (the edge with the lowest cost). *Denote $E_{jk}$'s source node as $N_j$ and target node as $N_k$.*

If $E_{kj} \varepsilon$ {*Traversal Front*} (Check If the current front collides with another)

Calculate the allowed error - $\varepsilon = D_{err} \times d_{Nk,Ni}$

Calculate the slope change between the nodes:

$$\Delta_{jk} = \left( P_{N_j} - P_{N_k} \right) - \overline{\Delta_{jk}}$$

If $\Delta_{jk} < \varepsilon$

Remove both $E_{kj}$ and $E_{jk}$ from the {*Traversal Front*}

For each node $N_i$ neighbor of node $N_j$ If $i \neq k$

Remove $E_{ji}$ from {*Traversal Front*} if it exists.

Add $E_{ji}$ to {*Traversal Front*} with an updated cost.

For each node $N_i$ neighbor of node $N_k$ If $i \neq j$

Remove $E_{ki}$ from {*Traversal Front*} if it exists

Add $E_{ki}$ to {*Traversal Front*} with an updated cost.

Continue to next iteration of the *while* loop.

If $\Delta_{jk} < 0$

$$\Delta_{jk} = \Delta_{jk} + \varepsilon$$

Else $\Delta_{jk} = \Delta_{jk} - \varepsilon$

Update both nodes' pressures:

$$P_{N_j} = P_{N_j} - \frac{\Delta_{jk}}{2}$$

$$P_{N_k} = P_{N_k} + \frac{\Delta_{jk}}{2}$$

Add $N_j$ and $N_k$ to {*Dirty Nodes*}.

Remove both $E_{kj}$ and $E_{jk}$ from the {*Traversal Front*}.

For each neighbor ($N_i$) of $N_k$, except for $N_j$ Add $E_{ki}$ to the {*Traversal Front*} with the cost of: $|E_{jk}|$ I + $d_{Nk,Ni}$

For each neighbor ($N_i$) *of $N_j$*, except for $N_k$ Add $E_{ji}$ to the {*Traversal Front*} with the cost of:

$$\left| E_{jk} \right| + d_{N_j,N_i}$$

ELSE (If $E_{kj}$ *does not belong to* {*Traversal Front*}:

For each neighbor ($N_i$) of $N_k$, except for $N_k$'s parent ($N_j$) and if the cost of the edge ($N_k$, $N_i$) is smaller than the max

Find the error we allow to pass to node $N_i$, so that the error added to the segment $(N_j, N_i)$ will not be greater than the allowed error $\varepsilon = D_{err} \times d_{Nk,Ni}$

Calculate the target pressure to which we want to "Pull" $N_i$ towards $N_k$:

If $P_{Ni}$ is not initialized $P_{N_i} = \overline{P_{N_i}}$

$$\Delta_{ki} = \left(P_{N_k} - P_{N_i}\right) - \overline{\Delta_{ki}}$$

If $\Delta_{ki} < \varepsilon$ (check if the node has a smaller error as it is):

Continue to next iteration of the *while* loop.
Else - update $N_i$'s pressure:
If $P_{Ni} < P_{Nk}$

$$P_{N_i} = P_{N_i} + \Delta_{ki} - \varepsilon$$

Else

$$P_{N_i} = P_{N_i} + \Delta_{ki} + \varepsilon$$

For each neighbor ($N_l$) of $N_i$, except for $N_k$:

Add $E_{il}$ to the *{Traversal Front}* with the cost of: $|E_{ki}| + d_{Ni,Nl}$
Add $N_i$ to *{Dirty Nodes}*.
Return *{Dirty Nodes}*

*Database*

Fetching data for the AOA

In order to run the AOA we need to build 3 data structures in advance:

The *{Welding Points}* set, read from the mw_elevation_weldings table
The *Nodes* map, consist of data read from the mw_elevation_weldings and mw_nodes tables.
The *Grpah* - created by a special snake query, which reads its data from the mw_topology table (edges and distances), and from the mw_slopes table (average pressure difference between nodes).

Persisting the data

Update mw_nodes:
For each node $N_j$ in *{Dirty Nodes}*
Update pressure & avg_pressure columns
If $N_j \in$ *{Welding Points}*
Also update the following columns:
std_deviation

a. merge_count

Elevation layer welding

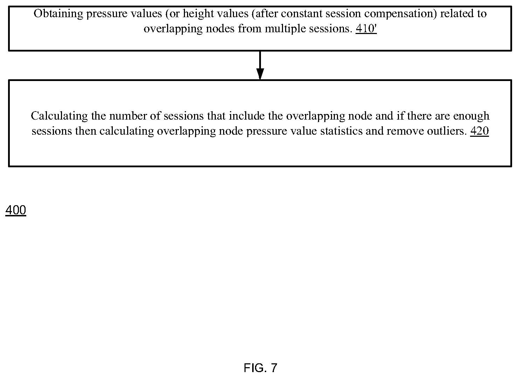

Figure 7 illustrates method 400'. Method 400' includes elevation layer welding. Method 400' may replace either one of method 100 and 200' and/or be included in either one of method 100 and 200' .

Method 400' may include step 410' and step 420'.

Step 410' includes calculating pressure values related to a overlapping node

In this step, all of the post-DOA pressures are calculated (i.e - the pressures of all nodes touched by sessions that moved in the DC stage). Note that this step can be easily parallelized.

Input

Nodes to sessions map - mapping of each node $N_j \in \{OLN\}$ to the set of sessions that pass through it- for example:

N, - {S$_l$, S$_m$...S$_n$}
N$_{j+1}$ - {S$_x$, S$_y$...S$_z$}
Updated Sessions - every session that has moved in the DOA

Outliers cutoff width ($C_{max}$ )

Output

Hash: { node_id => node }

Step 420' may include calculating the number of sessions that include the overlapping node and if there are enough sessions then calculating overlapping node pressure value statistics and remove outliers. Creating an empty node hash: {*Dirty Nodes*}
For each node $N_j$ in {*Updated Sessions*}'s nodes:

If $N_j \notin$ {*Dirty Nodes*}
Calculate number of sessions passing through the node (*merge_count*)
Calculate $\overline{P_{NJ}}$ - the average pressure at node $N_j$ across all of the sessions passing through it.
Calculate $\sigma_{Nj}$ - the standard deviation of node $N_j$'s elevation.
If *merge_count > min_count*
Remove outliers (those that are not within $C_{max}$ times $\sigma$)
Find the new session count for the node (without outliers)
Recalculate $\overline{P_{NJ}}$
Add $N_j$ to {*Dirty Nodes*}

Step 420' includes persist consolidation results.
Welding points should be saved so that the AOA will be able to read them once executed.

Input:

{*Dirty Nodes*} - a mapping between node ids to Node objects, containing the nodes that changed.

Process:

For each node $N_j \in$ {*Dirty Nodes*}
Save (upsert) the following information about $N_j$ to the mw _elevation_weldings table:

Welding information:

Welding pressure
Welding standard deviation
Welding count
Welding point: true (if $N_j$ is a welding point)

General information:

Average pressure
Standard deviation (including outliers)

1. Count (including outliers)

Elevation Validation

One or more of the mentioned above methods was validated by comparing the outcome of one or more algorithm to detailed elevation information obtained from measurements done along specific routes, in variable pitch, using survey vehicles.

Definitions and Assumptions

Filter:

Compare slope to slope at the Nodes defined by MW Server
Use LPF to generate slopes out of the input elevations
Linear Extrapolation of a window of size 60[m] around the Node location, one for the MW elevation values of the neighboring nodes, and second for the accurate elevation measurements - this yields the two slopes to compare slope

Assumptions:

The error is defined as the difference between the original slope percentage and the MW measured slope percentage at the same point. So, the error units are [%]
The distribution of the errors is Gaussian - when Merging large amount of sessions in the same location

Measured errors:

a. Standard Deviation (Sigma-1) - the slope error value [%] that 70% of the results are better than it
b. Sigma-2 - the slope error value [%] that 95% of the results are better than it

In order to demonstrate the data convergence, we measure the above for the following sets:

a. Single session (randomly selected) along the path
b. 4 Sessions (randomly selected) along the path
c. 10 Sessions (randomly selected) along the path
d. We assume that 10 sessions' result is close enough to big data number

**[0212]** In order to demonstrate the noise canceling/reduction, we measure the above:

a. Before noise canceling / reduction
b. After noise canceling / reduction

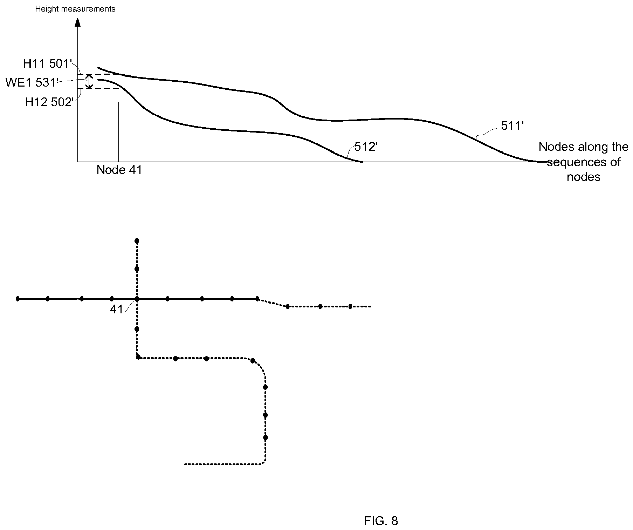

Figure 8 illustrates height measurements relating to two sequences of road segments, and a welding error.
Overlapping node 41 is shared by a sequence of road segments 11, 15, 16, 17 and 18 and to a sequence of road segments 12, 13 and 14.
Curve 511' illustrates height measurements obtained for sequence of road segments 11, 15, 16, 17 and 18.
Curve 512' illustrates height measurements obtained for sequence of road segments 12, 13 and 14.
The height of overlapping node 41 in curve 511' is denoted H11 501'.
The height of overlapping node 41 in curve 512' is denoted H12 502'.
There is a welding error WE 531' between the height of overlapping node 41 in curves 511' and 512' - and thus the height of the overlapping node 402 in both curves should be modified -thereby amending the entire height measurements of both curves 511' and 512'. The welding error is propagated among various nodes- thereby the curves 511' and 512' are not just moved upwards and/or downwards - their shape may also be amended- depending on the propagation of the welding error- whether the welding error is applied to nodes as a function of the distance between the overlapping node that generated the welding error and the updated node.

Figure 9 illustrates method 700 according to an example not covered by the claims.

Method 700 may start by step 710 of receiving or measuring inner vehicle pressure to provide multiple barometer measurements. The measuring is executed by a barometer of the vehicle and during a given driving session while the vehicle passes over road segments.

Step 710 may be followed by step 720 of compensating, by a computer, for barometer affecting vehicle conditions to provide multiple compensated barometer measurements.

Step 720 may include at least one of the following:

a. Performing the compensating for the barometer affecting vehicle conditions based on information provided by the barometer and by at least one other vehicle sensor that differs from the barometer. The at least one other vehicle sensor may or may not be an accelerometer.

b. Performing low pass filtering the barometer measurements.

c. Determining to ignore at least some of the barometer measurements.

d. Determining to ignore at least some of the barometer measurements.

e. Determining to ignore at least some of the barometer measurements when a slope of a road portion that stretches between two points, as reflected by barometer measurements related to the two points, exceeds a maximal slope threshold.

f. Calculating an effect of a barometer affecting event on a value of at least one barometer measurement.

g. Performing the compensating in response to an acceleration and/or acceleration of a vehicle when the barometer measurements were taken.

It has been found that ignoring barometer measurements that are suspected as being highly noisy and/or strongly affected by barometer affected events and/or otherwise indicative of unreasonable slopes (slopes that are in contrary of slopes of roads - for example slopes that are near ninety degrees, about seventy degrees, and the like) - the accuracy of the height estimates is dramatically increased. The rejection of barometer measurements that are related to a road segments may be compensated by waiting to receive other barometer measurements related to the same road segments - at another point in time and/or from another vehicle, and the like. Performing method 700 over multiple barometer measurements taken over hours, days, weeks and the like will fill the missing data

Step 720 may be followed by step 730 of compensating, by a computer, for barometer affecting vehicle conditions to provide multiple compensated barometer measurements.

Step 730 may include at least one out of:

a. Searching for overlapping nodes, wherein each overlapping node corresponds to a same location and belongs to multiple sessions.

b. Performing a welding process for substantially equalizing height estimates of different sessions that are related to a same overlapping node.

c. Changing height estimates of non-overlapping nodes based on a change of a height estimate of an overlapping node that was introduced during the welding process.

d. Changing of the height estimates of the non-overlapping nodes by distributing height adjustments along a session according to a predefined height adjustment distribution. The predefined height adjustment distribution may be any distribution - even or uneven distributed height adjustment distribution.

e. Performing session constant offset compensation by reducing height differences between overlapping nodes without welding the overlapping nodes.

f. Performing the inter session offset compensation by applying a welding process.

g. Calculating statistics of height estimates associated with an overlapping node; and rejecting one or more height estimates based on the statistics.

The method may include transmitting the multiple compensated barometer measurements to a computerized system that is located outside the vehicle and wherein the merging is executed by the computerized system.

At least a part of the merging is executed by a computer of the vehicle.

Method 700 is highly accurate and uses simple inaccurate barometers that are already installed in vehicles. Method 700 provides an accurate height estimate even when few barometer measurements per road segments were collected.

An accuracy of about one percent (up to one percent height error related to the height of a path segment) was achieved when processing valid (non-rejected) barometer measurements obtained when passing over the path segment three times.

An accuracy of about half a percent was achieved when processing valid (non-rejected) barometer measurements obtained when passing over the path segment seven times.

An accuracy of about 0.3 percent was achieved when processing valid (non-rejected) barometer measurements obtained when passing over the path segment fifteen times.

These accuracies are comparable to height measurement accuracies obtained when using costly dedicate devices such as the RT 3000 of Oxford Technical Solutions Ltd. of the UK.

MEASURING PHYSICAL EVENTS

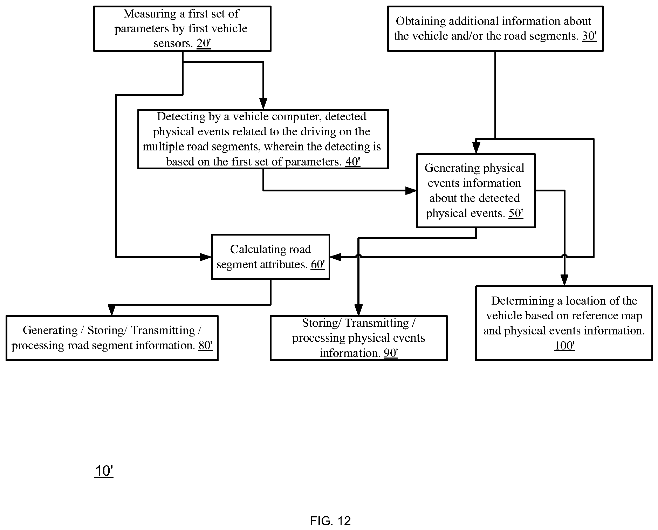

Figure 12 illustrates an example of method 10' for measuring physical events related to multiple road segments.

Method 10' may be executed by various components, systems or units installed in a vehicle.

Method 10' may start by step 20' of measuring a first set of parameters by first vehicle sensors. The measuring occurs while the vehicle is driving on the multiple road segments.

The measuring may be performed in a continuous or non-continuous manner. The measuring may be executed at multiple points of time (thus- at multiple locations) per road segment.

Accordingly - the first set of parameters may be measured for multiple locations per road segment of the multiple road segments.

The measurement may be executed at a rate that may exceed ten and even hundred measurements per second. For example, wheel speed may be detected at any rate - and especially a rate of at least 100 Hertz. Any other rate may be used. A 3-axes accelerometer may be read at any rate - and especially at a rate of at least 100 Hertz. A barometer may be read at any rate - and especially at a rate of at least 20 Hertz .

The first set of parameters may be measured by sensors that are not road image sensors. A road image sensor is an image sensor that is dedicated for acquiring images of road segments. For example - a road image sensor may be a camera that has a main task of acquiring images the area in front of a vehicle.

The multiple road segments are linked to each other in the sense that the vehicle can move from one road segment to the other. The number of the road segments may range between two, and few tens, few hundreds and even few thousands.

The first set of parameters may include vehicle wheel movement parameters and vehicle acceleration parameters.

The vehicle may include multiple wheels. The multiple wheels may include driven wheels, non-driven wheels or a combination of both. In a 2x4 vehicle, two wheels are driven wheels and two wheels are non-driven wheels. In a 4x4 vehicle (when operating in a 4x4 mode) all wheels may be regarded as driven wheels.

The wheel movements parameters may reflect the rotation of all the wheels of the vehicle or at least some of the wheels of the vehicle.

For simplicity of explanation it is assumed that

a. The vehicle includes a front right wheel, a front left wheel, a rear right wheel and a rear right wheel.
b. The vehicle has a rear-wheel-drive configuration - the rear wheels are the driven wheels.
c. The wheel movement parameters of all four wheels are monitored.

These are merely non-limiting assumptions and the method is applicable regardless of these assumptions. For example - the method is applicable for any number of wheels, for any number of monitored wheels, for front-wheel-drive configuration, on a 4x4 vehicle and or any number of wheels and/or driving configuration.

Method 10' may also include step 30' of obtaining additional information about the vehicle and/or the road segments.

The additional information may include location information of the vehicle, and additional vehicle parameters. The location information may include the longitudinal location of the vehicle and the latitude location of the vehicle - the lane and even the location within a lane. The location information may be calculated by using one or more sensors - such as GPS (provides a very rough estimate of the location), image sensors and the like.

The additional information may include the locations of alignment targets. The alignment targets may be used to reset virtual odometer errors. For example- the odometer may be updated based on an integral of a wheel speed. Nevertheless, the wheel may slip, may have an actual effective radius that differs from the expected one- so that the odometer may accumulate distance errors. These distance errors may be reset, and the actual effective radius be determined based on the distance between adjacent alignment targets.

An actual effective radius of the wheel represents the real distance that is passed by a vehicle when the vehicle wheel completes a full turn. The actual effective radius may be affected from the air pressure of the wheel, the weight of the wheel, and the like.

Step 20' may be followed by step 40' of detecting, by a vehicle computer, detected physical events related to the driving on the multiple road segments, wherein the detecting is based on the first set of parameters.

Non-limiting examples of detected physical events may include collision, slip, skid, spin, latitude spin and longitude spin. Each physical event may be represented by a binary value - for example - three bits may represent the type of each event out of collision, slip, skid, spin, latitude spin and longitude spin.

Collision - bumping into an element that is higher than the level ahead of it. Examples: stepping into a bump, stepping out of a pothole.

The collision may be detected by the following:

a. Driven wheel - abrupt momentary speed drop.
b. Non-driven wheel - abrupt momentary speed drop.
c. Accelerometer - X and Z indications, following high pass filter (HPF).
d. Barometer - abrupt height increment.

Slip - stepping into an element that is lower than the level ahead of it. Examples: stepping into a pothole, stepping out of a bump.

The slip may be detected by the following:

a. Driven wheel - abrupt momentary speed increase.
b. Non-driven wheel - slight momentary speed drop.
c. Accelerometer - X and Z indications, following HPF.
d. Barometer - abrupt height decrement.

Skid - loss of tire-surface grip, when entering worse grip at same height. Examples: stepping into an ice / oil spillage / gravel / puddle, where surface height doesn't change.

The slip may be detected by the following:

a. Driven wheel - abrupt (but not momentary) speed increase
b. Non-driven wheel - gradual speed drop. Drop rate increase with axe friction.

Spin - gain of tire-surface grip, when entering better grip at same height. Examples - stepping out of an ice / oil spillage / gravel into a better grip surface, where surface doesn't change height.

The spin may be detected by the following:

a. Driven wheel - abrupt (but not momentary) speed decrease.
b. Non-driven wheel - gradual speed increase. Increase rate goes down with axe friction.

Latitude spin - vehicle Y-Z plane movement, on top of its steady state motion. Examples - stepping into / over a dent (concave or convex) in the road with one wheel

The latitude spin may be detected by the following:

a. Driven wheel - no distinct speed change.
b. Non-driven wheel - no distinct speed change.
c. Accelerometer - distinct motion vector on Y-Z:

The latitude spin is longer in time than collision or slip.

The accelerometer readings related to a latitude spin are of lower magnitude than collision or slip.

Longitude spin - vehicle X-Z plane movement, on top of its steady state motion. Examples - stepping into / over a dent (concave or convex) in the road with two wheels

The latitude spin may be detected by the following:

a. Driven wheel - no distinct speed change.
b. Non-driven wheel - no distinct speed change.
c. Accelerometer - distinct motion vector on X-Z:

The longitude spin is longer in time than collision or slip.

The accelerometer readings related to a longitude spin are of a lower magnitude than collision or slip.

Steps 30' and 40' may be followed by step 50' of generating physical events information about the detected physical events.

The physical events information may include the physical events and their locations.

A location of a physical event may be calculated based on the location of the vehicle at the time that a set of first parameter indicative of the physical event was measured and to the location of a component of the vehicle associated with the physical event.

Step 50' may be followed by step 90' of performing at least one out of storing, transmitting and processing the physical events information. The physical events information may be further processed before being transmitted and/or stored.

Steps 20' and 30' may also be followed by step 60' of calculating road segment attributes.

While multiple physical events may be detected per a road segment, a road segment attribute represents the entire road segment. Examples of road segment attributes may include (i) a curvature of a group of road segments that include the road segment; (ii) a longitudinal slope of the road segment, (iii) a lateral slope of the road segment, (iv) a grip level related to the road segment, (v) a waviness of the road segment.

Each road segment attribute may be calculated by applying any function (such as a statistical function - especially an averaging function) on readings made in different locations of the road segment.

Referring to the curvature of a group of road segments that include the road segment. A roundabout and a curved turn may be represented by a group of road segments. The curvature of the roundabout or the curved turn is represented by the curvature of the group of road segments.

The curvature of a group of road segments may include the radius and the number of road segments that belong to the group - or any other indication (such as an aggregate length) of the group of road segments.

In order to store the curvature of a group of road segments in a compressed manner - the curvature may be stored in relation to a certain road segment of the group (for example the first road segment) and additional information may indicate the size of the group of road segments that should be also associated with the curvature.

Step 60' may be followed by step 80' of generating road segment information based on the road segment attributes. The road segments information may be the collection of the road segment attributes.

Step 80' may also include performing at least one out of storing, transmitting and further processing the roads segments information. The roads segments information may be further processed before being transmitted and/or stored.

Steps 80' and 90' may be combined in the sense that the roads segments information and the physical events information may undergo the same processes of processing, storage and transmission.

For example, the method may reduce the amount of transmitted information from the vehicle by sending only deltas- difference between reference information and the information collected during method 10'.

For example, steps 80' and 90' may include:

a. Calculating differences between (a) a reference map of the multiple road segments, the reference map comprises reference information about previously detected physical events related to the multiple road segments, and (b) the physical events information; and wherein the transmitting at least some of the differences.

b. Determining whether to transmit the differences from the vehicle. If the differences are insignificant then they may not be transmitted.

Step 50' may also be followed by step 100' of determining a location of the vehicle based on reference map and physical events information.

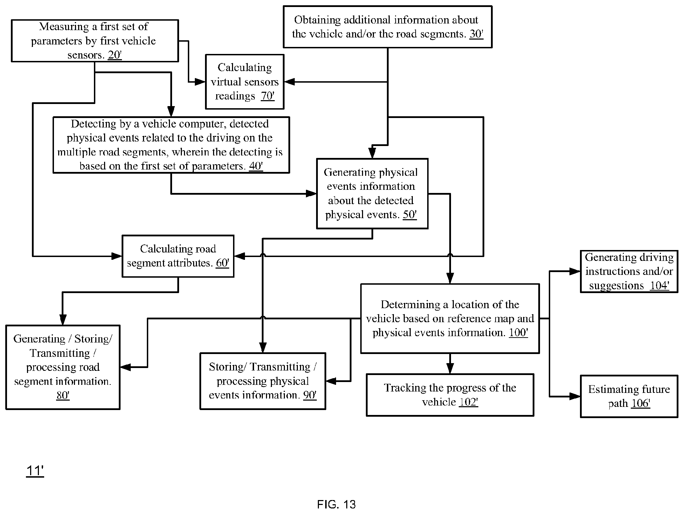

Figure 13 illustrates an example of method 11' for measuring physical events related to multiple road segments.

Method 11' differs from method 10' by including step 70' of calculating virtual sensor readings - merging the first set of parameters and maybe additional information to generate outputs of virtual sensors that do not exist in the vehicle. The virtual sensor readings may be processed and/or transmitted and/or stored in either one of steps 80' and 90.

Method 11' differs from method 10' by including step 102' of tracking the progress of the vehicle- after step 100' of determining the location of the vehicle.

Step 100' and/or step 102' may affect step 80' and/ or 90' - for example by providing more accurate location to the physical event information and/or to the road segment attributes. Yet for another example - the accurate location information may be used to calculate map deltas - (a) differences between reference information about previously detected physical events related to the multiple road segments, and the physical events information, and/or (b) differences between reference road segment attributes and the roads segments attribute calculated during step 60.

Method 11' differs from method 10' by including step 104' of generating driving instructions and/or driving suggestions based on the location of the vehicle and the reference map. The driving suggestions may be aimed to the driver of the vehicle while the driving instructions may be fed to various components of the vehicle - such as an autonomous vehicle module.

For example - an autonomous vehicle module may set the speed of the vehicle to value that matches (or substantially matches) the road segment attributes and the physical events that will occur in the near future - when the vehicle drives on the next road segments. This may increase the fuel consumption and/or reduce the load of the brakes.

Referring back to step 100' - step 100' includes determining a location of the vehicle based on reference map and physical events information

The reference map includes information that was obtained from one or more vehicles and/or other information sources regarding road segments and physical events - including but not limited to the location of the physical events.

For example - the reference map may include reference information about previously detected physical events related to the multiple road segments, and reference road segments attributes related to the multiple road segments.

The reference map may be updated based on information gathered during method 10.

The reference map may be any arrangement or collection of information about road segments and/or physical events associated with road segments.

The reference map may cover roads that span over any predefined geographical region or area.

Step 100' may include searching within the reference map for a reference sequence of physical events that match a sequence of detected physical events.

The match may require that the order of physical events, the relative distance between the physical events should equal to each other - or be within an allowable error range.

It should be noted that the physical events may be classified to mandatory physical events and optional physical events.

A mandatory physical event is a physical event that is located within a road segment and must be sensed by a vehicle when passing through the road segment. For example - a significant bump that stretches along the entire width of the road segment must be sensed.

An optional physical event is a physical event that is located within a road segment and may or may not be sensed by a vehicle when passing through the road segment. For example - a small pithole that can be bypassed when driving the through the road segment may or may not be sensed.

The match may require that the order of mandatory physical events, the relative distance between the mandatory physical events should equal to each other - or be within an allowable error range.

The physical events may be characterized by a normalized magnitude. The magnitude is normalized in the sense that parameters that differ from one vehicle to the other - such as suspensions, configuration, weight and the like are compensated for. The normalization may involve comparing the information sensed by different vehicles when passing the same road segment, estimating the weight of the vehicle and the like.

The matching process and/or the normalizing process may be executed by applying any matching techniques such as neural network, deep learning, fuzzy logic, and the like.

The search may be executed within the entire reference map or within a part of the reference map. The part of the reference map may be selected out of the entire map based on ae estimate about the location of the vehicle. The estimate may be provided by a location system such as but not limited to the global positioning system (GPS).

The resolution and/or accuracy of the GPS system are usually not sufficient for providing the exact location of the vehicle- thus even when GPS location is known the method still has to use the reference map.

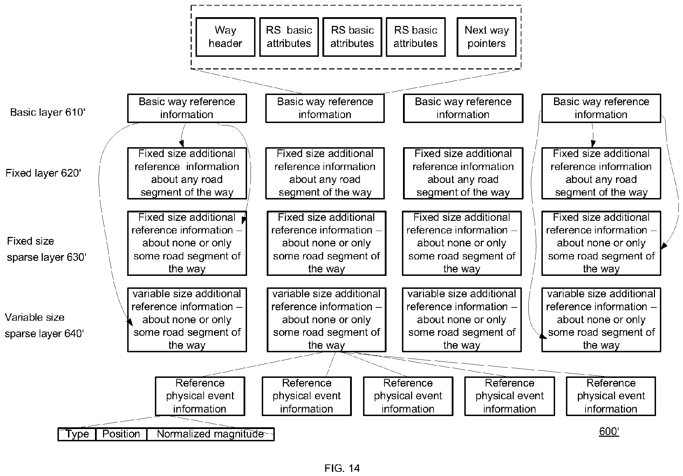

Figure 14 illustrates a reference map 600'.

Reference map 600' includes a basic layer 610', a fixed layer 620', a fired size sparse layer and a variable size sparse layer. 640'. The number of layers, the type of layers, the content of each layer may differ from those illustrated in figure 14.

Figures 14-17 will be illustrated using the following definitions:

   a. Node - a basic element in a way. Nodes may be spaced apart from each other by up to a predefined maximal distance (for example few tens of meters). Nodes may also be defined where a direction or a slope is changing.
   b. Junction pointers - pointers that are associated with a junction node. Different junction nodes are associated with different exits from the junction.
   c. Way - an ordered collection of nodes.
   d. Road segment - a part of a road that is delimited by two adjacent nodes.

It should be noted that road segments and nodes may be used in an interchangeable manner - for example- information about a road segment may be associated with a node that either starts the road segment or ends the road segment.

The basic layer 610' may store information about locations of the multiple road segments and spatial relationships between the multiple road segments. In figure 14 this information is arranged on a way to way basis.

The basic layer 610' include multiple basic way information units. Each basic way information unit may include information about locations of the road segments that belong to the way and spatial relationships between the road segments that belong to the way. The basic way information unit may include additional basic information such slope of a road segment and pointers (or other retrieval information) that point (or allow retrieval) towards a next way. The additional basic information may be stored in various formats - such as in a way header.

The way header may include information such as direction of the way - bi-directional, uni-directional - forward direction and uni-directional - reverse direction, way speed limit, way length and the like.

The basic layer may also store turn counters - statistics per driver, per vehicle, per a group of driver, per a group of vehicles, per a time period and the like- about which turns were made. The turn counters may assist in predicting the path of a driver- when the destination is provided or even when the destination is not provided. The path may be fed to the system from a navigation application such as Google maps and/or Waze.

Fixed layer 620' includes multiple units of fixed size additional reference information about any road segment of the way. Each unit may include information about each road segment.

Fixed size sparse layer 630' and variable size sparse layer 640' include information that is not associated with each road segment of each way. The difference between these layers is in the size of their information units - fixed size units (belong to fixed size sparse layer 630') or variable size units (belong to variable size sparse layer 640').

For example - some segments may belong to linear parts of the road while some road segments may belong to curved parts of the road. A curvature attribute may be associated only with road segments that belong to curved parts of the road. Furthermore - instead of assigning a curvature attribute to each road segment that belongs to a curved part of the road - the curvature attribute may be assigned to one of the road segments - and also include information about the number of other road segments that share the same curvature attribute.

Fixed size sparse layer 630' includes multiple units of fixed size additional reference information - about none or only some road segment of the way. An empty unit (that bears no information) may be omitted from the table.

Variable size sparse layer 640' includes multiple units of variable size additional reference information - about none or only some road segment of the way. An empty unit (that bears no information) may be omitted from the table.

Accordingly, the number of units in each one of the sparse layers (630' and 640') may be smaller (and even much smaller) than the number of units of the basic layer 610' and of the fixed layer 620'.

The information units of the variable size sparse layer 640' and/or of the fixed size sparse layer 630' may be accessed by applying a hash function on the address of the corresponding units in the basic layer and/or the fixed layer. Any other storage arrangement may be applied. Any hash collision avoidance policy and/or hash collision solving policy may be applied. For example - data units of the same hash value may be stored near each other - end even in a concatenated manner.

Each information unit of each of the layers - or even information that forms a part of an information unit may be subjected to an access control policy.

For example- some information units may be tagged private while other may be tagged as public- and there may be more access control levels than private and public. For example- private information may include information about driving patterns associated with the vehicle or with a driver of the vehicle and comprises public fields.

Private information may not be shared with others vehicle or may be subjected to any other access control rule.

An information unit or a part of information unit may be flagged, tagged or otherwise marked as being associated with an access control policy.

The physical events information may be included in the variable size additional reference information - as the number of physical events per road segment may differ from one road segment to the other.

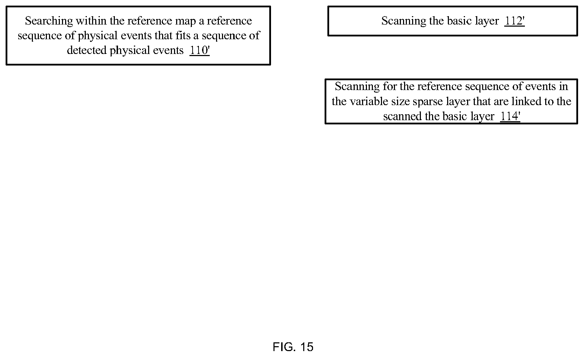

Figure 15 illustrates step 100'.

Step 100' may include step 110' of searching in the reference map a reference sequence of physical events that fits a sequence of detected physical events.

Step 110' may include step 112' of scanning the basic layer and step 114' of scanning for the reference sequence of events in the variable size sparse layer that are linked to the scanned the basic layer.

Figures 5 and 6 illustrates an example of roads, road segments, ways and nodes.

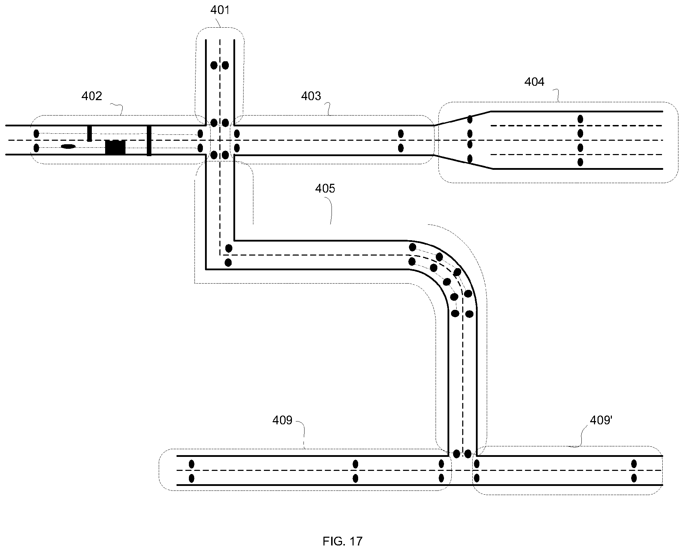

Way 401 (of figure 17) is bi-directional, includes one lane per direction and "covers" road portion 111. Way 401 includes road segments that are delimited by of nodes.

Way 402 (of figure 17) is bi-directional, includes one lane per direction, and "covers" road portion 112. Way 202 includes road segments 222 and 322 and nodes 221, 223 and 321 and 323.

Road portions 111, 112, 113 and 115 are delimited by junction 120.

Way 403 (of figure 17) is bi-directional, includes one lane per direction, and "covers" road portion 113. Way 403 includes road segments that are delimited by of nodes.

Way 404 (of figure 17) is bi-directional, includes two lanes per direction, and "covers" road portion 114. Way 404 includes road segments that are delimited by of nodes.

Way 405 (of figure 17) is bi-directional, includes one lane per direction, and "covers" road portion 115, road portion 116, road portion 117 and road portion 118. Way 405 includes road segments that are delimited by of nodes. Road portion 117 is curved. One lane of road portion 117 is represented by road segments 272, 274, 276 and 278 and nodes 271, 273, 275, 277 and 279. Another lane of road portion 117 is represented by road segments 372, 374, 376 and 378 and nodes 371, 373, 375, 377 and 379.

Way 409 (of figure 17) is bi-directional, includes one lane per direction, and "covers" road portion 119. Way 409 includes road segments that are delimited by of nodes.

Way 409' (of figure 17) is bi-directional, includes one lane per direction, and "covers" road portion 119'. Way 409' includes road segments that are delimited by of nodes.

Road portions 118, 119 and 119' are delimited by junction 121.

Only road segments that belong to road portion 117 have a curvature attribute. The curvature attribute may be associated with the first or last node of (371, 373, 375, 377 and 379) and/or of (271, 273, 275, 277 and 279) and additional information may indicate the number of nodes (five) that share this curvature.

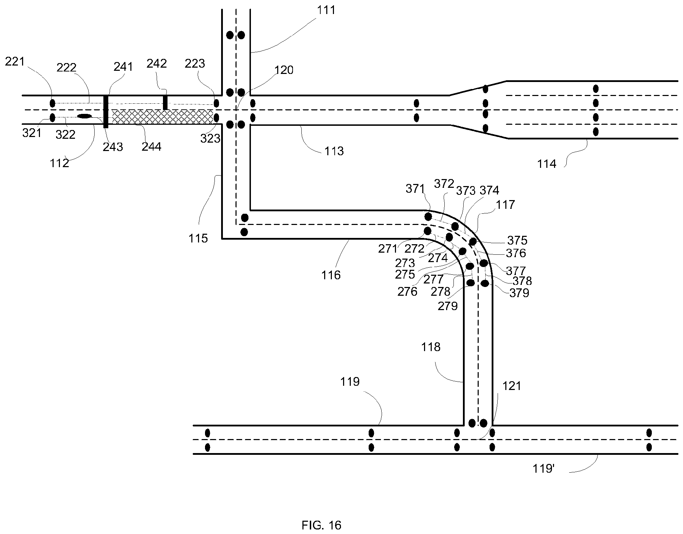

Figure 16 illustrates that road segment 222 includes obstacles such as a pithole 243, a bumper 242 that stretches along a single lane, another bumper 241 that stretches across both lanes and a slippery road section 244 that stretches along a single lane.

The physical events that will be experienced by the vehicle when driving over one of the lanes of road segment 222 will be represented by detected physical events information or by reference physical events information.

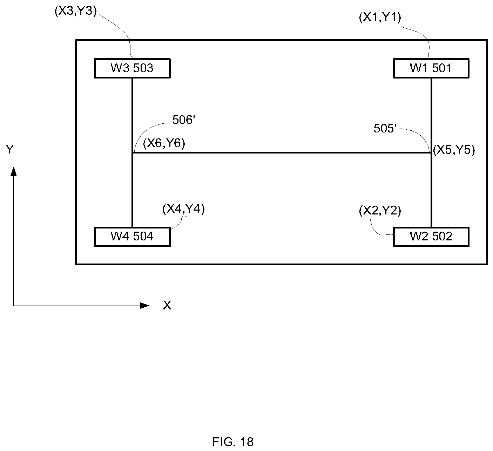

Figure 18 illustrates the bottom of the vehicle- and especially illustrates the spatial relationship between various components of the vehicle - including the coordinates (X1,Y1) of a first wheel W1 501, the coordinates (X1,Y1) of a second wheel W2 502, the coordinates (X3,Y3) of a third wheel W3 503 and the coordinates (X4,Y4) of a fourth wheel W4 504, the coordinates (X5,Y5) of a center 505 of a first axel that is coupled between W1 and W2, and the coordinates (X6,Y6) of a second axel that is coupled between W3 and W4.

A physical event may be experienced by one wheel - and in this case the location of the physical event may be attributed to the location of that wheel - or by multiple wheels - for example a pair of front wheels or a pair of second wheels- and it will be attributed to the location of both wheels (for example when colliding with a bump) or attributed to the location of the center of the axis (for example- when sliding).

For example- for physical events such as collision, slip, skid and spin - a physical event is associated with each wheel that encounters the physical even. If, for example if both front wheels encounter the same type of physical event at about the same time - two physical events attributes to the two front wheels will be generated.

Yet for another example - latitude spin and longitude spin may be attributed to the middle of the axel between the front wheels of the vehicle (assuming the vehicle moves forwards).

The physical event information may include a normalized magnitude of the event. The normalization may include compensating for parameters that differ from one vehicle to the other - such as suspensions, configuration, weight and the like.

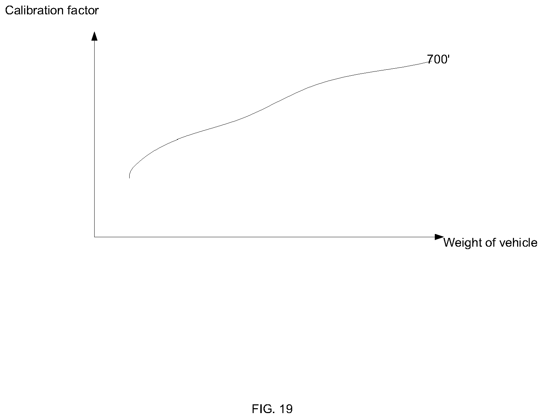

Figure 19 illustrates a curve 700' that provide an example of a normalization process that include applying a calibration factor that is based on the weight of the vehicle. Different parameters of the first set of parameters may be subjected to different calibration factors.

The normalization process may take into account weight, patch size, speed (may be a main normalization factor for swing), excitation (acceleration, deceleration, curve), wheel base distance (front-rear, right-left) and suspension.

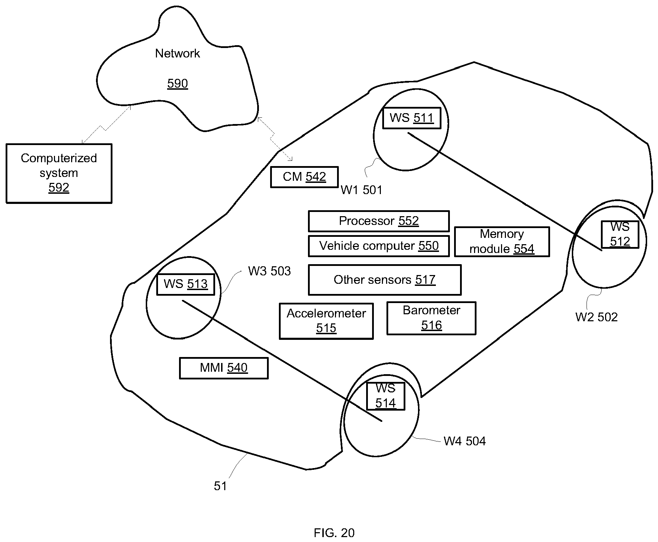

Figure 20' illustrates an example of vehicle 51, a network 590 and a computerized system 592.

The vehicle 51 may be any type of vehicle.

Figure 20 illustrates the vehicle as including first wheel W1 501, second wheel W2 502, third wheel W3 503, fourth wheel W4 504, first wheel sensor WS 511, second wheel sensor WS 512, third wheel sensor WS 513, fourth wheel sensor WS 514, accelerometer 515, barometer 516, other sensor 517, vehicle computer 550, processor 552, memory module 554, communication module (CM) 542, and man machine interface (MMI) 540.

MMI 540 may provide information to the driver such as driving suggestions.

The barometer 516 is illustrated as being located at the front of the vehicle 51. The barometer may be located in any location within vehicle 50. There may be more than a single barometer.

Accelerometer 515 may be a three-axis accelerometer.

The other sensors 517 may sense various parameters related to the vehicle and/or road conditions. The other sensors 517 may include at least one out of a speedometer, a thermometer, an engine sensor (such as fuel consumption sensor) or any other sensor.

The vehicle computer 550 may monitor the status of various components and/or systems of the vehicle, may control various components and/or systems of the vehicle and may or may not participate in the execution of any of the methods illustrated in the specification.

The communication module 542 may communicate with computerized system 592 via network 590.

The communication module 542 may be a short-range communication module, a long-range communication module such as a radio frequency communication module, a satellite communication module, a cellular communication network, and the like.

Vehicle computer 550 may include a processor and a memory unit. The processor may include hardware components and may be a general-purpose processor, an image processor, a hardware accelerator, an FPGA, an ASIC, and the like. The memory unit may be a non-volatile memory.

The computerized system 592 may be located in a cloud computing environment, may include one or more servers or any combination of computers.

Any step that includes processing, calculating and the like (and is illustrated in the application) may be executed by the vehicle computer 550, by processor 552 and/or by computerized system 592.

Memory nodule 554 may store the reference map. Various components of vehicle may execute method 10' and/or method 11'.

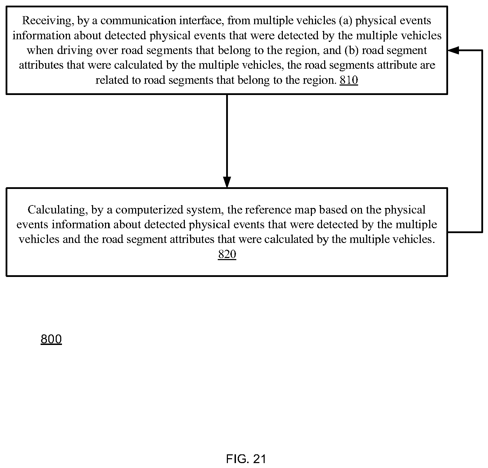

Figure 21 illustrates an example of method 800.

Method 800 may be executed by a computerized system that may be located in a vehicle or outside the vehicle.

Method 800 may start by step 810 of receiving, by a communication interface, from multiple vehicles (a) physical events information about detected physical events that were detected by the multiple vehicles when driving over road segments that belong to the region, and (b) road segment attributes that were calculated by the multiple vehicles, the road segments attributes are related to road segments that belong to the region.

A region may be any predefined region - it may include a part of a city, an entire city, a part of a country, an entire country, a part of multiple countries, multiple countries and even the entire globe.

The information may be received from different vehicle at the same time or at different point of time. The information from different vehicle may refer to different road segments or to the same road segments. There may be a partially overlap between the road segments related to information reported by different vehicles.

The physical events information of a vehicle of the multiple vehicles is based on a first set of parameters that is sensed by first vehicle sensors of the vehicle.

The first set of parameters comprises vehicle wheel movement parameters and vehicle acceleration parameters; wherein the first vehicle sensors differ from road image sensors.

The detected physical events may include, for example, at least one or more out of collision, slip, skid, spin, latitude spin and longitude spin.

The first vehicle sensors may include an accelerometer and multiple wheel movement sensors.

The road segment attributes may include at least one road segment attribute out of (i) a curvature of a group of road segments that comprise the road segment; (ii) a longitudinal slope of the road segment, (iii) a lateral slope of the road segment, (iv) a grip level related to the road segment, (v) a waviness of the road segment.

The detected physical event information and the road segment attributes are very compact - they may include few fields of limited size (magnitude of few bytes per field) - and are only a fraction of the size required for images used for image-based location. Accordingly - the reference map may be very small, and thus saves communication resources, computational resources and storage resources while providing a highly accurate description of roads.

The first set of parameters differ from visual information of road segments - and may include errors that differ from errors related to visual information of road segments. Merging these types of information may reduce the errors of both visual information and the information gathered during steps 810 and 820.

The detecting of the physical events based on the first set of parameters is much more accurate that performing inaccurate visual information-based estimates.

Method 800 may be used even under conditions that prevent visual sensors from operating (fog, sand storms, heavy rain, and the like).

The compact size of the information (road segments attributes and/or physical events information) eases the generation of updated information, the storage of updated information and the transmission of updated information - and eases the tracking after changes in the road condition.

Step 810 may be followed by step 820 of calculating, by a computerized system, the reference map based on the physical events information about detected physical events that were detected by the multiple vehicles and the road segment attributes that were calculated by the multiple vehicles.

The reference map includes reference physical events information related to the segments of the region and reference road segment attributes that relates to the road segments of the region.

The reference map may be initially generated and then updated. The update may occur in a continuous or non-continuous manner. The update may be represented by the arrow from step 820 to step 810.

The map is called a reference map in the sense that it includes reference data that may be compared to updated information acquired by a vehicle. The comparison may be performed during reference map updates and/or when the vehicle generates deltas to be transmitted to the computerized system.

The deltas are differences between the road segment attributes and/or physical events information and the reference map.

Step 820 may include updating only the relevant road segments attributes and/or physical event information included in the deltas.

The reference map may be the reference map of figure 14- although the reference map may have another stricture and may store different information.

The reference map may include a basic layer that stores information about locations of the multiple road segments and spatial relationships between the multiple road segments.

The reference map may include a layer that stores the reference information about the previously detected physical events related to the multiple road segments.

The reference map may include (a) a basic layer that stores information about locations of the multiple road segments and spatial relationships between the multiple road segments, and (b) one or more sparse layers that comprise additional information about only some of the road segments of the multiple road segments; wherein the one or more sparse layers are linked to the basic layer.

The reference map may include a fixed field size sparse layer and a variable size sparse layer; wherein the variable size sparse layers may include the reference physical event information.

The reference map may include private fields that store information about driving patterns associated with the vehicle or with a driver of the vehicle and may include public fields.

The physical events information may include normalized magnitudes of the detected physical events.

VEHICLE PROFILE

There may be provided There may be provided a compact vehicle profile. The compact size of the vehicle profile eases the generation of updated and vehicle profile, the storage of the vehicle profile and the transmission of the vehicle profile. The vehicle profile may be generated and/or updated using only a limited amount of computational and/or memory resources.

The vehicle profile may be further compressed thereby further reducing its memory footprint.

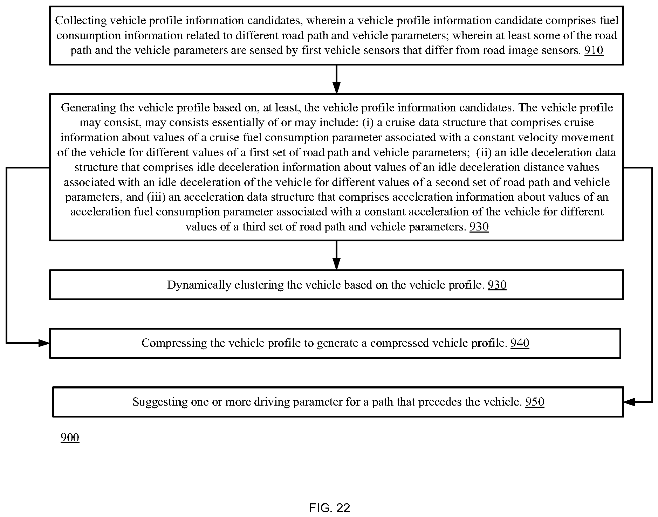

Figure 22 illustrates an example of method 900.

Method 900 may start by step 910 of collecting vehicle profile information candidates, wherein a vehicle profile information candidate comprises fuel consumption information related to different road path and vehicle parameters. At least some of the road path and the vehicle parameters are sensed by first vehicle sensors that differ from road image sensors.

The collecting may include sensing the road path vehicle parameters by the first vehicle sensors, receiving information about the sensed parameters by a vehicle computer, a computerized system located outside the vehicle, and the like.

Non-limiting examples of first vehicle sensors are illustrated in US provisional patent applications serial numbers 62/556,443 and 62/556444 filing date September 10, 2017.

Step 910 may include searching for steady state candidates.

A steady state candidate is a candidate that represents information after the vehicle reaches a steady state - and before exiting the steady state.

A steady state is obtained after the vehicle maintains the same acceleration for a predetermined period, after the vehicle maintains the same velocity for the predetermined period, or after the vehicle maintained the same idle deceleration for the predetermined period. The predetermined period may be of any length - for example few seconds - especially five seconds.

The predetermined period related to the steady state for cruise may be the same or may differ than the predetermined period related to the steady state for acceleration.

The predetermined period related to steady state for cruise may be the same or may differ than the predetermined period related to steady state for idle deceleration.

The predetermined period related to steady state for idle deceleration may be the same or may differ than the predetermined period related to steady state for acceleration.

An acceleration steady state may start when the vehicle is at a start speed and may end when the vehicle reaches a predefined velocity that is above the start speed by a predetermined amount (for example- 5 km/h - or any other value).

An idle deceleration steady state may start when the vehicle is at a start speed and may end when the vehicle reaches a certain velocity that is below the start speed by a certain amount (for example- 5 km/h - or any other value).

The certain amount may be the same as the predetermined amount or may differ from the predetermined amount.

The idle deceleration data structure may store only the start speed, only the predefined velocity or both start speed and predefined velocity.

The acceleration data structure may store only the start speed, only the certain velocity or both start speed and certain velocity.

Step 910 may be followed by step 920 of generating the vehicle profile based on, at least, the vehicle profile information candidates.

The vehicle profile may consist, may consists essentially of, or may include:

a cruise data structure that comprises cruise information about values of a cruise fuel consumption parameter associated with a constant velocity movement of the vehicle for different values of a first set of road path and vehicle parameters.

an idle deceleration data structure that comprises idle deceleration information about values of an idle deceleration distance values associated with an idle deceleration of the vehicle for different values of a second set of road path and vehicle parameters.

an acceleration data structure that comprises acceleration information about values of an acceleration fuel consumption parameter associated with a constant acceleration of the vehicle for different values of a third set of road path and vehicle parameters.

The cruise data structure may consist, may consists essentially of, or may include values of the cruise fuel consumption parameter for different combination of values of the first set of road path and vehicle parameters.

The first set of road path and vehicle parameters may include, may consist of, or may consist essentially of vehicle speed, road segment slope, vehicle weight, and one or more transmission system parameters.

The transmission system parameters may include, may consist of, or may consist essentially of gear and throttle position.

The idle deceleration data structure may include, may consist of, or may consist essentially of the values of the idle deceleration distance. Idle deceleration may mean a deceleration that does not involve using the brakes of the vehicle.

The second set of road path and vehicle parameters may include, may consist of, or may consist essentially of start vehicle speed, road segment slope, and vehicle weight.

The second set of road path and vehicle parameters may include, may consist of, or may consist essentially of start vehicle speed, road segment slope, and vehicle weight and one or more transmission system parameters.

The transmission system parameters may include, may consist of, or may consist essentially of gear.

The cruise data structure may include, may consist of, or may consist essentially of the values of the acceleration fuel consumption parameter. The acceleration fuel consumption parameter may be an average momentary fuel consumption and/or the average fuel consumption per a certain distance. And/or fuel consumption at liters per 100 kilometers.

The third set of road path and vehicle parameters may include, may consist of, or may consist essentially of start vehicle speed, road segment slope, vehicle weight, acceleration distance and one or more transmission system parameters.

The transmission system parameters may include, may consist of, or may consist essentially of gear and throttle position.

Step 920 may include rejecting vehicle profile information candidates based on a comparison between a slope of a path segment and a ratio between (i) height differences between two ends of the path segment and (ii) a length of a horizontal projection of the path segment.

Step 920 may be followed by step 930 of dynamically clustering the vehicle based on the vehicle profile.

Step 930 may include calculating a cluster profile for each cluster. The cluster profile may include, may consist of, or may consist essentially of a cluster cruise data structure, a cluster idle deceleration data structure, and a cluster acceleration data structure.

A cluster cruise data structure represents the cruise data structure of at least some of the vehicle of a cluster. The cluster cruise data structure may be calculated using any function - such as but not limiting to - statistical functions, weighted averaging and the like.

A cluster idle deceleration data structure represents the idle deceleration data structure of at least some of the vehicle of a cluster. The cluster idle deceleration data structure may be calculated using any function - such as but not limiting to - statistical functions, weighted averaging and the like.

A cluster acceleration data structure represents the acceleration data structure of at least some of the vehicle of a cluster. The cluster acceleration data structure may be calculated using any function - such as but not limiting to - statistical functions, weighted averaging and the like.

Step 930 include updating, based on at least a cluster profile of the cluster that may include the vehicle, at least one out of the cruise data structure, the idle deceleration data structure, and the acceleration data data structure.

Step 920 and/or 930 may be followed by step 940 of compressing the vehicle profile to generate a compressed vehicle profile.

The compressed vehicle profile may be stored in a memory unit of the vehicle and/or in a memory unit outside the vehicle. The compressed vehicle profile may be transmitted to the vehicle and/or may be transmitted outside the vehicle.

Step 940 may include at least one of the following:

Calculating a mathematical relationship between dependent road path and vehicle parameters, and removing information about at least one of the dependent road path and vehicle parameters, from at least one of the cruise data structure, the idle deceleration data structure, and the acceleration data data structure.

Removing road path and vehicle parameters that are related to a sub-group of vehicle speeds. For example- determining the optimal speed per a path segment - and keeping only fuel consumption parameters related to the optimal speed per a path segment.

Using one or more road path and vehicle parameters as keys without storing the one or more road path and vehicle parameters in any one of the vehicle profile. Accordingly - different fuel consumption parameters may be stored in a data base and are accessed using one or more road path and vehicle parameters (such as slope and/or speed) as keys.

A non-limiting example of calculating the mathematical estimation is illustrated below, and at least a part of this example is illustrated in US provisional patent applications serial numbers 62/556,445 and 62/556447 filing date September 10, 2017.

The following section illustrates how the slope parameter may be amended to reflect the slope and the weight of the vehicle - thereby removing the weight from the vehicle profile to provide a compressed vehicle profile.

The following compression can be applied on the cruise data structure - other data structures (acceleration, idle deceleration) may be compressed using other formulas:

The following elements are used:

$mg\Delta h$ - fuel is turned to elevation potential energy

$\dfrac{m(v_2{}^2 - v_1{}^2)}{2}$ - fuel is turned to kinetic energy

$k_2 mx$ - represents energy turned to friction (affected by mass)

$k_3 xv^2$ - represents energy turned to friction (drag)

*Note that all calculation for Cruise steady state (i.e. velocity is constant and time frame of $T_{ss}$ second)

On the one side of the equation, and the energy we get out of the engine, on the other:

$E_{Fuel}$ - represents fuel energy

Finally, we get:

$$E_{Fuel} = \underbrace{mg\Delta h}_{E_p} + \underbrace{mk_2 x}_{Efric} + \underbrace{\frac{m}{2}(V_2^2 - V_1^2)}_{V \sim const \Rightarrow E_k \to 0} + \underbrace{k_3 xV^2}_{drag}$$

Definitions:

$K_2$ Coefficient is given at the end of each session.

$x$ - Total distance in meters. Here it is determined per steady state (i.e. $x = V_{ss} * T_{ss}$).

$S_0$ - steady state slope in percent

$\Delta h$ - elevation difference (derived from slope and x)

$$m_0 = \frac{FW - EW}{2} \text{ (per VCT)}$$

$m_{real}$ - real estimated weight for current session

$\Delta m = m_{real} - m_0$ - mass change (from $m_0$)

$dh$ - effective change of elevation difference that result of mass change

$S_{new}$- new slope with weight $m_0$ (take into account $S_0$ and $\Delta m$)

Relation of slope and h

$$\frac{S_0}{100} = \frac{\Delta h}{\sqrt{x^2 - \Delta h^2}} \rightarrow \Delta h = \frac{\left(\frac{S_0}{100}\right) * x}{\sqrt{\left(\frac{S_0}{100}\right)^2 + 1}}$$

Our energy equations are:

$$\begin{cases} \Delta E_{Feul} = (m_0 + \Delta m)g\Delta h + (m_0 + \Delta m)k_2 x + k_3 x V^2 \\ \Delta E_{Feul} = m_0 g(\Delta h + dh) + m_0 k_2 x + k_3 x V^2 \end{cases}$$

We like to find *dh* that cause the same fuel consumption ($\Delta E_{Fuel}$) as the addition of $\Delta m$, thus we need to solve:

$$(m_0 + \Delta m)g\Delta h + (m_0 + \Delta m)k_2 x = m_0 g(\Delta h + dh) + m_0 k_2 x$$

$$\Delta m g \Delta h + \Delta m k_2 x = m_0 g dh \rightarrow dh = \frac{\Delta m}{m_0}\left(\Delta h + \frac{k_2 x}{g}\right)$$

Now, the new slope is:

$$S_{new} = 100 * \frac{\Delta h + dh}{\sqrt{x^2 - (\Delta h + dh)^2}} = \cdots = \frac{\frac{S_0}{\sqrt{\left(\frac{S_0}{100}\right)^2 + 1}} * \left(\frac{\Delta m}{m_0} + 1\right) + \frac{\Delta m}{m_0} * \frac{K_2}{g}}{\sqrt{1 - \left(\frac{S_0}{\sqrt{\left(\frac{S_0}{100}\right)^2 + 1}} * \left(\frac{\Delta m}{m_0} + 1\right) + \frac{\Delta m}{m_0} * \frac{K_2}{g}\right)^2}}$$

Thus, we found a function that maps ($S_0$, $m_0$, $\Delta m$, $k_2$) to a new effective slope.

Assuming that a slope of a road segment is known - then The compression may involve maintaining in the compressed vehicle profile only information related to the slope of the road segment. If the vehicle is about to pass a sequence of path segments - then the compressed vehicle profile may include information related only to the slopes of the path segments of the sequence.

The compressing may take into account maximal speed limits and remove during the compression information regarding speed values that exceed the maximal speed limits.

If, for example, during step 950 a computerized system generated suggested one or more driving parameters (such as speed, throttle, and gear) related to a path that precedes the vehicle then the compression may take into account the suggested parameters and remove, during the compression, information related to other driving parameters.

Step 920 may include extrapolating values of the cruise fuel consumption parameter for certain values of a first of road path and vehicle parameters. The extrapolating may be responsive to values of the cruise fuel consumption parameter for certain other measured values of the first set of road path and vehicle parameters.

The extrapolation is merely an example of how to estimate fuel consumption or idle deceleration distance (depending upon the table) for values of road path and vehicle parameters that were not sensed based on road path and vehicle parameters that were sensed and/or were taken from a cluster vehicle cluster or were guessed or obtained in another manner.

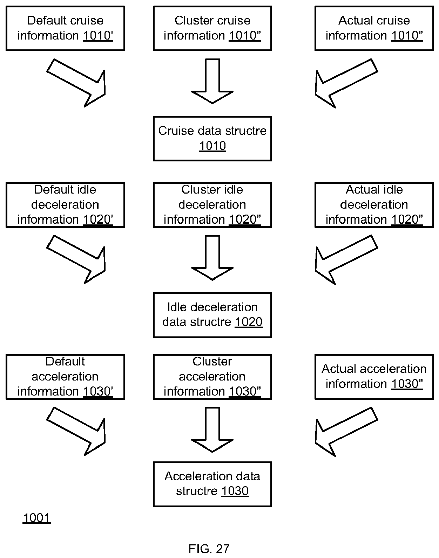

Figure 27 illustrates that the cruise data structure 1010 may be generated and/or updated using default cruise information 1010' (preprogrammed values, or any default values, the default values may be generated randomly, in a pseudo-random manner, based on any parameter of the vehicle - manufacturer, model, year), cluster cruise information 1010" and/or actual (measured) cruise information 1010".

The idle deceleration data structure 1020 may be generated and/or updated using default idle deceleration information 1020' (preprogrammed values, or any default values, the default values may be generated randomly, in a pseudo-random manner, based on any parameter of the vehicle - manufacturer, model, year), cluster idle deceleration information 1020" and/or actual (measured) idle deceleration information 1020".

The acceleration data structure 1030 may be generated and/or updated using default acceleration information 1030' (preprogrammed values, or any default values, the default values may be generated randomly, in a pseudo-random manner, based on any parameter of the vehicle - manufacturer, model, year), cluster acceleration information 1030" and/or actual (measured) acceleration information 1030".

Any estimate may be responsive to the quality of the road path and vehicle parameters. The quality may be determined in any manner. For example - a higher quality may be assigned to a combination of values of road path and vehicle parameters that were measured multiple times, and have a small distribution (at least smaller that the distributions of another combination that has a lower quality). Measured fuel consumption and/or idle deceleration values may have a higher quality that corresponding values for extrapolated values and/or cluster values.

Referring back to figure 22 - method 900 may include step 950 of suggesting one or more driving parameter for a path that precedes the vehicle. Step 950 is based, at least in part, on the vehicle profile, path portions slope and extrinsic limitations such as maximal speed limits.

At least one step of method 900 may be executed by a vehicle computer and/or by a computerized system, located outside the vehicle. The vehicle computer and the computerized system may cooperate with each other during the execution of method 900.

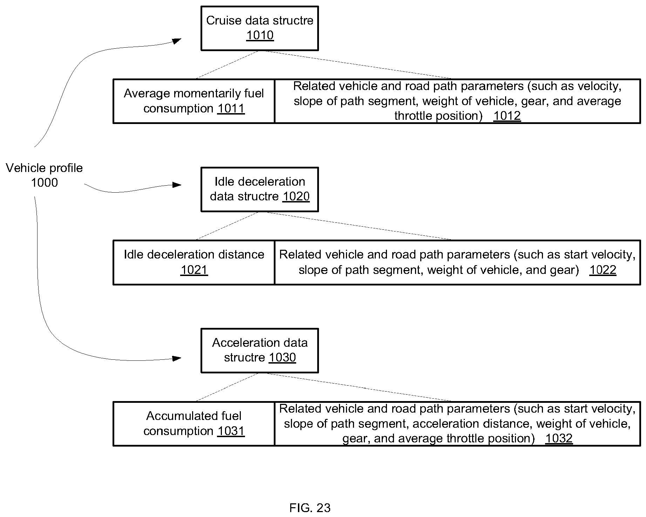

Figures 23-26 illustrate examples of a vehicle profile and various data structures of the vehicle profile.

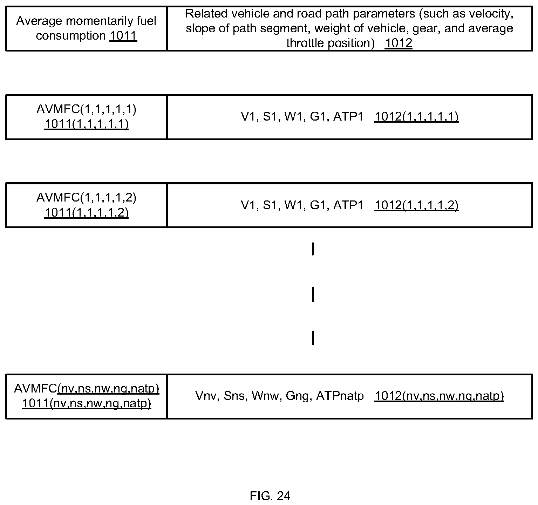

Figures 23 and 24 illustrates cruise data structure 1010 as including cruise information about values of a cruise parameter (such as average momentary fuel consumption 1011) associated with a constant velocity movement of the vehicle for different values of a first set of road path and vehicle parameters (1012). The first set of road path and vehicle parameters may include, for example, velocity, slope of path segment, weight of vehicle, gear, and average throttle position.

Assuming that there are Nv different speed values (V1 - Vnv), Ns different slope values (S1 -Sns), Nw different vehicle weight values (W1-Wnw), Ng different values of gear position (G1-Gng), Natp different values of average throttle position (ATP1 - ATPnatp) - the cruise data structure may include up to Nv * Ns * Nw * Ng * Natp entries.

Figure 24 illustrates three entries - each entry includes an average momentary fuel consumption (AVMFC) field {1011(1,1,1,1,1), 1011(1,1,1,1,2) and 1011(nv, ns, nw, ng, natp)} and a corresponding Related vehicle and road path parameters field {1012(1,1,1,1,1), 1012(1,1,1,1,2) and 1012(nv, ns, nw, ng, natp)}.

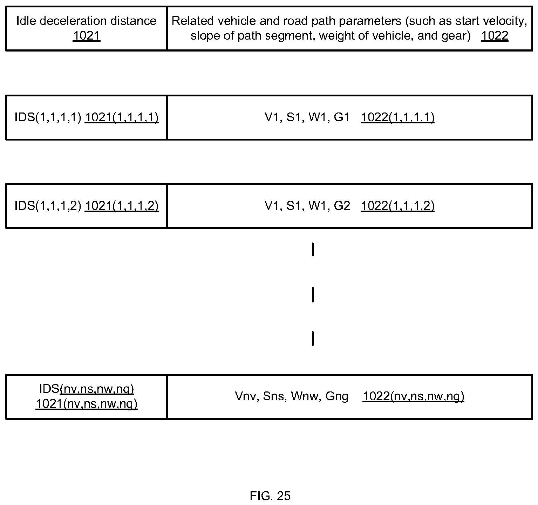

Figures 23 and 25 illustrates idle deceleration data structure 1020 as including idle deceleration information about values of an idle deceleration parameter (such as idle deceleration distance 1021) associated with an idle deceleration of the vehicle for different values of a second set of road path and vehicle parameters (1022). The second set of road path and vehicle parameters may include, for example, starts velocity (velocity when starting the idle deceleration), slope of path segment, weight of vehicle and gear.

Assuming that there are Nv different start speed values (V1 - Vnv), Ns different slope values (S1 -Sns), Nw different vehicle weight values (W1-Wnw) and Ng different values of gear position (G1-Gng) - the idle deceleration data structure may include up to Nv * Ns * Nw * Ng entries.

Figure 25 illustrates three entries - each entry includes an idle deceleration distance field (IDS) {1021(1,1,1,1), 1021(1,1,1,2) and 1021(nv, ns, nw, ng)} and a corresponding related vehicle and road path parameters field {1022(1,1,1,1), 1022(1,1,1,2) and 1022(nv, ns, nw, ng)}.

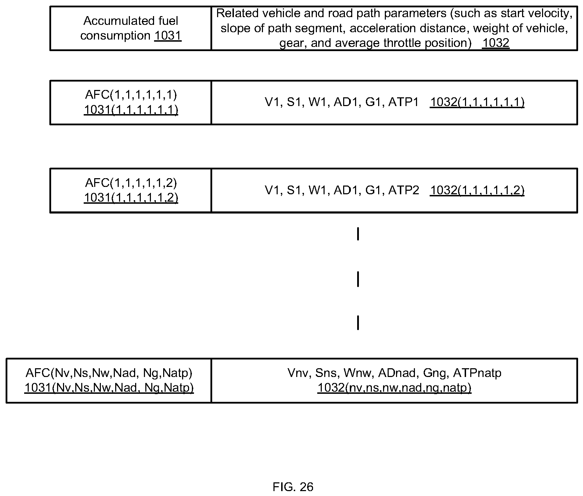

Figures 23 and 26 illustrate acceleration data structure 1030 as including acceleration information about values of an acceleration parameter (such as accumulated fuel consumption 1031) associated with a constant acceleration movement of the vehicle for different values of a third set of road path and vehicle parameters (1032). The third set of road path and vehicle parameters may include, for example, start velocity, slope of path segment, acceleration length, weight of vehicle, gear, and average throttle position.

Assuming that there are Nv different speed values (V1 - Vnv), Ns different slope values (S1 -Sns), Nad different acceleration distances (AD1 - ADnad), Nw different vehicle weight values (W1-Wnw), Ng different values of gear position (G1-Gng), Natp different values of average throttle position (ATP1 - ATPnatp) - the acceleration data structure may include up to Nv * Ns * Nad * Nw * Ng * Natp entries.

Figure 26 illustrates three entries - each entry includes an accumulated fuel consumption (AFC) field {1031(1,1,1,1,1,1), 1031(1,1,1,1,1,2) and 1031(nv, ns, nad, nw, ng, natp)} and a corresponding Related vehicle and road path parameters field {1032(1,1,1,1,1,1), 1032(1,1,1,1,1,2) and 1032(nv, ns, nad, nw, ng, natp)}.

Non-limiting examples of values and granularity of parameters is provided below:

Velocity or start velocity may be range between 0-140 Km/h with granularity between 1-5 Km/h, and the like.

Slope may range between minus 20 and plus 20 with a granularity between 0.05 - 2 degrees, and the like.

Weight may range between 1-100 percent of a maximal loaded vehicle with a granularity between 0.5-8 percent, and the like.

Gear may range between 4 and 16 with a granularity of 1.

Average throttle position may range between 1-100 percent of a maximal open throttle with a granularity between 0.5-8 percent, and the like.

Average momentary fuel consumption may range between 0 to 1200 Liter to 100 Km, with a granularity between 0.05-1 percent, and the like.

Average fuel consumption may range between 0 to 255 Liter/hour, with a granularity between 0.5-5 liter/hour, and the like.

Idle deceleration distance may range between 0-1000 meters with resolution between 0.5-5 meters.

The range and/or resolution may change between one data structure to another.

Figure 20 illustrates an example of vehicle 51, a network 590 and a computerized system 592.

The vehicle 51 may be any type of vehicle.

Vehicle 51 may include any type of vehicle sensors. Non-limiting examples of vehicle sensors are illustrated in US provisional patent applications serial numbers 62/556,443 and 62/556444 filing date September 10, 2017.

Figure 20 illustrates the vehicle as including first wheel W1 501, second wheel W2 502, third wheel W3 503, fourth wheel W4 504, first wheel sensor WS 511, second wheel sensor WS 512, third wheel sensor WS 513, fourth wheel sensor WS 514, accelerometer 515, barometer 516, other sensor 517, vehicle computer 550, processor 552, memory module 554, communication module (CM) 542, and man machine interface (MMI) 540.

MMI 540 may provide information to the driver such as driving suggestions.

The barometer 516 is illustrated as being located at the front of the vehicle 51. The barometer may be located in any location within vehicle 50. There may be more than a single barometer.

Accelerometer 515 may be a three-axis accelerometer.

The other sensors 517 may sense various parameters related to the vehicle and/or road conditions. The other sensors 517 may include at least one out of a speedometer, a thermometer, an engine sensor (such as fuel consumption sensor) or any other sensor.

The vehicle computer 550 may monitor the status of various components and/or systems of the vehicle, may control various components and/or systems of the vehicle and may or may not participate in the execution of any of the methods illustrated in the specification.

The communication module 542 may communicate with computerized system 592 via network 590.

The communication module 542 may be a short-range communication module, a long-range communication module such as a radio frequency communication module, a satellite communication module, a cellular communication network, and the like.

Vehicle computer 550 may include a processor and a memory unit. The processor may include hardware components and may be a general-purpose processor, an image processor, a hardware accelerator, an FPGA, an ASIC, and the like. The memory unit may be a non-volatile memory.

The computerized system 592 may be located in a cloud computing environment, may include one or more servers or any combination of computers.

Any step that includes processing, calculating and the like (and is illustrated in the application) may be executed by the vehicle computer 550, by processor 552 and/or by computerized system 592.

Memory nodule 554 may store the reference map. Various components of vehicle may execute method 900 and/or 1200.

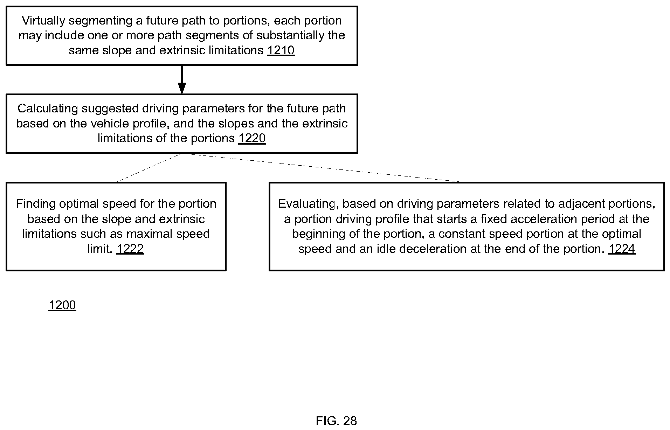

Figure 28 illustrates method 1200 and figure 9 illustrates an example of suggested driving speed obtained when using method 1200.

Method 1200 is for calculating suggested driving parameter for a path that precedes a vehicle. The driving parameter may include, for example, speed, throttle position and gear.

Method 1200 is based, at least in part, on the vehicle profile, path portions slope and extrinsic limitations such as maximal speed limit, ambient weather, and the like.

Method 1200 may start by step 1210 of virtually segmenting the path to portions. Each portion may include one or more path segments of substantially a same slope and substantially a same extrinsic limitation. A path segment may be an atomic unit for road path parameters. A rod segments may be, for example, between 1 and 50 meters long - but may have other lengths.

Step 1210 may be followed by step 1220 of calculating suggested driving parameters for the future path based on the vehicle profile, and the slopes and the extrinsic limitations of the portions.

The calculating may include, step 1222 of finding an optimal speed for the portion based on the slope and extrinsic limitations. The speed may be optimal in the sense that it may be selected to provide a minimal fuel consumption, may result in the fastest passage over the entire path, and/or may be responsive to any other constraint.

The calculating may include step 1224 of evaluating, based on driving parameters related to adjacent portions, a portion driving profile that starts a fixed acceleration period at the beginning of the portion, a constant speed portion at the optimal speed and an idle deceleration at the end of the portion.

Step 1220 may be executed in a backpropagating manner - starting from the end of the pat and assuming that the vehicle should idle at the end of the last segment. The method may then try to check whether the last portion can be driven by starting with a fixed acceleration period till reaching an optimal speed and then performing idle deceleration to stop the vehicle at the end of the last portion. This should take into account the limitations of the previous portion and extrinsic limitations.

The backpropagating may include determining the driving profile through the portion based on the parameters related to a preceding and/or following portions.

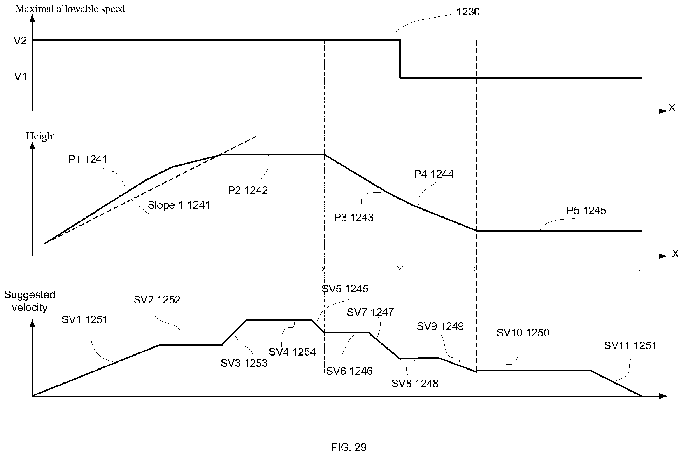

In figure 29 a path includes a first portion P1 1241, a second portion P2 1242, a third portion P3 1243, a fourth portion P4 1244 and a fifth portion P5 1245.

Each portion may include multiple path segments.

First portion P1 1241 includes few path segments that have different slopes - but the sloped are substantially the same. The slope allocated to first portion P1 1241(for calculating the driving session) is denoted Slope 1 1241' and may reflect any slope and/or height change of the path segments of the first portion.

Third portion P3 1243 and fourth portion P4 1244 have the same slope but are associated with different maximal speed limits - V2 versus V1.

The suggested velocity is illustrated at the bottom of figure 9. It was calculated by backpropagating the desired driving profile (trapezoid shaped profile) from the fourth portion backwards.

The driving profile of the first portion starts by a fixed acceleration SV1 1251 that is followed by a fixed velocity cruising SV2 2152. In this example, the first portion includes a positive slope and idle deceleration will reduce the speed of the vehicle in a manner that will require unnecessary acceleration during the second portion.

The driving profile of the second portion starts by a fixed acceleration SV3 1253 that is followed by a fixed velocity cruising SV4 1254, and ends with idle deceleration SV5 1245.

The driving profile of the third portion starts by a fixed velocity cruising SV6 1256, and ends with idle deceleration SV7 1247. The third and fourth segments have a negative slope and the vehicle reaches the maximal speed limit at the end of the third segments- there is no need to starts the fourth portion with a fixed acceleration. The maximal speed limit of the fourth portion is lower than the maximal speed limit of the third portion - and a relatively long idle deceleration period is required at the end of the third portion.

The driving profile of the fourth portion starts by a fixed velocity cruising SV8 1258, and ends with idle deceleration SV9 1249.

The driving profile of the fifth portion starts by a fixed velocity cruising SV10 1250, and ends with idle deceleration SV11 1251 - so that at the end of the path the vehicle is idle.

It is noted that the path may be associated with different start and end conditions - for example the vehicle may not be idle at the end of the path.

WEIGHT

The weight of the vehicle can be evaluated based on energy consumed by the vehicle in various path segments and on the energy gained by the fuel consumption.

The weight of the vehicle can be evaluated based on assumptions related to a motor efficiency function and a fuel consumption errors associated with fuel consumption measurements. The motor efficiency function represents the relationship between consumed fuel and output (mechanical) energy.

The evaluation process may be performed in an iterative manner, in which one or more assumptions that were used for calculating the evaluated weight can be re-evaluated given the evaluated weight. The same iterative approach may be applied to the estimate of the motor efficiency function and/or to the fuel consumption errors.

The evaluation process of the weight and/or any estimation process (that is based on the estimated weight) can be done at any complexity and/or by any computerized system - either by a vehicle computer or an out-of-vehicle server or computer. For example, the out-of-vehicle computer may initially evaluate the energy coefficients using a vast number (thousands or more) of measurements. The vehicle computer may receive the initially evaluated energy coefficients and use them (in addition to more measurements obtained by the vehicle sensors) to update (even in real time) the weight estimate of the vehicle.

Initial or other estimates of energy coefficients, motor efficiency function values and/or to the fuel consumption errors values related to a certain vehicle may be based on the behavior of vehicles that belong to the same class of vehicles. A class of vehicles may be vehicles of the same model, same manufacturer and/or same year of production. Additionally or alternatively, the vehicle may be classified and/or re-classified based on the weight measurements of the vehicle.

The evaluation process may examine multiple combinations of values of energy coefficients, motor efficiency function values and/or to the fuel consumption errors values.

Any search process may be applied. The entire set of combinations may be evaluated or only a part of the entire set of combination may be evaluated.

The search process may take into account a quality attribute associated with a path segment. The quality attribute may be used to filter measurements related to path segments and/or may be used in another manner.

For example, the weight of a vehicle can be evaluated based on an evaluation of work and energy gained by the fuel consumed.

A weight of a vehicle may be evaluated during a learning period (or a learning period). During the learning period, the monitored vehicle passes through multiple paths. The multiple paths may be segmented to path segments.

The work and energy gained by the fuel consumed may be estimated per each path segment.

The work and energy gained by the fuel consumed may be expressed using the following six components:

a. $\dfrac{m(v_2{}^2 - v_1{}^2)}{2}$ - fuel is turned to kinetic energy

b. $mg\Delta h$ - fuel is turned to elevation potential energy

c. $k_1x$ - represents energy turned to friction

d. $k_2mx$ - represents energy turned to friction (affected by weight)

e. $k_3xv^2$ - represents energy turned to friction (drag)

f. $k_4mxv^2$ - represents energy turned to friction (weight involved)

On the side of the equation, the energy outputted from the engine of the vehicle, taking into account the energy loss by engine inefficiency: $ame \cdot fe \cdot fuel$ - represents fuel energy.

Using an equilibrium equation (Energy = Potential Gain + Loss):

$$ame \cdot fe \cdot fuel = \frac{m(v_2{}^2 - v_1{}^2)}{2} + mg\Delta h + k_1x + k_2mx + k_3xv^2 + k_4mxv^2$$

We may extract the mass of the vehicle:

$$m = \frac{ame \cdot fe \cdot fuel - k_1x - k_3xv^2}{gh + \dfrac{(v_2{}^2 - v_1{}^2)}{2} + k_2x + k_4xv^2}$$

Mass estimates may be converted to weight estimates (weight = mass x g).

The values of the energy coefficient values may be evaluated over any range and at any resolution. For example - k1 may range between 0 and 10,000 and be evaluated at a resolution (steps) of 1000 (0, 1000, 2000, 3000...), and each one of k2, k3 and k4 may range between 0 and 1 and be evaluated at a resolution of 0.01 (0, 0.01, 0.02, 0.03...).

A search process may include calculating the weight estimates for a plurality of path segments. The plurality of path segments may include all the path segments of all paths that were passed by the vehicle during the learning period or only some of the paths segments.

A path segments may be ignored (filtered out) for one or more reasons such as an insufficient quality.

Non-limiting examples of path segmentation and/or filtering out and/or assigning a quality attribute are provided below:

a. Path segment may be relatively short (in time) - for example below half a minute. The duration of the path is a tradeoff between the need to obtain enough data, expecting that at least some variables will be substantially constant during the entire path segment and having enough valid path segments within a single driving session. The longer the path segment the higher the quality.

b. Ignore path segments (or assign low quality) in which the vehicle descended - thereby avoiding braking losses, and since in such path segments the fuel is cut from engine.

c. Motor revolutions per minute (RPM) - higher RPM difference (between start and end of path segment) - the higher the quality.

d. Assign higher quality to path segments having bigger momentum (momentum is the difference between the square of the velocity at the end of a path segment and the square of the velocity at the start of a path segment. Insufficient momentum (below a momentum threshold - such as 50[m^2/Sec^4])- may be ignored of - or be assigned a very low quality.

e. Ignore path segments (or assign low quality) - in which the velocity exceeded a certain speed threshold (for example - above 70 Km/h) - due to quantization errors.

f. Ignore path segments (or assign low quality) in which the overall fuel consumption rate is below a threshold (for example - 3 [L/hour])

g. Assign higher quality level to path segments that include steeper climbs of the vehicle.

h. Prevent a single path from including stops that are long enough to enable substantial weight changes of the vehicles. For example- if unloading 500 kilograms of goods lasts two minutes - then an occurrence of such a stop that is at least two minutes long may mark the border between two path segments.

The suggested weight evaluation is accurate and may require limited computational resources. The suggested weight evaluation compensates for inaccuracies of measurements performed by vehicle sensors and enables using low cost limited accuracy sensors.

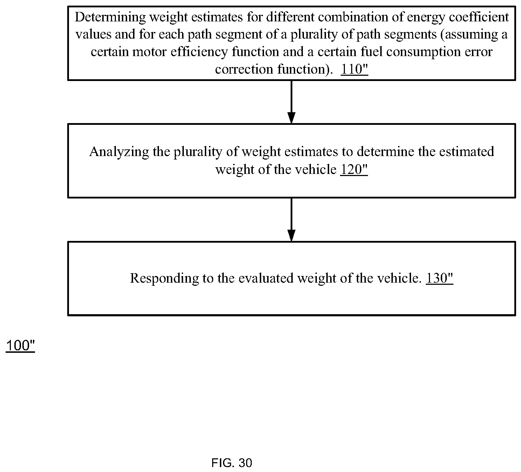

Figure 30 illustrates method 100".

Method 100" may start with step 110" of determining weight estimates for different combination of energy coefficient values and for each path segment of a plurality of path segments (assuming a certain motor efficiency function and a certain fuel consumption error correction function), according to the following equation:

$$m = (ame \cdot fe \cdot fuel - k\_1\, x - k\_3\, xv{\char`\^}2)/(g\Delta h + ((\ [\![v\_2]\!]\ {\char`\^}2 - \ [\![v\_1]\!]\ {\char`\^}2))/2 + k\_2\, x + k\_4\, xv{\char`\^}2)\ .$$

Wherein "ame" is a value of the estimated motor efficiency function, $v_2$ is a velocity of the vehicle at an end of the path segment, vi is a velocity of the vehicle at a start of the path segment, v represents at least one value of a velocity of the vehicle when driving over the path segment (for example the average velocity), x is a length of the path segment, Δh is a height difference between the end and the start of the path segment; and fuel is an error corrected fuel consumption related to the path segment.

Step 110" provides a plurality of weight estimates.

Step 110" may be followed of step 120" of analyzing the plurality of weight estimates to determine the estimated weight of the vehicle.

The analysis may include evaluating multiple combinations of energy coefficient values. The multiple combinations of energy coefficient values may cover all the possible combinations of energy coefficient values or only a subset of all the possible combinations of energy coefficient values. Any method for selecting which combination to evaluate may be provided.

Step 120" may include at least one of the following:

a. For each combination of energy coefficient values (of the multiple combinations):

i.Calculating, a distribution related to the weight estimates. The distribution may be provided by applying the combination of energy coefficient values to inputs received about multiple path segments. The distribution may be a distribution of weight estimates, may be a distribution that is responsive to quality attributes of the path segments, may be a distribution that ignores the quality attributes of the path segments, may include only information about path segments of enough quality, may be a distribution of values that represents quality attributes of weight estimates that belong to a bin associated with a range of weight estimates, may be a distribution of values of sums of quality attributes of weight estimates that belong to a bin associated with a range of weight estimates. For example- when the distribution is a weight distribution then this step may including calculating a weight estimate, using the combination, for each path segment of multiple path segments.
ii.Finding one or more clusters (for each one of the distributions). For example- if the weight of the vehicles was not changed during the learning period then it is expected to receive a single cluster. The number of typical and distinguishable weights of the vehicle (for example- empty or full) may determine the number of clusters.
iii.Determining one or more statistical parameter of the clusters. For example - statistical variation, width of the cluster, and the like.

b. Selecting, out of the different combinations of energy coefficient values (that are associated with different distributions), a selected combination of energy coefficient values. The selection is based on the one or more statistical parameters of the clusters of the distribution that is related to the selected combination of energy coefficient parameters. For example - the selected combination of energy coefficient values may provide a distribution that has the most statistically significant clusters.
c. Using the weight estimate provided when using the selected combination of energy coefficients as the evaluated weight of the vehicle. The weight estimate may be one of the weight estimates of one or more path segments, may represent (for example be an average, median or any other representation of) the different weight estimates related to different path segments (when using the selected combination of energy coefficients), and the like.

Step 120" may be responsive to quality attributes of the path segments. For example, the distribution of the weight estimates may represent quality attributes and/or may ignore path segments of insufficient quality.

Step 120" may be followed by step 130" of responding to the evaluated weight of the vehicle.

Step 130" may include one or more steps out of:

a. Updating an Autonomous Vehicles application.
b. Updating an Advanced Driver Assistance Systems (ADAS) application.

c. Reporting the estimated weight to the driver of the vehicle or to another entity (such as a vehicle supervisor).

d. Using the evaluated weight of the vehicle to verify or better estimate the motor efficiency function.

e. Using the evaluated weight of the vehicle to verify or better estimate the certain fuel consumption error correction function.

f. Classifying the vehicle to a certain class of vehicles.

g. Using the selected combination of the energy coefficient values and future measurements obtained by the vehicle to calculate in real time (even by the vehicle computer) the future weight of the vehicle.

Method 100" provides a highly accurate estimate of the vehicle without using dedicated and costly weight sensors such as dedicated vehicle scales, and the like. The highly accurate weight estimate dramatically reduces the resources required for measurement of a weight of a vehicle. The method may used constrained and unconstrained machine learning and is highly efficient in terms of usage of computerized resources. By checking a vast number of measurements and readings the method may filter out inaccuracies.

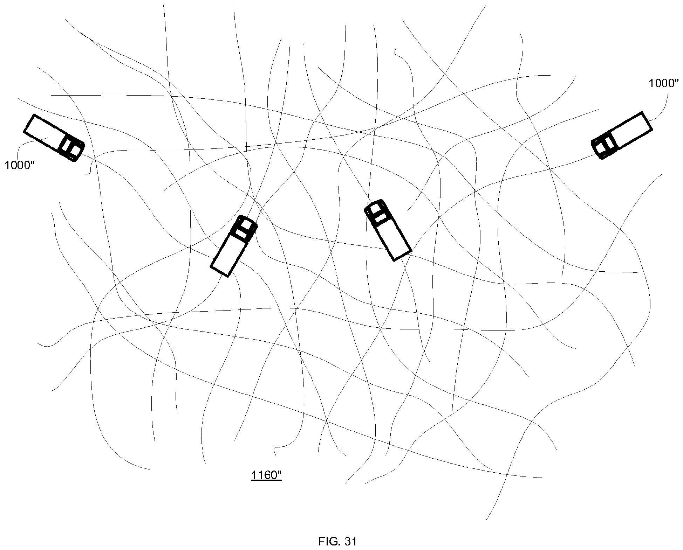

Figure 31 illustrates a vehicle (such as truck 100) and multiple paths 1160" traveled by the vehicle during the learning period. The learning period may last hours, days, weeks, months, years, and the like.

The paths may be segmented to path segments. The path segments may be of different lengths, may be of equal length, and the like.

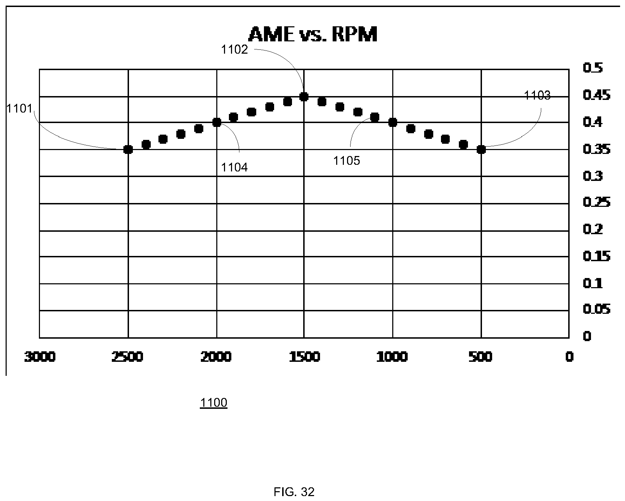

Figure 32 illustrates an example of an approximation 1100 of a motor efficiency function 1100. In figure 32 the x-axis represents RPM and the y-axis represents average motor efficiency.

The approximation 1100 includes three vertexes (1101, 1102 and 1103) and two edges 1104 and 1105. The peak of the approximation 1100 is vertex 1102. Edge 1104 links vertexes 1101 and 1102. Edge 1105 links vertexes 1102 and 1103.

Approximation 1100 may be represented in a compact manner by motor efficiency function values such as coefficients $a_1$, $a_2$ and as. Coefficient as may be the value of vertex 1102. Coefficient $a_1$ may be a reciprocal of the slope of edge 1105. Coefficient $a_2$ may be a reciprocal of the slope of edge 1104.

Any other representation of the approximation may be used.

It should be noted that the motor efficiency function may be responsive to the gear - and that the motor efficiency function may be represented by a set of coefficients per gear.

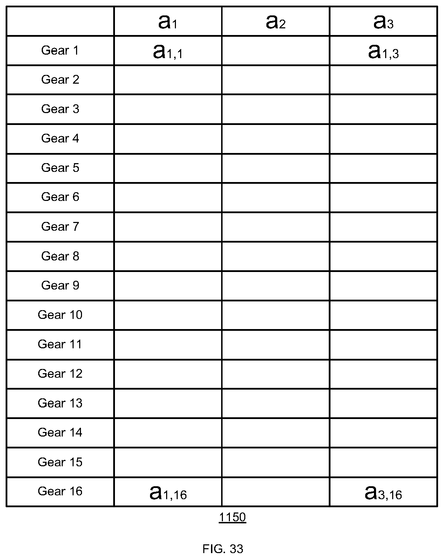

Figure 33 illustrates a table 1150 that includes forty-eight coefficients - three coefficients per each one out of sixteen gears - $a_{1,1}$ till $a_{16,3}$.

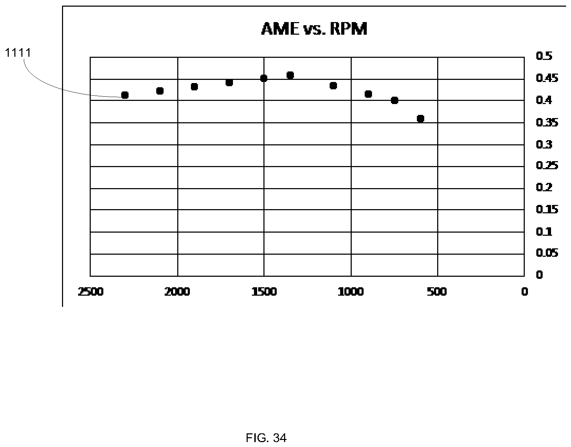

Figure 34 illustrates an example of a non-linear approximation 1111 of a motor efficiency function 1100.

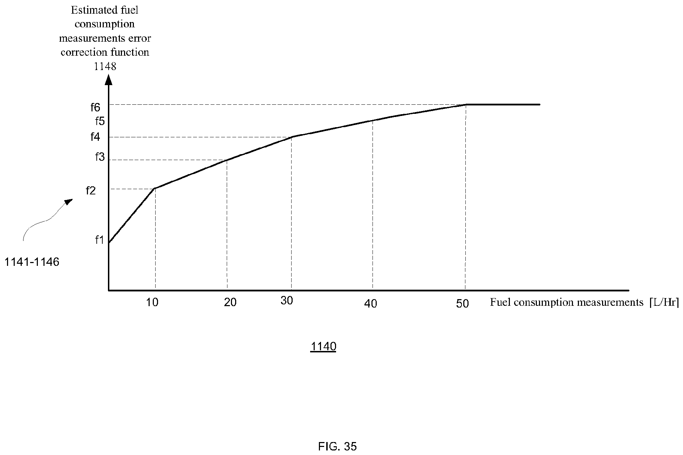

Figure 35 is an example of an approximation 1140 of a fuel consumption error correction function.

The fuel consumption error correction function corrects errors in fuel consumption measurements

Figure 35 illustrates a linear approximation that includes six segments. The six segments have start values denoted f1, f2, f3, f4, f5 and f6 1141-1146.

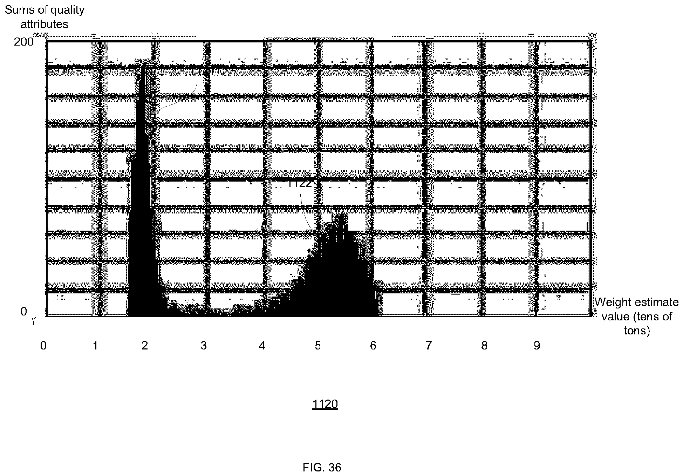

Figure 36 illustrates a histogram 1120 of a distribution related to weight estimates.

The histogram includes multiple bins that are associated with weight ranges. The value of each bin is a sum of quality attributes of path segments that are associated with the same weight range.

Figure 36 shows two distinct clusters 1121 and 1122.

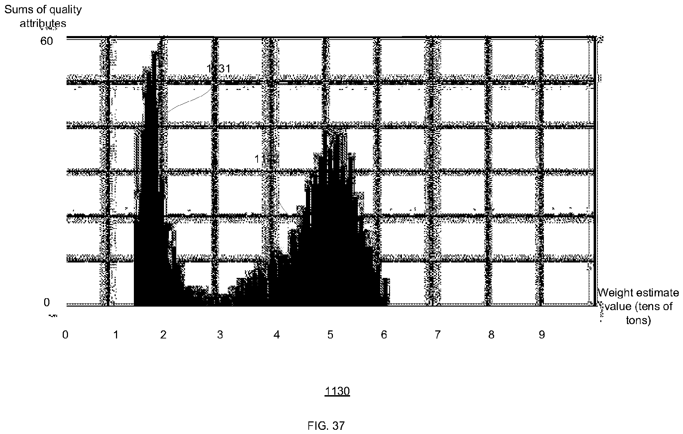

Figure 37 illustrates a histogram 1130 of a distribution related to weight estimates.

The histogram includes multiple bins that are associated with weight ranges. The value of each bin is a sum of quality attributes of path segments that are associated with the same weight range.

Figure 37 shows two distinct clusters 1131 and 1132.

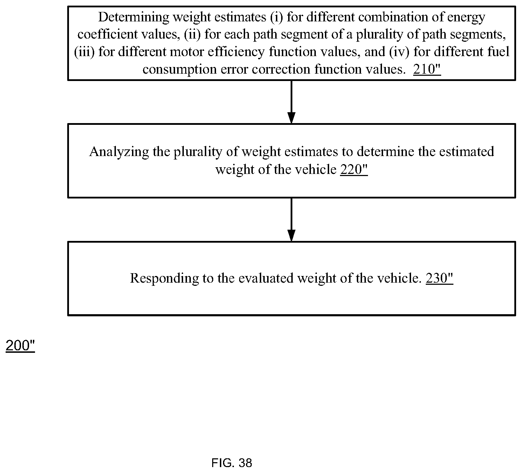

Figure 38 illustrates method 200".

Method 200" may start with step 210" of determining weight estimates (i) for different combination of energy coefficient values, (ii) for each path segment of a plurality of path segments, (iii) for different motor efficiency function values, and (iv) for different fuel consumption error correction function values, according to the following equation:

$$m = (ame \cdot fe \cdot fuel - k\_1\,x - k\_3\,xv\text{\textasciicircum}2)/(g\Delta h + ((\ [\![v\_2]\!]\ \text{\textasciicircum}2 - \ [\![v\_1]\!]\ \text{\textasciicircum}2))/2 + k\_2\,x + k\_4\,xv\text{\textasciicircum}2)\,.$$

It should be noted that step 210" may include determining weight estimates (i) for different combination of energy coefficient values, (ii) for each path segment of a plurality of path segments, and (iii) for different motor efficiency function values (given a certain fuel consumption error correction function).

Alternatively, step 210" may include determining weight estimates (i) for different combination of energy coefficient values, (ii) for each path segment of a plurality of path segments, and (iii) for different fuel consumption error correction function values (given a certain motor efficiency function).

Step 210" provides a plurality of weight estimates.

Step 210" may be followed of step 220" of analyzing the plurality of weight estimates to determine the estimated weight of the vehicle.

Step 220" may include at least one of the following:

    a. For each combination of energy coefficient values, each fuel consumption error correction function values and each motor efficiency function values:

        i. Calculating a distribution related to the weight estimates. The distribution may be provided by applying the combination of energy coefficient values to inputs received about multiple path segments. The distribution may be a distribution of weight estimates, may be a distribution that is responsive to quality attributes of the path segments, may be a distribution that ignores the quality attributes of the path segments, may include only information about path segments of enough quality, may be a distribution of values that represents quality attributes of weight estimates that belong to a bin associated with a range of weight estimates, may be a distribution of values of sums of quality attributes of weight estimates that belong to a bin associated with a range of weight estimates.

        ii. Finding one or more clusters. For example- if the weight of the vehicles was not changed during the learning period then it is expected to receive a single cluster. The number of typical and distinguishable weights of the vehicle (for example- empty or full) may determine the number of clusters.

        iii. Determining one or more statistical parameter of the clusters. For example - statistical variation, width of the cluster, and the like.

    b. Selecting, out of the different combinations of energy coefficient values, the different fuel consumption error correction function values, and the different motor efficiency function values (that are associated with different distributions), a selected combination of energy coefficient values, fuel consumption error correction function values and different motor efficiency function values. The selection is based on the one or more statistical parameters of the clusters. For example - the selected combination of energy coefficient values, fuel consumption error correction function values and different motor efficiency function values may provide the most statistically significant clusters.

    c. Using the weight estimate provided when using the selected combination of energy coefficients, fuel consumption error correction function values and different motor efficiency function values as the evaluated weight of the vehicle. The weight estimate may be one of the weight estimates of one or more path segments, may represent (for example be an average, median or any other representation of) the different weight estimates related to different path segments (when using the selected combination of energy coefficients), and the like.

Step 220" may be responsive to quality attributes of the path segments. For example, the distribution of the weight estimates may represent quality attributes and/or may ignore path segments of insufficient quality.

Step 220" may be followed by step 230" of responding to the evaluated weight of the vehicle.

Step 230" may include one or more steps out of:

    a. Updating an Autonomous Vehicles application.
    b. Updating an Advanced Driver Assistance Systems (ADAS) application.
    c. Reporting the estimated weight to the driver of the vehicle or to another entity (such as a vehicle supervisor).
    d. Using the evaluated weight of the vehicle to verify or better estimate the motor efficiency function.
    e. Using the evaluated weight of the vehicle to verify or better estimate the certain fuel consumption error correction function.
    f. Classifying the vehicle to a certain class of vehicles.

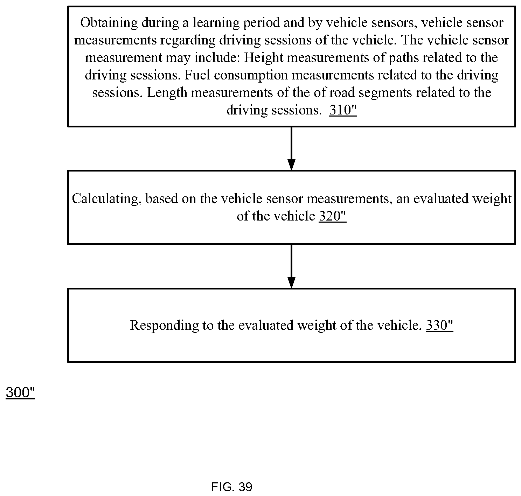

Figure 39 illustrates method 300".

Method 300" may start by step 310" of obtaining during a learning period and by vehicle sensors, vehicle sensor measurements regarding driving sessions of the vehicle.

The vehicle sensor measurement may include: Height measurements of paths related to the driving sessions. Fuel consumption measurements related to the driving sessions. Length measurements of the of road segments related to the driving sessions.

Step 310" may be followed by step 320" of calculating, based on the vehicle sensor measurements, an evaluated weight of the vehicle.

The calculating is based on values of energy coefficients that are indicative of energy wasted by the vehicle. Non-limiting example of the coefficients are k1, k2, k3 and k4 mentioned above.

Step 320" may include finding at least one out of the motor efficiency function and a fuel consumption error correction function.

Step 320" may include searching for values of the energy coefficients that provide at least one distribution related to weight estimates of the vehicle that fulfills at least one predefined statistical significance criterion.

The predefined statistical significance criterion may be a maximal statistical significance, may be a smallest standard deviation of at least one of the weight estimate distributions

Step 320" may include at least one of the following steps:

a. Evaluating values of the energy coefficients, by determining, for a plurality of path segment of the set of paths, an evaluated weight of the vehicle.

b. Determining weight estimates for each path segment of the plurality of path segments, according to the following equation:

$$m = \frac{ame \cdot fe \cdot fuel - k_1 x - k_3 x v^2}{g \Delta h + \frac{(v_2^2 - v_1^2)}{2} + k_2 x + k_4 x v^2} \; .$$

Step 320" may include at least one out of

a. Determining weight estimates for each path segment of the plurality of path segments and for different values of the energy coefficients.

b. Determining weight estimates for each path segment of the plurality of path segments, for different values of the energy coefficients and for different motor efficiency function values.

c. Determining weight estimates for each path segment of the plurality of path segments, for different values of the energy coefficients and for different fuel consumption error correction function values.

d. Determining estimates for each path segment of the plurality of path segments, for different values of the energy coefficients, for different motor efficiency function values and for different fuel consumption error correction function values.

e. Associating a quality attribute with each weight estimate.

f. Associating quality attribute with each weight estimate, wherein the at least one distribution related to weight estimates of the vehicle is responsive to the quality attribute assigned to each weight estimate.

g. Associating a quality attribute with each weight estimate, wherein the at least one distribution related to weight estimates of the vehicle is a histogram, wherein the histogram comprises bins, wherein each bin is associated with a weight estimate range and has a value that represents quality attributes of weight estimates that belong to the bin.

h. Associating a quality attribute with each weight estimate, wherein the at least one distribution related to weight estimates of the vehicle is a histogram, wherein the histogram comprises bins, wherein each bin is associated with a weight estimate range and has a value that represents a sum of quality attributes of weight estimates that belong to the bin.

i. Assigning quality attributes to at least some of the vehicle sensor measurements.

j. Assigning quality attribute to vehicle sensor measurements related to a certain path segment based on a difference related to velocities of the vehicle at a start and at an end of the certain path segment.

k. Assigning quality attribute to vehicle sensor measurements related to a certain path segment based on a maximal velocity of the vehicle during the certain driving session.

l. Ignoring vehicle sensor measurements obtained at path segments in which the vehicle descended.

Step 320" may be followed by step 330" of responding to the evaluated weight of the vehicle.

Any method of methods 100", 200" and 300" may be executed once, in a periodical manner, in a repetitive manner that is not periodic, in any time, in response to events and the like. For example - the methods (or at least one of the methods) may be executed each two months (or other period of time) in order to compensate for changes such as vehicle wear, and the like.

Any one of the method may receive or otherwise obtain one or more actual weight measurements, and the one or more actual weight measurements of the vehicle may be taken into account.

For example- the selection of any combination of energy coefficients (and/or any values related to a motor efficiency function and/or to a fuel consumption error correction function) may take into account the one or more actual weight measurements.

Thus, any one of methods 100", 200" and 300" may be a constrained or a nonconstrained learning process. The constraints being the one or more actual weight measurements.

For example- the selection may include applying a cost function that is responsive to the one or more actual weight measurements and to at least one predefined statistical significance criterion. For example - find the combination of energy coefficients (and/or any values related to a motor efficiency function and/or to a fuel consumption error correction function) that once applied with provide the clusters that are closest to the one or more actual weight measurements and are of maximal statistical significance (for example- are the narrowest clusters).

Any one or method 100", 200" and 300" may involve applying a machine learning process - especially a deep learning process.

A learning period may be any period of time during which measurements are made, and the measurements may be used for estimating the weight of the vehicle.

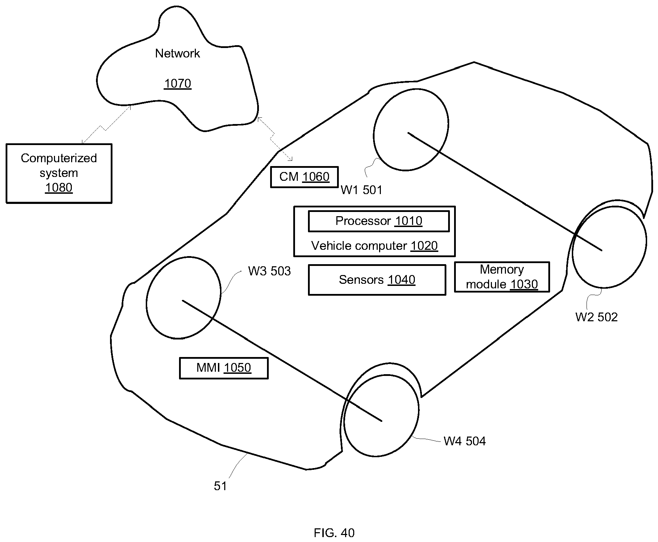

Figure 40 illustrates a vehicle 51, network 1070 and computerized system 1080.

Vehicle 51 may include vehicle sensors such as sensors 1040, a memory module 1030, a vehicle computer 1020 that includes a processor 1010, a man machine interface 1050, a communication module 1060 and wheels W1-W4 501-504.

Man machine interface (MMI) 1050 may include a screen, a holographic screen, a speaker, a camera, an audio system and/or an audio-visual system, a keyboard, and the like.

The vehicle 51 may be any type of vehicle.

Sensors 1040 may include, at least speed sensors, height sensors, distance sensors and fuel consumption sensors.

Sensors 1040 are configured to provide height measurements of paths related to the driving sessions, (b) fuel consumption measurements related to the driving sessions, (c) length measurements of the of road segments related to the driving sessions.

Sensors 1040 may include, for example, at least one out of an accelerometer, a speedometer, a thermometer, a window status sensor, an air condition module/ fan status sensor, an engine sensor (such as fuel consumption sensor) or any other sensor.

Vehicle computer 1020 may monitor the status of various components and/or systems of the vehicle, may control various components and/or systems of the vehicle, and may participate (using processor 1010) in the execution of any of the methods illustrated in the specification.

The communication module (CM) 1060 may communicate with computerized system 1080 via network 1070.

The communication module 1060 may be a short-range communication module, a long-range communication module such as a radio frequency communication module, a satellite communication module, a cellular communication network, and the like.

Vehicle computer 1020 may include a processor and a memory unit. The processor may include hardware components and may be a general-purpose processor, an image processor, a hardware accelerator, an FPGA, an ASIC, and the like. The memory unit may be a non-volatile memory.

The computerized system 1080 may be located in a cloud computing environment, may include one or more servers or any combination of computers.

Any step that includes processing, calculating and the like (and is illustrated in the application) may be executed by the vehicle computer 1020, by processor 1010 and/or by computerized system 1080.

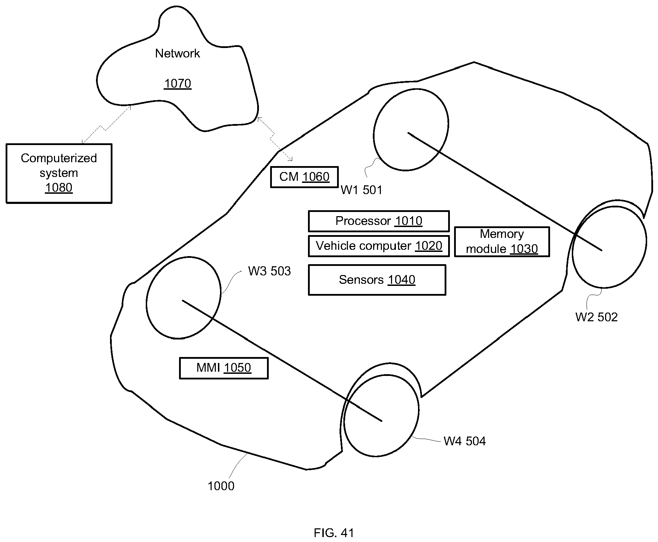

Figure 41 illustrates a vehicle 51, network 1070 and computerized system 1080. In figure 12 the processor 1010 is not included in the vehicle computer 1030. The vehicle computer 1030 may or may not participate in the execution of any of the method illustrated above.

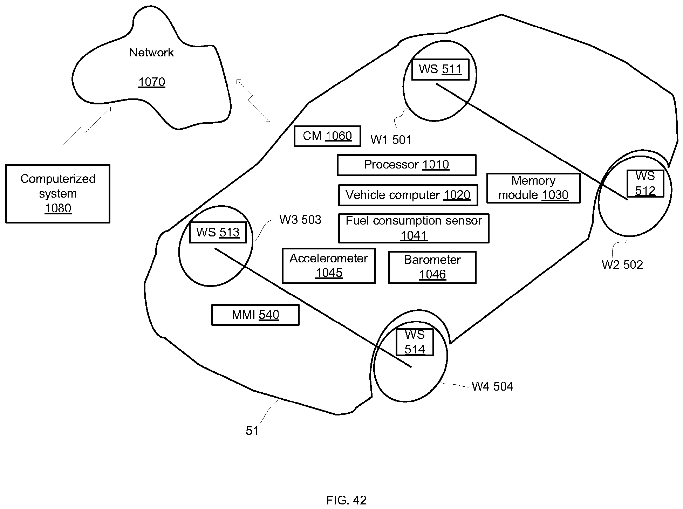

Figure 42 illustrates a vehicle 51, network 1070 and computerized system 1080.

In figure 42 the sensors 1040 include a fuel consumption sensor 1041, an accelerometer 1045, a barometer 1046 and four-wheel speed sensors WS 511-514.

Characterizing a vehicle based on a limited number of energy coefficients, and a compact representation of the motor efficiency function and a fuel consumption error correction function - is highly efficient in terms of storage resources.

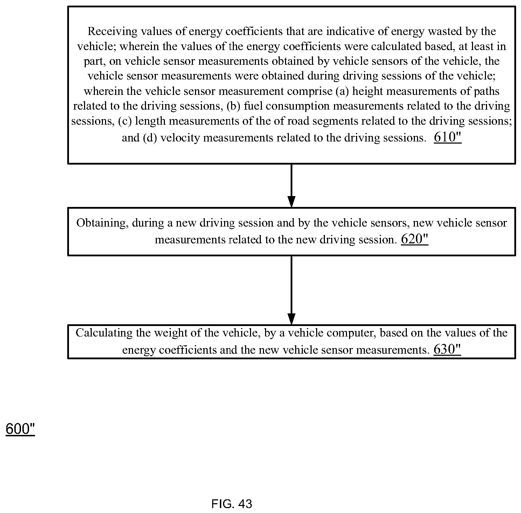

Figure 43 illustrates method 600".

Method 600" may be executed by a vehicle computer (any computer located within the vehicle).

Method 600" may include step 610" of receiving values of energy coefficients that are indicative of energy wasted by the vehicle; wherein the values of the energy coefficients were calculated based, at least in part, on vehicle sensor measurements obtained by vehicle sensors of the vehicle, the vehicle sensor measurements were obtained during driving sessions of the vehicle; wherein the vehicle sensor measurement comprise (a) height measurements of paths related to the driving sessions, (b) fuel consumption measurements related to the driving sessions, (c) length measurements of the of road segments related to the driving sessions; and (d) velocity measurements related to the driving sessions.

Step 610" may also include at least one out of (i) receiving information regarding a motor efficiency function of the vehicle, and (ii) receiving information regarding a fuel consumption error correction function of the vehicle.

Step 610" may be followed by step 620" of obtaining, during a new driving session and by the vehicle sensors, new vehicle sensor measurements related to the new driving session.

Step 620" may be followed by step 630" of calculating the weight of the vehicle, by a vehicle computer, based on the values of the energy coefficients and the new vehicle sensor measurements.

The calculating may also be responsive to at least one out of (i) information regarding a motor efficiency function of the vehicle, and (ii) information regarding a fuel consumption error correction function of the vehicle.

The information regarding the motor efficiency function may be compact. It may include motor efficiency function coefficients. Various examples of such coefficients are provided in the text above.

The information regarding the fuel consumption error correction function may be compact. It may include fuel consumption error correction function coefficients. Various examples of such coefficients are provided in the text above.

Step 630" may be performed in real time - for example within few seconds, less than a minute, few minutes, and the like.

Method 600" may include transmitting the new vehicle sensor measurements related to the new driving session. These new measurements may be used to refine, update and/or verify the previously provided c values of energy coefficients.

Step 630" may include calculating the weight, for a new path segments of the new session, by applying the following equation:

$$m = \frac{ame \cdot fe \cdot fuel - k_1 x - k_3 x v^2}{g \Delta h + \frac{(v_2{}^2 - v_1{}^2)}{2} + k_2 x + k_4 x v^2}$$

wherein the group of energy coefficients comprises $k_1$, $k_2$, $k_3$ and $k_4$;

wherein ame is a value of the estimated motor efficiency function;

wherein $v_2$ is a velocity of the vehicle at an end of the new path segment;

vi is a velocity of the vehicle at a start of the new path segment;

v represents at least one value of a velocity of the vehicle when driving over the new path segment;

x is a length of the new path segment;

$\Delta$h is a height difference between the end and the start of the new path segment; and

fuel is an error corrected fuel consumption related to the new path segment.

Calculating in real time the real weight of the vehicle using few sensors readings and the limited number of energy coefficients, and a compact representation of the motor efficiency function and a fuel consumption error correction function - is highly efficient in terms of storage resources and of computerized resources.

GRIP

There may be provided a system, method and a computer program product for determining a grip related to a vehicle and a path segment, the determination takes into account the parameters of the path as well as the parameters of the vehicle.

Some of the following example assume that a vehicle includes four wheels. It should be noted that the number of wheels may differ from four.

A grip event is an event that is undergone by the vehicle and may provide information for estimation of a grip of a path segment. Non-limiting example of grip events includes a breaking event, turning of the vehicle, passing an obstacle, and reaching a predefined vehicle velocity. For simplicity of explanation some of the following examples will refer to a grip event that is a breaking event.

In the following example "normalizing" involves compensating for parameters that are specific to a certain vehicle and/or other circumstances that may affect a certain grip related measurement. De-normalizing reverses the normalizing process.

Multiple vehicles may pass over a path segment and may calculate normalized grip related information. A computerized system may receive normalized grip related information from multiple vehicles.

A path segment may be a segment of a path that may be between few centimeters long to few meters long and even more. The grip along a single path segment may be the same or may slightly deviate.

The computerized system may calculate normalized path segment grip information and may transmit the normalized path segment grip information to the vehicles.

The normalized path segment grip information may be calculated using crowd sourcing, bit data techniques, machine learning and/or any other techniques.

Obtaining and processing normalized path segment grip information from multiple vehicles may increase the accuracy of the calculation of path segment grip information. Furthermore - obtaining and processing normalized path segment grip information from multiple vehicles may assist in providing path segment grip information for a vehicle that did not pass over the path segment.

The vehicles may monitor vehicle parameters and may de-normalize the normalized path segment grip information to provide actual path segment grip information that may reflect the grip parameters of the path segment, given the current vehicle parameters.

The path segment grip information may include a grip level of the path segment, a residual grip, and the like.

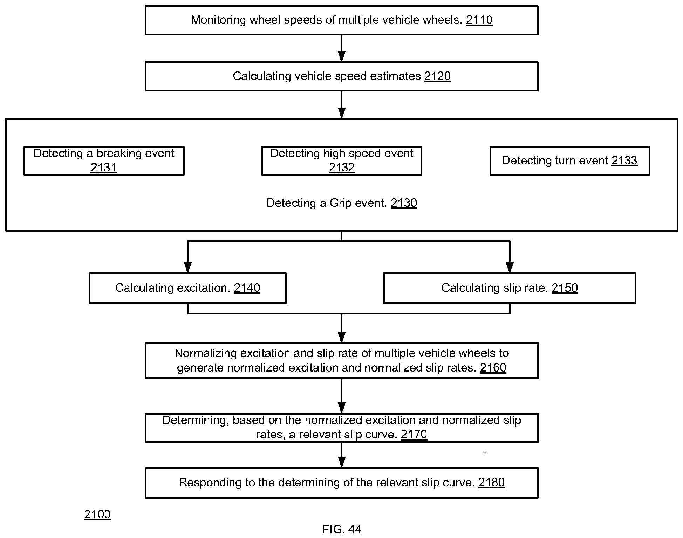

Figure 44 illustrates an example of method 2100.

Method 2100 may be executed by a vehicle computer (a computer that is located within a vehicle), by a computerized system located outside the vehicle- or by both. Executing method 2100 by a vehicle computer reduces the amount of information transmitted from the vehicle.

Method 2100 may start by step 2110 of monitoring wheel speeds of multiple vehicle wheels.

Any wheel sensor may be used. Especially - a wheel speed sensor may be allocated for each wheel.

Step 2110 may be followed by step 2120 of calculating vehicle speed estimates. The estimate may be based on the wheel speed signals from the multiple wheel speed sensors.

Step 2120 may be followed by step 2130 of detecting a grip event. The grip event may be detected by monitoring the vehicle speed but may be detected by monitoring speeds of one or more wheels.

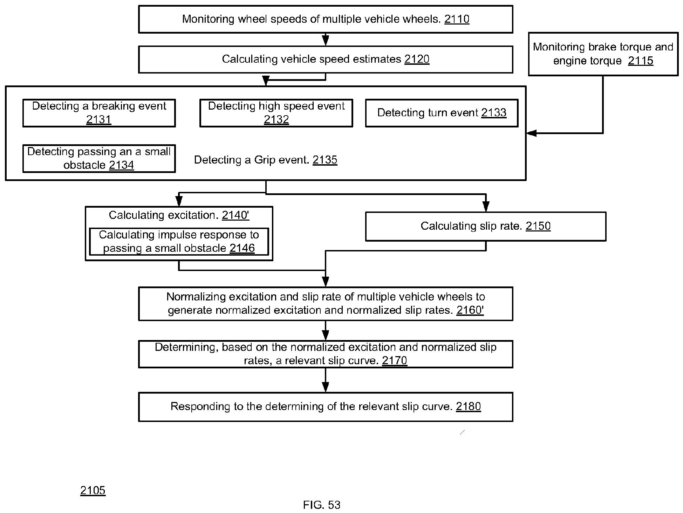

Figure 44 illustrates three examples of grip events - breaking event 2131, high speed event 2132 (for example reaching a certain speed- for example 80 km/h) and a turn 2133. Other grip events may be detected. For example- and as illustrated in figure 53 - a grip event may be passing an obstacle.

Step 2130 may be followed by step 2140 of calculating excitation, and by step 2150 of calculating a slip rate.

The slip rate may be calculated per wheel and is the relation between the vehicle speed to the wheel speed. During step 2150 a high pass filter may be applied on the wheel speed.

Steps 2140 and 2150 may be followed by step 2160 of normalizing excitation and slip rate of multiple vehicle wheels to generate normalized excitation and normalized slip rate.

The normalized excitation and normalized slip rate are usually far away from excitation and grip values that represent a loss of grip. For example, assuming that the grip is lost at an excitation of twenty percent and an excitation of one -the normalized excitation does not exceed a half and that the and normalized slip rate is lower than ten percent.

Method 2100 may involve estimating the residual grip based on these normalized excitation and normalized slip rate.

For example - the method may estimate the residual grip by finding a relevant slip curve, and calculating the residual grip by comparing between the current grip and the loss of grip point associated with the relevant grip curve.

Step 2160 may be followed by step 2170 of determining, based on the normalized excitation and normalized slip rate, a relevant slip curve. Each slip curve includes a mapping between slip rate values and excitation values. Step 2170 fits the normalized excitation and normalized slip rates to the relevant slip curve.

Step 2170 may select the relevant slip curve out of a finite group of N (for example 210) possible slip curves and/or may extrapolate or otherwise calculated a new slip curve based on the slip curves of the finite curves.

Step 2180 may include responding to the determining of the relevant slip curve. Step 2180 may include storing relevant slip curve information (such as an index or other identifier of the relevant slip curve), transmitting the relevant slip curve, calculating an actual path segment grip information, and the like.

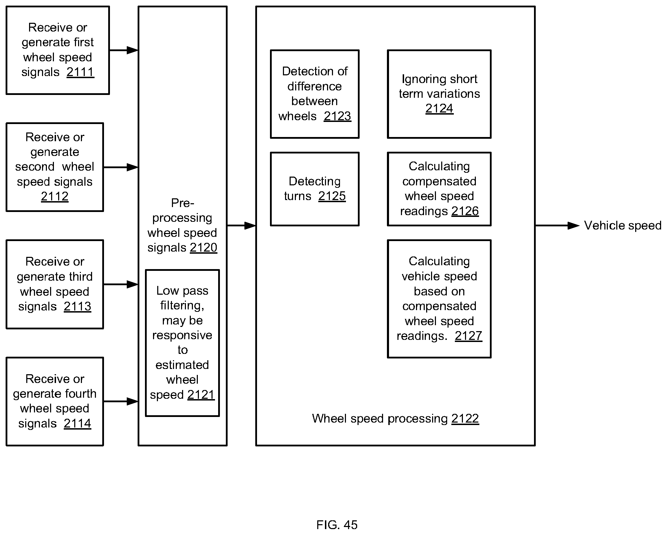

Figure 45 illustrates an example of step 2120.

Step 2120 may include the following steps:

a. Receiving or generating first till fourth wheel speed signals (2111-2114).
b. Pre-processing wheel speed signals 2120. This may include low pass filtering wheel speed readings (2121), the low pass filtering may be responsive to the estimated wheel speed.
c. Wheel speed processing 2122.

The wheel speed processing may include at least one of the following:

a. Detection of difference between wheels. 2123. This step may include detecting long term (more than few hours) differences between wheels - for example due to changes in air pressure, changes in tire health and the like.
b. Ignoring short-term variations 2124. Short-term may be few seconds or less. The short-term variations may be caused to to small slips. The ignoring may include ignoring all wheel speed measurements obtained during a short-term variation of a wheel speed of any of the wheels.
c. Detecting turns. 2125.
d. Calculating compensated wheel speed readings. 2126.
e. Calculating vehicle speed based on compensated wheel speed readings 2127.

Step 2124 may include detecting a disagreement between the wheel speeds that is not related to a turn. If a turn is detected, then the wheel speeds measured during the turn may be processed to determine the grip.

Step 2120 may include maintaining a factor (for example ratio between wheel speeds of a current wheel and of a reference wheel), and tuning this factor along time (like control loop with very low pass filter). Then, if the momentary factor is larger / smaller than this factor by more than a certain amount (for example- five percent) then a short-term variation is detected. Following step 2120, the method may keep updating the factor very gently (i.e. using a very low pass filter) and use the factor during step 2127.

Step 2127 may include calculating (after ignoring wheel speed readings - as indicated in step 2124) wheel speeds, applying the factors to all wheel speeds (except the reference wheel) to provide weighted wheel speeds and then applying a function (such as but not limited to averaging) on the weighted wheel speeds to provide the vehicle speed.

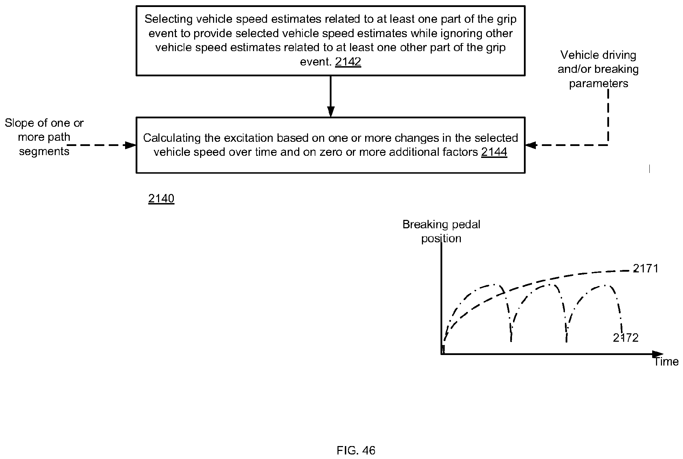

Figure 46 illustrates an example of step 2140.

Step 2140 may include step 9142 and/or step 9144.

Step 2142 may include selecting vehicle speed estimates related to at least one part of the grip event to provide selected vehicle speed estimates while ignoring other vehicle speed estimates related to at least one other part of the grip event. For example- the grip event may last few seconds, and multiple wheel speed readings may be obtained per second (for examplefifty till one-hundred-wheel speed readings per second).

Step 2142 may include selecting some of the wheel readings while ignoring some other wheel readings.

Any selection rule may be applied. For example- ignoring wheel speed readings obtained during a start period of the grip event and/or during an end period of the grip event (for example - during the first twenty percent of the duration of the grip event and/or the last fifteen percent of the duration of the grip event), ignoring wheel speed events that are associated with certain acceleration and/or deceleration values, waiting till the acceleration deceleration or speed reaches a steady state (and selecting the steady state readings) and the like.

Step 2144 may include calculating the excitation based on one or more changes in the selected vehicle speed over time and on zero or more additional factors.

The zero or more additional factors may be used to normalize the excitation value. The excitation value may represent the one or more changes in any manner for example - the overall change in the vehicle speed during a selected period of time that includes the selected vehicle speed estimates divided by the duration of the selected period of time.

The additional factors may include vehicle driving and/or breaking parameters, slopes of one or more path segments (over which the vehicle passed), and the like.

The breaking parameters may reflect the manner in which the brakes of the vehicle were activated - pumping or not, any change of the position of the brake pedal, and the like. For example- the breaking parameters may reflect at least one of The average or minimal or maximal change in the position of the brake pedal over time.

Different breaking patterns (for example patterns 2171 and 2172) my result in different excitation. The slope may be represented by at least one of The average or minimal or maximal slope of the path segment.

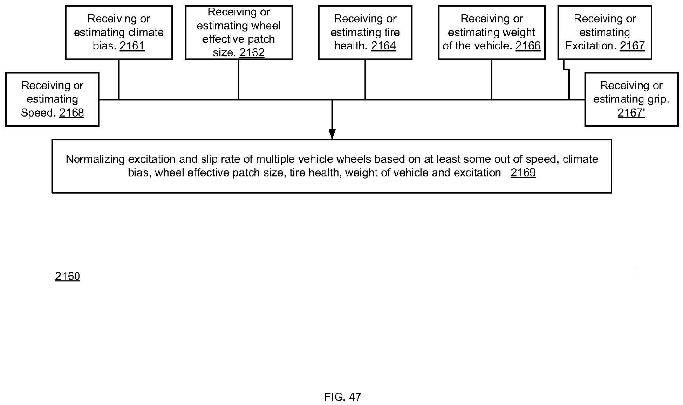

Figure 47 illustrates an example of step 2160.

Step 2160 may include step 2169. Step 2169 may be preceded by at least one of steps 2161, 2162, 2163, 2164, 2165, 2166, 2167, 2167', and 2168.

Step 2161 may include receiving or estimating climate bias. A climate bias may represent change in the grip that are related to climate changes such as rain, fog, temperature, and the like. The climate bias may be measured by climate sensors (such as humidity sensor, barometer, temperature sensor, and the like) and/or may be sensed by detected by finding similar differences between grip levels experienced by multiple vehicles in relation to the same path segment within a limited time frame (for example of thirty minutes to few hours).

Step 2162 may include receiving or estimating wheel effective patch size.

Step 2164 may include receiving or estimating tire health. The tire health is expected to change very slowly (except in a case of a flat tire) and may be represented as a relatively constant bias over a long period of time.

Step 2166 may include receiving or estimating a weight of the vehicle. A non-limiting example of a weight estimate is illustrated in US provisional patent application serial numbers 62/556,447 filing date September 10, 2017.

Step 2167 may include receiving or estimating excitation. The excitation may be taken from step 2140.

Step 2167' may include receiving or estimating grip.

Step 2168 may include receiving or estimating speed. The speed may be obtained from step 2120.

Step 2169 may include normalizing excitation and slip rate of multiple vehicle wheels to generate normalized excitation and normalized slip rate. The normalizing may be responsive to at least one out of speed, climate bias, wheel effective patch size, tire health, weight of vehicle and excitation.

The normalizing may involve comparing the information sensed by different vehicles when passing the same road segment, and compensating the climate bias, wheel effective patch, tire health, weight of the vehicle, excitation, and the like.

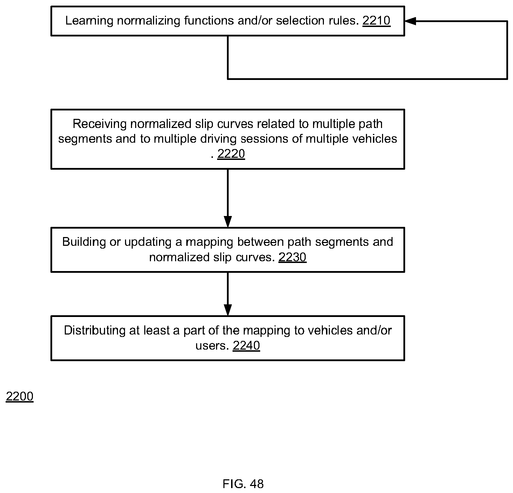

Figure 48 illustrates method 2200. Method 2200 may be executed by a computerized system located outside the vehicle, by the vehicle computer, by both vehicle computer and the computerized system, by multiple vehicle computers of different vehicles, and the like.

Method 2200 may include at least some of steps 2210, 2220, 2230 and 2240.

Step 2210 may include learning normalizing functions and/or selection rules. The normalizing functions are used, for example, during step 2169. The selection rules are used, for example, during step 2142.

Step 2210 may include learning de-normalizing functions. The de-normalizing functions may reverse the operation of the normalizing function. Step 2210 may include processing normalized path segment grip information obtained during driving sessions - in which information about weight, effective patch size, tire health, excitation, speed and/or climate are known. The normalization functions may be learnt using driving sessions with different values of weight, effective patch size, tire health, excitation, speed and/or climate are.

Step 2220 may include receiving normalized slip curves related to multiple path segments and to multiple driving sessions of multiple vehicles.

Step 2230 may include building or updating a mapping between path segments and normalized slip curves. The mapping may take into account the information received during step 2220. Step 2230 may involve using crowd sourcing, big data, machine learning or any other technique.

Step 2230 may include averaging (or applying any other statistical function) on the information obtained during step 2220.

Step 2240 may include distributing at least a part of the mapping to the vehicles and/or users. When a vehicle is located at a certain region then it may receive information related to that region, one or more adjacent regions, and the like.

After a vehicle receives the mapping then the vehicle may use the mapping and the current state of the vehicle and of one or more path segments to provide actual path segment grip information.

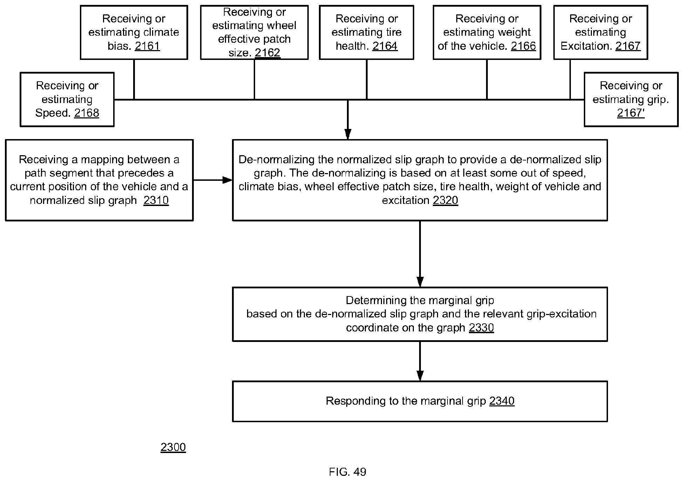

Figure 49 illustrates method 2300.

Method 2300 may include step 2320. Step 2320 may be preceded by step 2320 and at least one of steps 2161, 2162, 2163, 2164 2165, 2166, 2167, 2167' and 2168.

Step 2320 may include de-normalizing the normalized slip graph to provide a de-normalized slip graph. The de-normalizing is based on at least some out of speed, climate bias, wheel effective patch size, tire health, weight of vehicle and excitation.

Step 2320 may be followed by step 2330 of Determining the marginal grip based on the de-normalized slip graph and the relevant grip-excitation coordinate on the slip graph.

Step 2340 may be followed by step 2340 of responding to the marginal grip. This may include automatically driving the vehicle, informing the user what is the vehicle speed, preventing the ABS system from working - by maintaining the grip level below the marginal grip value that activates the ABS, and the like.

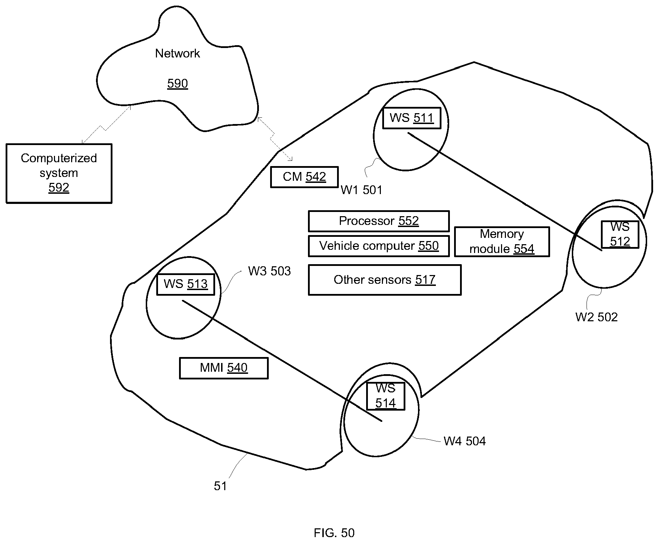

Figure 50 illustrates the vehicle as including first wheel W1 501, second wheel W2 502, third wheel W3 503, fourth wheel W4 504, first wheel sensor WS 511, second wheel sensor WS 512, third wheel sensor WS 513, fourth wheel sensor WS 514, other sensors (such as but not limited to at least one out of climate sensors, one or more brake sensors, one or more engine sensors, fuel consumption sensors, accelerometer, and the like) vehicle computer 550, processor 552, memory module 554, communication module (CM) 542, and man machine interface (MMI) 540.

MMI 540 may provide information to the driver such as driving suggestions.

The other sensors 517 may sense various parameters related to the vehicle and/or road conditions.

The vehicle computer 550 may monitor the status of various components and/or systems of the vehicle, may control various components and/or systems of the vehicle and may or may not participate in the execution of any of the methods illustrated in the specification.

The communication module 542 may communicate with computerized system 592 via network 590.

The communication module 542 may be a short-range communication module, a long-range communication module such as a radio frequency communication module, a satellite communication module, a cellular communication network, and the like.

Vehicle computer 550 may include a processor and a memory unit. The processor may include hardware components and may be a general-purpose processor, an image processor, a hardware accelerator, an FPGA, an ASIC, and the like. The memory unit may be a non-volatile memory.

The computerized system 592 may be located in a cloud computing environment, may include one or more servers or any combination of computers.

Any step that includes processing, calculating and the like (and is illustrated in the application) may be executed by the vehicle computer 550, by processor 552 and/or by computerized system 592.

Memory nodule 554 may store any information and/or programs required for executing any of the methods of this application.

Various components of vehicle may execute method 2100 and/or method 2300.

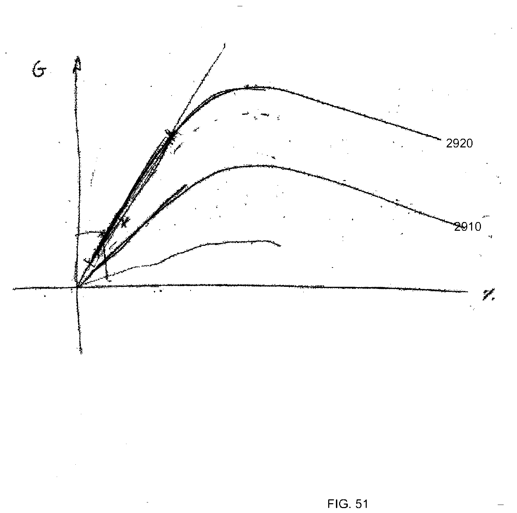

Figure 51 illustrates an example of two normalized slip graphs 2910 and 2920 that represent different path segment conditions.

Step 2170 may include selecting one of these slip graphs or generating a new slip graph based on at least one of these slip graphs.

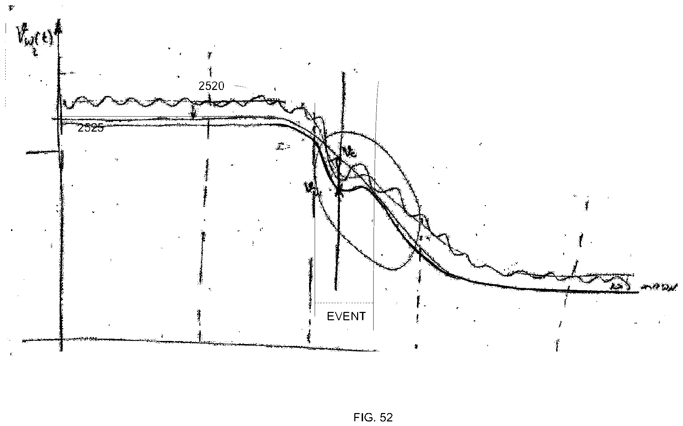

Figure 52 illustrates an example of a grip event, a vehicle speed 2525 and a wheel speed 2520 during the grip event, before the grip event and after the grip event.

The grip may be evaluated based on an impulse response of the vehicle to an small obstacle. The grip may be calculated in view of one or more of the passage of a small obstacle, any any other excitation event (such as breaking event, high speed event, turn event)

When the vehicle drives over a small obstacle attached to the road surface, the vehicle responds to it as if it was excited. The response (also referred to as an impulse response) characteristics, as derived from the sensors, depends (among other factors) on the grip level between the vehicle and the road surface right after the small obstacle.

Small obstacles have the following nature:

a. Structural - step up or/or step down when driving over it. A step up followed by a step down may represent a small bump.

b. Longitudinal short in comparison to tire perimeter.

Examples:

a. Pavement crack.

b. Bridge stitch.

c. Small stone.

d. Wood branch.

This small obstacle will normally impose a force over the vehicle that can be separate into:

a. Vertical acceleration - due to slight "jump" over the small obstacle.

b. Horizontal deceleration - due to "bumping" into a ramp.

These forces (accelerations) are of momentary nature, normally they last over a sub-second period. Then, the vehicle goes through "after-effect" that is the response period.

When stepping out of the small obstacles, following the vertical and horizontal accelerations described above, the vehicle goes through a restraint period, where it normally return to its steady state - e.g. cruising on a smooth surface.

In order to detect and characterize the impulse nature and then analyze the response period, the output of the following sensors may be read:

a. Wheel speed.

b. Brake torque.

c. Engine Torque.

The following parameters affect the signal characteristics and features:

a. Vehicle Weight.

b. Tire pressure.

c. Tire Health (stiffness).

d. Vehicle speed.

e. Dampers.

These sensors may be actual sensors and/or virtual sensors that their output is calculated based on the readings of other actual sensors.

The readings of the sensors should be normalized in order to compensate for the parameters (such as those mentioned above) that may affect the readings of the sensors.

For example - the heavier the vehicle is, the smaller are the wheel speed changes due to the same small obstacle. Same for lower tire pressure or soft dumpers / suspensions. The faster the vehicle encounter the small obstacle, the bigger are the wheel speed changes.

Figure 53 illustrates method 2105.

Method 2105 may be executed by a vehicle computer (a computer that is located within a vehicle), by a computerized system located outside the vehicle- or by both. Executing method 2100 by a vehicle computer reduces the amount of information transmitted from the vehicle.

Method 2105 may start by steps 2110 and 2115.

Step 2115 may include monitoring break torque and engine torque.

Step 2110 may include monitoring wheel speeds of multiple vehicle wheels.

Any wheel sensor may be used. Especially - a wheel speed sensor may be allocated for each wheel.

Step 2110 may be followed by step 2120 of calculating vehicle speed estimates. The estimate may be based on the wheel speed signals from the multiple wheel speed sensors.

Step 2120 and step 2115 may be followed by step 2130' of detecting a grip event. The grip events may include a breaking event, a high speed event and a turn event. These grip events may be detected using the output of step 2120. The grip event may be detected by monitoring the vehicle speed but may be detected by monitoring speeds of one or more wheels.

A grip event may include passing an small obstacle and the impulse response of the vehicle to the passing of the small obstacle may be detected based on the output of steps 2115 and 2120. The breaking event may also be detected based on the output of step 2115.

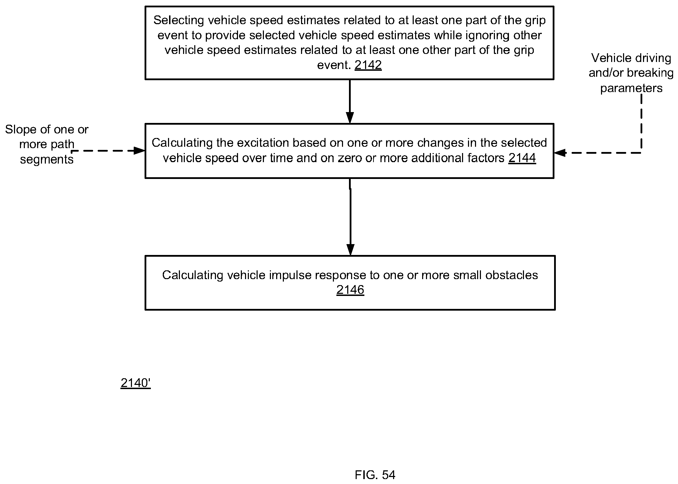

Figure 54 illustrates four examples of grip events - breaking event 2131, high speed event 2132 (for example reaching a certain speed- for example 80 km/h) and a turn 2133, and passing an small obstacle 2134.

Step 2130' may be followed by step 2140' of calculating excitation, and by step 2150 of calculating a slip rate.

Step 2140' may include step 2146 of calculating an impulse response of the vehicle to passing an small obstacle.

The slip rate may be calculated per wheel and is the relation between the vehicle speed to the wheel speed. During step 2150 a high pass filter may be applied on the wheel speed.

Steps 2140' and 2150 may be followed by step 2160' of normalizing excitation and slip rate of multiple vehicle wheels to generate normalized excitation and normalized slip rate.

Step 2160' may include normalizing the impulse response based on

The normalized excitation and normalized slip rate are usually far away from excitation and grip values that represent a loss of grip. For example, assuming that the grip is lost at an excitation of twenty percent and an excitation of one -the normalized excitation does not exceed a half and that the and normalized slip rate is lower than ten percent.

Method 2105 may involve estimating the residual grip based on these normalized excitation and normalized slip rate.

For example - the method may estimate the residual grip by finding a relevant slip curve, and calculating the residual grip by comparing between the current grip and the loss of grip point associated with the relevant grip curve.

Step 2160' may be followed by step 2170 of determining, based on the normalized excitation and normalized slip rate, a relevant slip curve. Each slip curve includes a mapping between slip rate values and excitation values. Step 2170 fits the normalized excitation and normalized slip rates to the relevant slip curve.

Step 2170 may select the relevant slip curve out of a finite group of N (for example 210) possible slip curves and/or may extrapolate or otherwise calculated a new slip curve based on the slip curves of the finite curves.

Step 2180 may include responding to the determining of the relevant slip curve. Step 2180 may include storing relevant slip curve information (such as an index or other identifier of the relevant slip curve), transmitting the relevant slip curve, calculating an actual path segment grip information, and the like.

Figure 54 illustrates an example of step 2140'.

Step 2140' may include step 9142 and/or step 9144. Step 2140' includes step 2146 of calculating an impulse response of the vehicle to passing an small obstacle.

Step 2142 may include selecting vehicle speed estimates related to at least one part of the grip event to provide selected vehicle speed estimates while ignoring other vehicle speed estimates related to at least one other part of the grip event. For example- the grip event may last few seconds, and multiple wheel speed readings may be obtained per second (for examplefifty till one-hundred-wheel speed readings per second).

Step 2142 may include selecting some of the wheel readings while ignoring some other wheel readings.

Any selection rule may be applied. For example- ignoring wheel speed readings obtained during a start period of the grip event and/or during an end period of the grip event (for example - during the first twenty percent of the duration of the grip event and/or the last fifteen percent of the duration of the grip event), ignoring wheel speed events that are associated with certain acceleration and/or deceleration values, waiting till the acceleration deceleration or speed reaches a steady state (and selecting the steady state readings) and the like.

Step 2144 may include calculating the excitation based on one or more changes in the selected vehicle speed over time and on zero or more additional factors.

The zero or more additional factors may be used to normalize the excitation value. The excitation value may represent the one or more changes in any manner for example - the overall change in the vehicle speed during a selected period of time that includes the selected vehicle speed estimates divided by the duration of the selected period of time.

The additional factors may include vehicle driving and/or breaking parameters, slopes of one or more path segments (over which the vehicle passed), and the like.

The breaking parameters may reflect the manner in which the brakes of the vehicle were activated - pumping or not, any change of the position of the brake pedal, and the like. For example- the breaking parameters may reflect at least one of The average or minimal or maximal change in the position of the brake pedal over time.

Different breaking patterns (for example patterns 2171 and 2172) my result in different excitation. The slope may be represented by at least one of The average or minimal or maximal slope of the path segment.

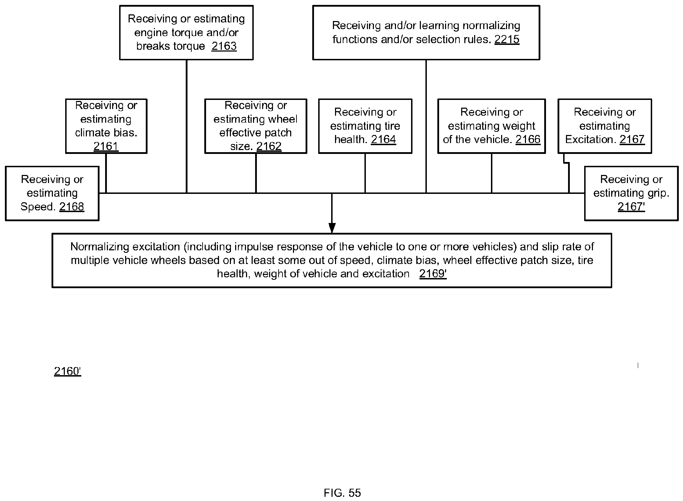

Figure 55 illustrates an example of step 2160'.

Step 2160' may include step 2169. Step 2169 may be preceded by at least one of steps 2161, 2162, 2163, 2164, 2165, 2166, 2167, 2167', and 2168. Step 2160' may be preceded by step 2215 (also illustrated in figure 55). Step 2215 may belong to method 2200.

Step 2161 may include receiving or estimating climate bias. A climate bias may represent change in the grip that are related to climate changes such as rain, fog, temperature, and the like. The climate bias may be measured by climate sensors (such as humidity sensor, barometer, temperature sensor, and the like) and/or may be sensed by detected by finding similar differences between grip levels experienced by multiple vehicles in relation to the same path segment within a limited time frame (for example of thirty minutes to few hours).

Step 2162 may include receiving or estimating wheel effective patch size.

Step 9162 may include receiving or estimating engine torque and/or breaks torque.

Step 2164 may include receiving or estimating tire health. The tire health is expected to change very slowly (except in a case of a flat tire) and may be represented as a relatively constant bias over a long period of time.

Step 2166 may include receiving or estimating a weight of the vehicle. A non-limiting example of a weight estimate is illustrated in US provisional patent application serial numbers 62/556,447 filing date September 10, 2017.

Step 2167 may include receiving or estimating excitation. The excitation may be taken from step 2140.

Step 2167' may include receiving or estimating grip.

Step 2168 may include receiving or estimating speed. The speed may be obtained from step 2120.

Step 2169 may include normalizing excitation and slip rate of multiple vehicle wheels to generate normalized excitation and normalized slip rate. The normalizing may be responsive to at least one out of speed, climate bias, wheel effective patch size, tire health, weight of vehicle and excitation.

The normalizing may involve comparing the information sensed by different vehicles when passing the same road segment, and compensating the climate bias, wheel effective patch, tire health, weight of the vehicle, excitation, and the like.

Step 2169 may be preceded by step 2215 of receiving and/or learning normalizing functions and/or selection rules.

Step 2215 may include conducting a training stage and/or receiving outputs learnt during the training stage.

Step 2215 may include includes applying factors and look-up tables over the features extracted from the sensors' signals. These factors and look-up tables are learnt and built during training stage.

Given a specific vehicle type, one or more tests may be conducted on a controlled environment / proving ground, to derive the signals feature.

The one or more tests may be conducted over a pre-defined small obstacles, such as pre-define small obstacles of The following types:- step up, step down, bump (for example a small bump).

There may be multiple small obstacles per type, wherein the small obstacles may differ from each other by at least one out of step height, length of bump, orientation in relation to the surroundings, and the like.

The tests may be done one one vehicle type that exhibit at least one different value of weight, speed, tire pressure, dumpers settings, and the like.

The climate may change between certain tests.

The small obstacles may be positioned within vicinities of different grip values-(different values of Mue).

During each tests various sensor readings are read (for example wheel speed, brake torque and engine torque), to provide impulse responses of the vehicle when passing an small obstacle.

The relationship between sensors' signals and their features, vehicle parameters (weight, speed, tire pressure, dampers) and estimated grip level is calculated. This relationship may be referred to as a normalizing function.


AQUAPLANING (AP)

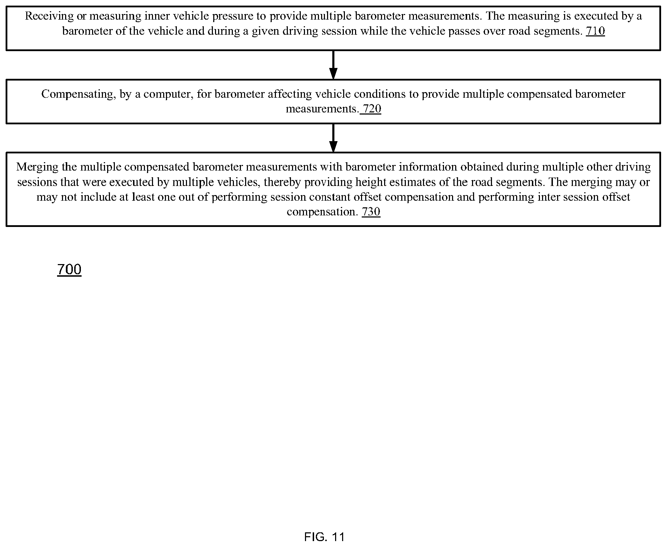

The text above and at least some of figures 1-55 describe how to calculate parameters of a vehicle (Vehicle DNA) and how to calculate parameters of the road (SurfaceDNA).

Any reference to an occurrence of an aquaplaning event may be interpreted as related to an actual occurrence of an aquaplaning event or to an estimated (but not actual) occurrence of an aquaplaning event. For example- when planning a path the different road segments of the path may be selected based on the possibility of an occurrence of an aquaplaning event . Yet for another example - when a vehicle senses a physical event that is an aquaplaning event - this is treated as an actual aquaplaning event.

The estimation of an occurrence of an aquaplaning event of a certain road segment may be based on the calculated and/or estimated characters of the road segment (for example physical events related to the road segment), on an estimated and/or calculated characters of the rain, and on an estimated and/or calculated parameter of the vehicle, and a mapping between (i) the estimated characters of the rain, (ii) the characters of a road segment, (iii) the occurrence of the aquaplaning, and (iv) an estimated and/or calculated parameter of the vehicle (for exampletire health).

The mapping may be calculated and/or learnt based on previous driving sessions on various road segments, on information regarding aquaplaning events that were detected in various manners, and the like.

The effect of the aquaplaning on the vehicle may be a function of various parameterssuch as speed, change of speed, weight of the vehicle, tire health, nominal grip of the road segment, and the like.

The aquaplaning may reduce the nominal grip of a road segment - and thus an amended grip level of a road segment should be calculated and should be taken in account when driving over the road segment (for example-determining automatically a maximal driving speed over the road segment, determining whether to operate in autonomous mode or in a nonautonomous mode, and the like. The nominal grip of a road segment may be calculated, for example, by any of the methods mentioned above for calculating grip (for example method 2100 of figure 44). A grip degradation attributed to an aquaplaning event may represent a gap associated with a normalized grip level expected when driving a vehicle over a dry road segment and between a normalized grip measured when passing over the same road segment within the vehicle when the aquaplaning event occurs.

The occurrence of an aquaplaning may be detected by comparing the a reduction of grip of multiple vehicle that pass the same road segment within a certain time window (for example - the PWT described below).

The rain rate may be detected by automatic wipers units that are arranged to change the wiper rate as a function of the estimated rain rate. The readings of rain rate sensors of multiple automatic wiper units of multiple vehicle may be processed to reject one or more erroneous readings of one or more rain rate sensors.

The severity of the aquaplaning phenomena may relate to: speed of the vehicle, water level, tire thread depth and road segment characters such as micro-texture

The water level may be a function of: (i) accumulated precipitation amount drop in a time period in a segment, (ii) surfaces Micro texture, (iii) dents in the tarmac / inclination, (iv) drains and flow paths, and the like.

The tire thread depth and structure may be also referred to a tire health. It is estimated using any of the mentioned above methods. TAH is the name of a scalar parameter that can be used to represent the grip difference between one tire to another, when passing AP event, while all other parameters are the same. The TAH may be represented by the tire thread depth and structure, since this is the major contributor to the grip difference.

Parameters of the road paths (surface micro-texture, dents, inclination, drain, etc) may be estimated by any of the mentioned above methods.

Definition and Annotations

Baseline Available Grip (BAG) - [g] the available grip attribute attached to a road segment, reflecting its nominal grip when the road is dry at nominal temperature.

Precipitation Rate (PR) - [mm/h] rate of rain dropping (per space unit), at a specific geographical point at a specific time - as recorded / indicated by a specific indication.

Mean Precipitation Rate (MPR) - [mm/h] average of PR at a specific road segment at a specific point of time.

Precipitation Window Time (PWT) - [min] the window time length for aggregating MPR to determine the amount water on the road surface.

Aggregate Window Precipitation (AWP) - [mm] the total amount of water (per space unit) that was dropped during PWT at a given road segment in a given time

Aquaplaning Grip Degradation (AGD) - [g] the amount of available grip. The method may need to reduce from the nominal available grip (of a dry road segment) due to an AP event, at a nominal speed.

Aquaplaning Event (AP) - detected AP phenomena under-the-vehicle.

Tire Aquaplaning Health (TAH) - the grip degradation of a specific vehicle due to a AP event with a given severity.

Normalized Aquaplaning Event (NAP) - AP following compensation procedure, using TAH of the vehicle

Degradation Vs. Precipitation (DVP) mapping - a mapping (for example- table, equation) describing the relation between AWP and AGD per specific road segment at nominal vehicle speed and nominal TAH.

Assumptions

a. Relevant Precipitation: Basically, precipitation include: rain, hail, snow. Rain seems to be of relevance. The method may or may not ignore the rest. The term rain may apply to any relevant precipitation.

b. The method may assume that zero temperature is the minimum for rain. Below that it might be snow.

There may be a season related problem: two roads with same grip level when dry may have different grip degradation when raining - and this can be measured during rain (or during tests in which the road segments may be wetted).

Grip degradation due to rain can differ between two roads with AWP. I.e. it might be that with low AWP one road is worse than the other, but with higher AWP it flips

Repeatability - the method may assume that in most cases, each year each specific location on the road with have the same AGD given same AWP.

PWT. The method may assume that it takes time for paddles to full due to rain. On the other hand they get drained due to: |(i) Evaporation - High temperature, strong wind, low humidity, (ii) Drain paths - water pipes, (iii) water flow paths, (iv) Vehicle splashes.

The method may set PWT to be the time window during which the precipitation is aggregated on the road: (i) Below that - The method may can still aggregate more water on road if rain will continue, (ii) Above it - "old" dropped rain will start drain / evaporate.

The exact time may relate to condition of: temperature, wind, humidity.

The PWT for each road segment may be learnt by monitoring the road segment, and/or may be estimated in any manner.

AP Signature: The method may assume that in the vehicle may can detect a signature of the signals that represent driving on a paddle / AP phenomena, and its magnitude. The AP may be referred to as a physical event with a templated signature and variable magnitude.

This will be reflected by a Virtual Sensor "AP Detected" that may find a signature of an occurrence of an AP event by using sensors that sense at least some out of start speed, Engine / wheel torque and Magnitude.

AP Vs. Speed: the method may assume that as speed of the vehicle is higher the AP severity gets higher. Per specific AP phenomena (e.g. surface micro-texture and water level). The method may can define a mapping that relates AGD to vehicle speed (or may have any other mapping - including an equation).

Therefore, it may be sufficient to learn a single number per road segment per water level

AP Vs. Aggregate Window Precipitation (AWP): The method may assume that each road segment has its own SurfaceDNA that per a given AWP [mm] will always generate the same water level. Therefore, it may be sufficient to learn a mapping that reflects water level per AWP - or actually, AGD per AWP.

Detection in the vehicle. The first step for AP handling is in-the-vehicle detection - detecting a physical event (having a unique signature) that is an AP event. The severity (associated with amount of loss of grip level) of an AP event may be effected by the rain and road segment parameters but also by the vehicle (for example- health of a tire).

Assumptions - AP is mostly increased with speed: this is why the method may detect AP while cruising, assuming that when braking on paddle the vehicle may lose speed immediately, so the phenomena is less severe.

If AWP is zero (i.e. no rain indications in last period) then the method may assume that there can't be AP phenomena.

Signature detection

Signature of AP events may be detected in various manners - for example during controlled tests, and/or when driving over road segments in which AP exists.

For example- recordings of driving in water (proving grounds, normal roads during winter)

The signature learning process may include collect data and annotate. For examplefind all test drives over water planes: winter, sprinklers, etc.; and find features in the signals: acceleration, wheel-speed, driven/non-driven, etc. related to AP events.

The data may be processed in various manners - for example - by running SVM or some other Machine Learning algorithm and train it to detect grip degradation.

Generating a mapping for grip degradation - for example per speed and/or per water depth.

Generating a virtual AP sensor.

Once the Machine Learning training algorithm is completed, The method may have ready Supporting Vectors. The method may run SVM algorithm in the vehicle in real-time, use the Supporting Vectors that were found found, so to detect AP event, and its severity

When AP event is detected the method may issue associate various attribute with the AP event - start speed [km/h], Engine Torque / driven wheel torque [Nm], AP severity [unit less], Tire Aquaplaning Health (TAH) - [unit less], and the like.

Precipitation Rate Virtual Sensor

In order to calculate the water rain amount on the surface, The method may generate a Precipitation Rate Virtual Sensor.

This Virtual sensor reflects the water / rain rate at the moment and location of its issuance.

This Vsensor (virtual) may be repetitively issued when Rain Rate > 0

Implicitly, when it is not detected - The method may assume Rain Rate = 0

The method may have two potential sensors in the vehicle :

a. Vipers sensor - wipe rate. The method may assume that the driver operates the vipers when it rains. The vipers speed will vary with the rain rate, since the driver intent to clear the windshield. Therefore, The method may extract the vipers' rate.

b. Rain Sensor. In modern vehicle there is an optical sensor behind the windshield that detects the amount of water in front of it (normally, according to opacity or reflections). The sensor returns a value in unit of [%] stands for the amount of water on the windshield. The method may read this sensor and use it as a rain rate sensor.

Another source - Weather stations: normally, weather station are located in the road environment. The method may retrieve, close to real-time, the rain rate from their data.

To avoid situation that vipers are operated due to dirty wind shield: the method may ignore indications related to very short short rain periods (for example - less than a minute), or detect water sprinkler activation, then ignore vipers operation for 1 [min]

Vehicle Speed - the method may assume that window water rate gets higher with vehicle speed. Therefore, The method may should normalize (compensate) for speed

Aquaplaning Layer

The target is to generate a map layer, holding the locations (road segments) that have AP problems when it's raining, and the expected severity per Precipitation Rate [PR]. The layer may be added (or may be included in) data structure 600'.

Input

The main input for this mapping layer is the stream of data from crowd of vehicle to the cloud that includes the following Virtual Sensors: (i) AP Detection Vsensor, (ii) Precipitation Rate Vsensor, (iii) Tire AP Health Metadata.

In addition, The method may receive momentary measured precipitation rate from weather condition providers: (i) Precipitation Rate per road segment / area - units of [mm/h]

Aggregate Window Precipitation (AWP)

As defined above, this is the amount of rain, in units of [mm] per space that was aggregated to generate a paddle.

It is calculated as the integral of the PR at a specific location, over a time window preceding the time of calculation.

The size of the window (i.e. the time before current time The method may need to aggregate the rain from) depends on the rate of water evaporation. Evaporated water not to be aggregated for calculating paddle depth.

The rate of evaporation depends on following parameters:

a. Temperature - as temperature is higher, the rate of water evaporation gets higher.

b. Humidity - as the humidity is lower, the evaporation rate gets higher.

c. Wind - as the wind gets stronger, the evaporation rate gets higher.

The above parameters are received from weather report stations along the road area, and used to calculate Precipitation Window Time (PWT) in [min]. When calculated, The method may use PWT to calculate AWP as the integral of PR(t) over PWT.

Aquaplaning Vs. Precipitation Rate - mapping

There may be provided a model (mapping) that may reflect the relation between PR and the AP hazard levels per each road segment. As described above, this reflect the *SurfaceDNA* components that affects the AP severity (e.g. asphalt dents, micro-texture, blocked water drain etc.). AP severity is measured by Aquaplaning Grip Degradation (AGD) - units of [g].

The method may assume that the AP phenomena at the road segment is a function of the Aggregate Window Precipitation (AWP) - units of [mm]. Therefore The method may define a LUT: AGP Vs. AWP, denoted as: Degradation Vs. Precipitation (DVP) table.

Structure (example):

| AWP [mm] | AGD [g] - resolution 0.05[g] |
|----------|------------------------------|
| 0~2      |                              |
| 2~5      |                              |
| 5~10     |                              |
| 10~20    |                              |
| > 20     |                              |

Learn

This process is executed over each driving session - a specific vehicle driving for some miles over specific roads, transmitting its Vsensors to the cloud.

Stage#1: AP events

a. Given: TAH of each vehicle, AP Vsensor instances
b. Per session, following routing algorithm (map matching)
c. Find the map Nodes (road segments) that AP was detected in them
d. For each AP event compensate for TAH:

i. Factorize the AP event magnitude by TAH of the vehicle
ii. Normally, when TAH is poor, the compensated (i.e. normalized) AP magnitude will decrease

e. Generate Normalized AP (NAP) events

i. Normalized AP event is AP event with nominal magnitude
ii. i.e. the magnitude following factorization by TAH

Stage#2: Precipitation Rate (PR)

a. Find all PR Vsensors.

b. Generate additional PR Vsensors instances from external weather source (if positive rain indication)

i. Establish a connection with weather report service
ii. Extract PR value per vicinity of each road segment
iii. Generate a Vsensor instance out of this information (as if it was detected by the vehicle).

c. Remove out-layers / errors for PR indication in the session - Too short PR events, Rare PR events - i.e. if not recurring for too long

Merge

This procedure is executed in the cloud every time period (for example - every few hours), following reception of several driving sessions of same or different vehicles - and after that each one of the sessions was going through the Learn procedure described above.

Go over the roads in the map, then: per road, per time interval, go over new learnt sessions:

Stage#1: PWT

a. Calculate Precipitation Window Time (PWT) - [min]
b. Given: temperature, wind, humidity

Stage#2: MPR

a. Given PWT of the road and time
b. Calculate Mean Precipitation Rate (MPR) - using all learnt sessions in the same road and same time window:

i. For each vehicle driving in the vicinity of the road segment around the same time frame.
ii. Extruct PR at the vicinity
iii. Average all PRs

c. Remove out layer

Stage#3: AWP

a. Given MPR

b. Calculate Aggregate Window Precipitation (AWP) - per time per road segment

Stage#4: DVP table

a. Per: Road segment
b. Given:

i. AWP of the segment
ii. Normalized AP (NAP) events in the segment (see stage# above

c. Process:

i. Average NAPs and remove out-layers
ii. Generate Degradation Vs. Precipitation mapping

1. Per AWP range, collect all NAP events that were collected given AWP within that range
2. Average the NAPs
3. Populate the AWP range entry in the mapping table
4. Finally, we have a full Look-Up Table describing the relative NAP value (i.e. nominal grip degradation) per a specific PR) for each road segment

Usage - Aquaplaning Prediction

Following crowd sourcing AP event along rainy days, The method may managed to map:

a. AP severity per road segment, per AWP
b. Per vehicle: TAH

i. The variable that is attached to each vehicle (aged over time)
ii. It defines how to normalize the AP severity so to reflect the grip degradation that this specific vehicle will experience due to a specific magnitude of AP event

Now, assume that a specific vehicle is about to drive over a specific road, The method may would like to calculate the maximal safe speed at each road segment so not to reduce available grip level below a predefined level.

Given:

a. Per specific road segments ahead of the vehicle
b. AWP - given PR from crowd sourcing or weather station over PWT before current time
c. Tire Aquaplaning Health (TAH) - per the specific vehicle

Retrieve from map:

a. The value of grip degradation, extracted from the LUT associated with the road segments, per speed
b. Compensate with TAH

Return:

a. The maximal safe speed before losing grip substantially

Finally, the vehicle can use this specific speed as its maximal speed cruising along these road segments.

The calculations and parameters illustrated in the previous tan pages are non-limiting examples of a method for calculating and/or predicting aquaplaning.

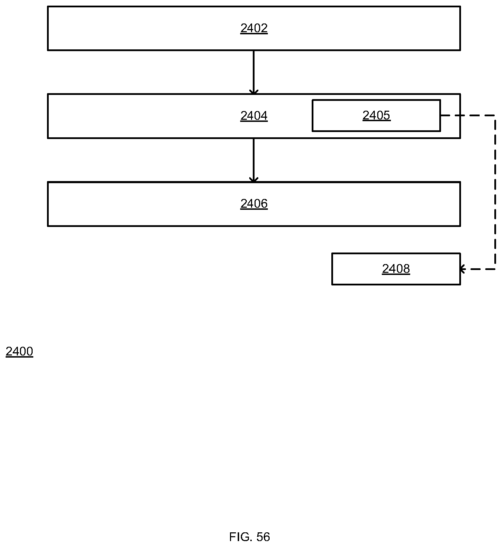

Figure 56 illustrates method 2400 for driving a vehicle, the method may include the following steps :

a. Receiving or generating rain information regarding rain that may be associated with multiple road segments. Step 2402.

b. Estimating a grip level degradation associated with each read segment of the multiple road segment. Step 2404. The estimating of the grip level degradation may be based on the rain information, on at least one rain related parameter of the vehicle and and on a mapping, related to the each road segment of the road segments, between the rain information and grip level degradation.

c. Performing a driving related operation based on the grip level degradation. Step 2406.

The rain related parameter of the vehicle may include a health of at least one tire of the vehicle.

Step 2404 of estimating of the grip level degradation may include step 2405 of estimating an occurrence of one or more aquaplaning events in the multiple road segments.

Step 2404 may include estimating the grip level degradation associated with the occurrence of one or more aquaplaning events in the multiple road segments.

The method may include step 2408 of verifying the occurrence of the one or more aquaplaning events by the vehicle.

The verifying may include sensing, by vehicle sensors, the behavior of the vehicle when driving over the multiple road segments to provide sensing results; and searching, by the vehicle, for one or more aquaplaning signatures in the sensing results.

Step 2402 may include accumulating rain perception rate information obtained during a precipitation time window to generate the rain information.

Step 2402 may include receiving or calculating the Precipitation Window Time per road segment.

Step 2406 may include selectively activating an autonomous driving module for autonomously driving the vehicle.

Step 2406 may include at least one out of:

a. Deactivating and/or activating an autonomous driving module that may be configured, when activated, to autonomously driving the vehicle. Thus - autonomous driving may be activated for road segments in which the vehicle has a normalized grip (taking into account the grip degradation calculated during step 2404) of certain values, the autonomous driving may be deactivated for road segments in which the vehicle has a normalized grip (taking into account the grip degradation calculated during step 2404) of other values. It should be noted that the activation and/or deactivation of the autonomous driving may be a function of grip levels related to the multiple road segments - especially to the distance between road segments in which the vehicle will have a problematic grip level - as it may not be efficient to turn on and off the autonomous driving each few tens of meters. Any function may be applied and be used for determining, given the outcome of step 2404 how to operate the autonomous driving. It should be noted that in at least some cases an occurrence of an aquaplaning event can be avoided by setting the speed of the vehicle to be low enough to allow the wheels of the vehicle to evacuate enough water - even in road segments that aggregated enough water to cause (in higher velocities) aquaplaning. Thus - the autonomous driving may be applied also in problematic road segments.

b. Setting a velocity of the vehicle in each of the multiple road segments. The velocity may be set such as not to exceed a maximal safe velocity associated with a road segment under the estimated conditions (including a possible occurrence of a AP event). The maximal safe velocity will enable the wheels of the vehicle to evacuate enough water - even in road segments that aggregated enough water to cause (in higher velocities) aquaplaning.

c. Alerting a human driver of the vehicle. This may be any audio/visual message. The alert may be issued when the drier control the vehicle and/or even when the vehicle is autonomously driven. The alert may indicate a danger of an aquaplaning event, inform the driver about the recommended vehicle speed, and the like.

d. Perform or prevent changes of velocity (for example acceleration or deceleration) in road segments in which aquaplaning events are expected to occur.

Step 2402 may include estimating a rain perception rate by at least one vehicle sensor.

The at least one vehicle sensor may belong to a wiper control unit.

There may be provided a non-transitory computer program product for driving a vehicle, wherein the non-transitory computer program product stores instructions for receiving or generating rain information regarding rain that may be associated with multiple road segments; estimating a grip level degradation associated with each read segment of the multiple road segment, wherein the estimating of the grip level degradation may be based on the rain information, on at least one rain related parameter of the vehicle and and on a mapping, related to the each road segment of the road segments, between the rain information and grip level degradation; and performing a driving related operation based on the grip level degradation.

The rain related parameter of the vehicle may include a health of at least one tire of the vehicle.

The estimating of the grip level degradation may include estimating an occurrence of one or more aquaplaning events in the multiple road segments.

The estimating of the grip level degradation may include estimating the grip level degradation associated with the occurrence of one or more aquaplaning events in the multiple road segments.

The non-transitory computer readable medium may include verifying the occurrence of the one or more aquaplaning events by the vehicle.

The verifying may include sensing, by vehicle sensors, the behavior of the vehicle when driving over the multiple road segments to provide sensing results; and searching, by a vehicle computer, for one or more aquaplaning signatures in the sensing results.

The non-transitory computer readable medium that may store instructions for accumulating rain perception rate information obtained during a precipitation time window to generate the rain information.

The performing of the driving related operation may include selectively activating an autonomous driving module for autonomously driving the vehicle.

The performing of the driving related operation may include selectively deactivating an autonomous driving module that may be configured, when activated, to autonomously driving the vehicle.

The performing of the driving related operation may include setting a velocity of the vehicle in each of the multiple road segments.

The non-transitory computer readable medium that may store instructions for estimating a rain perception rate by at least one vehicle sensor.

The at least one vehicle sensor belongs to a wiper control unit.

The performing of the driving related operation may include alerting a human driver of the vehicle.

There may be provided a vehicle system for driving a vehicle, the vehicle system may include sensors (such as any of the sensors illustrated in the specification and/or in any one of figures 3, 4, 20, 40, 41, 42 and 50, and/ any rain sensor of the vehicle) that may be configured to perform at least out out of (a) sensing a behavior of the vehicle, and (b) sensing a rain parameter; and a computer vehicle (such as any of the processors illustrated in the specification and/or in any one of figures 3, 4, 20, 40, 41, 42 and 50) that may be configured to receive or generate rain information regarding rain that may be associated with multiple road segments; estimate a grip level degradation associated with each read segment of the multiple road segment, wherein the estimating of the grip level degradation may be based on the rain information, on at least one rain related parameter of the vehicle and and on a mapping, related to the each road segment of the road segments, between the rain information and grip level degradation; and assist in performing a driving related operation based on the grip level degradation.

Figure 56 illustrates method 2420 for estimating an occurrence of one or more aquaplaning events, the method may include the following steps :

    a. Receiving or generating rain information regarding rain that may be associated with multiple road segments. Step 2402.

    b. Estimating, by a vehicle computer, an occurrence the one or more aquaplaning events in the multiple road segments. Step 2424. The estimating of the occurrence of one or more aquaplaning events may be based on the rain information, on at least one rain related parameter of the vehicle and and on a mapping, related to the each road segment of the road segments, between the rain information and an occurrence of the one or more aquaplaning events.

Method 2420 may also include at least one out of:

    a. Step 2426 of performing a driving related operation based on the estimating of the occurrence of the one or more aquaplaning events.

b. Step 2428 of verifying the occurrence of the one or more aquaplaning events by the vehicle.

Step 2428 may include sensing, by vehicle sensors, the behavior of the vehicle when driving over the multiple road segments to provide sensing results; and searching, by the vehicle, for one or more aquaplaning signatures in the sensing results.

Step 2402 may include accumulating rain perception rate information obtained during a precipitation time window to generate the rain information.

Step 2402 may include receiving or calculating the Precipitation Window Time per road segment.

Step 2426 may include at least one out of:

a. Deactivating and/or activating an autonomous driving module that may be configured, when activated, to autonomously driving the vehicle. Thus - autonomous driving may be activated for road segments in which the vehicle has a normalized grip (taking into account the grip degradation calculated during step 2404) of certain values, the autonomous driving may be deactivated for road segments in which the vehicle has a normalized grip (taking into account the grip degradation calculated during step 2404) of other values. It should be noted that the activation and/or deactivation of the autonomous driving may be a function of grip levels related to the multiple road segments - especially to the distance between road segments in which the vehicle will have a problematic grip level - as it may not be efficient to turn on and off the autonomous driving each few tens of meters. Any function may be applied and be used for determining, given the outcome of step 2404 how to operate the autonomous driving. It should be noted that in at least some cases an occurrence of an aquaplaning event can be avoided by setting the speed of the vehicle to be low enough to allow the wheels of the vehicle to evacuate enough water - even in road segments that aggregated enough water to cause (in higher velocities) aquaplaning. Thus - the autonomous driving may be applied also in problematic road segments.

b. Setting a velocity of the vehicle in each of the multiple road segments. The velocity may be set such as not to exceed a maximal safe velocity associated with a road segment under the estimated conditions (including a possible occurrence of a AP event). The maximal safe velocity will enable the wheels of the vehicle to evacuate enough water - even in road segments that aggregated enough water to cause (in higher velocities) aquaplaning.

c. Alerting a human driver of the vehicle. This may be any audio/visual message. The alert may be issued when the drier control the vehicle and/or even when the vehicle is autonomously driven. The alert may indicate a danger of an aquaplaning event, inform the driver about the recommended vehicle speed, and the like.

d. Perform or prevent changes of velocity (for example acceleration or deceleration) in road segments in which aquaplaning events are expected to occur.

There may be provided a non-transitory computer program product for estimating an occurrence of one or more aquaplaning events, wherein the non-transitory computer program product stores instructions for receiving or generating rain information regarding rain that may be associated with multiple road segments; and estimating, by a vehicle computer, an occurrence the one or more aquaplaning events in the multiple road segments, wherein the estimating of the occurrence of one or more aquaplaning events may be based on the rain information, on at least one rain related parameter of the vehicle and and on a mapping, related to the each road segment of the road segments, between the rain information and an occurrence of the one or more aquaplaning events.

The non-transitory computer readable medium may include performing a driving related operation based on the estimating of the occurrence of the one or more aquaplaning events.

The non-transitory computer readable medium may include verifying the occurrence of the one or more aquaplaning events by the vehicle.

The verifying may include sensing, by vehicle sensors, the behavior of the vehicle when driving over the multiple road segments to provide sensing results; and searching, by the vehicle, for one or more aquaplaning signatures in the sensing results.

The non-transitory computer readable medium that may store instructions for accumulating rain perception rate information obtained during a precipitation time window to generate the rain information.

The performing of the driving related operation may include selectively activating an autonomous driving module for autonomously driving the vehicle.

The performing of the driving related operation may include selectively deactivating an autonomous driving module that may be configured, when activated, to autonomously driving the vehicle.

The performing of the driving related operation may include setting a velocity of the vehicle in each of the multiple road segments.

The non-transitory computer readable medium that may store instructions for estimating a rain perception rate by at least one vehicle sensor.

The at least one vehicle sensor belongs to a wiper control unit.

The performing of the driving related operation may include alerting a human driver of the vehicle.

There may be provided a vehicle system for driving a vehicle, the vehicle system may include sensors (such as any of the sensors illustrated in the specification and/or in any one of figures 3, 4, 20, 40, 41, 42 and 50, and/ any rain sensor of the vehicle) that may be configured to perform at least out out of (a) sensing a behavior of the vehicle, and (b) sensing a rain parameter; and a computer vehicle (such as any of the processors illustrated in the specification and/or in any one of figures 3, 4, 20, 40, 41, 42 and 50) that may be configured to receive or generate rain information regarding rain that may be associated with multiple road segments; and estimate an occurrence the one or more aquaplaning events in the multiple road segments, wherein the estimating of the occurrence of one or more aquaplaning events may be based on the rain information, on at least one rain related parameter of the vehicle and and on a mapping, related to the each road segment of the road segments, between the rain information and an occurrence of the one or more aquaplaning events.

The vehicle computer may be configured to assist in performing a driving related operation based on the estimating of the occurrence of the one or more aquaplaning events.

There may be provided a method for measuring physical events related to multiple road segments method may include measuring a first set of parameters by first vehicle sensors; wherein the measuring occurs while the vehicle may be driving on the multiple road segments; wherein the first set of parameters may include vehicle wheel movement parameters and vehicle acceleration parameters; wherein the first vehicle sensors differ from road image sensors; detecting by a vehicle computer, detected physical events related to the driving on the multiple road segments, wherein the detecting may be based on the first set of parameters; generating physical events information about the detected physical events; and storing or transmitting at least a portion of the physical events information. The physical event may be an aquaplaning event. For example- each one of method 10' of figure 12 and method 11' of figure 13 may be amended to detect physical event may be an aquaplaning event. Referring to figure 14 - information about aquaplaning event may be added to the database 600' - for example to fixed size sparse layer 630' or to variable size sparse layer 640'.

There may be provided a non-transitory computer program product for measuring physical events related to multiple road segments, wherein the non-transitory computer program product stores instructions for measuring a first set of parameters by first vehicle sensors; wherein the measuring occurs while the vehicle may be driving on the multiple road segments; wherein the first set of parameters may include vehicle wheel movement parameters and vehicle acceleration parameters; wherein the first vehicle sensors differ from road image sensors; detecting by a vehicle computer, detected physical events related to the driving on the multiple road segments, wherein the detecting may be based on the first set of parameters; generating physical events information about the detected physical events; and storing or transmitting at least a portion of the physical events information; wherein the physical events may include an occurrence of an aquaplaning event.

There may be provided a system for measuring physical events related to multiple road segments, the system may include a vehicle computer that may be configured to (i) receive from first vehicle sensors a first set of parameters; wherein the measuring occurs while the vehicle may be driving on the multiple road segments; wherein the first set of parameters may include vehicle wheel movement parameters and vehicle acceleration parameters; wherein the first vehicle sensors differ from road image sensors; (ii) to detect detected physical events related to the driving on the multiple road segments, wherein the detecting may be based on the first set of parameters; generate physical events information about the detected physical events; and store or assist in transmitting at least a portion of the physical events information; wherein the physical events may include an occurrence of an aquaplaning event.

There may be provided a method for generating a reference map of a region, the method may include receiving, by a communication interface, from multiple vehicles (a) physical events information about detected physical events that were detected by the multiple vehicles when driving over road segments that belong to the region, and (b) road segment attributes that were calculated by the multiple vehicles, the road segments attribute may be related to road segments that belong to the region; wherein physical events information of a vehicle of the multiple vehicles may be based on a first set of parameters that may be sensed by first vehicle sensors of the vehicle; wherein the first set of parameters may include vehicle wheel movement parameters and vehicle acceleration parameters; wherein the first vehicle sensors differ from road image sensors; and calculating, by a computerized system, the reference map based on the physical events information about detected physical events that were detected by the multiple vehicles and the road segment attributes that were calculated by the multiple vehicles; wherein the detected physical events may include an occurrence of an aquaplaning event. Referring to method 800 of figure 21 - step 810 may include receiving physical events information that may be indicative of occurrences of one or more aquaplaning events. Step 820 may include calculating a reference map that may reflect the occurrence of the one or more aquaplaning events.

There may be provided a non-transitory computer program product for generating a reference map of a region, the non-transitory computer program product stores instructions for receiving, by a communication interface, from multiple vehicles (a) physical events information about detected physical events that were detected by the multiple vehicles when driving over road segments that belong to the region, and (b) road segment attributes that were calculated by the multiple vehicles, the road segments attribute may be related to road segments that belong to the region; wherein physical events information of a vehicle of the multiple vehicles may be based on a first set of parameters that may be sensed by first vehicle sensors of the vehicle; wherein the first set of parameters may include vehicle wheel movement parameters and vehicle acceleration parameters; wherein the first vehicle sensors differ from road image sensors; and calculating, by a computerized system, the reference map based on the physical events information about detected physical events that were detected by the multiple vehicles and the road segment attributes that were calculated by the multiple vehicles; wherein the detected physical events may include an occurrence of an aquaplaning event.

There may be provided a method for determining a driving session, the method may include receiving or generating, by a vehicle computer, a vehicle profile, and slopes of portions of a path that precedes a vehicle; wherein the vehicle profile may be generated based on, at least, road path and vehicle parameters; wherein at least some of the road path and the vehicle parameters may be sensed by vehicle sensors that differ from road image sensors; and determining, by the vehicle computer, suggested driving parameters for the path that precedes the vehicle, wherein the calculating may be based, at least in part, on the vehicle profile, path portions slope, extrinsic limitations and information related to one or more aquaplaning events. The extrinsic limitations may include an occurrence of one or more aquaplaning events. Referring to method 1200 of figure 28 - step 1220 may be responsive to extrinsic limitations may include an occurrence (actual or expected) of one or more aquaplaning events.

There may be provided a non-transitory computer program product for determining a driving session, wherein the non-transitory computer program product stores instructions for receiving or generating, by a vehicle computer, a vehicle profile, and slopes of portions of a path that precedes a vehicle; wherein the vehicle profile may be generated based on, at least, road path and vehicle parameters; wherein at least some of the road path and the vehicle parameters may be sensed by vehicle sensors that differ from road image sensors; and determining, by the vehicle computer, suggested driving parameters for the path that precedes the vehicle, wherein the calculating may be based, at least in part, on the vehicle profile, path portions slope, and extrinsic limitations such as an occurrence to one or more aquaplaning events.

**Claims**

1. A method (100") for evaluating a weight of a vehicle, the method comprises:

    obtaining during a learning period and by vehicle sensors, vehicle sensor measurements regarding driving sessions of the vehicle, wherein the vehicle sensor measurement comprise (a) height measurements of paths related to the driving sessions, (b) fuel consumption measurements related to the driving sessions, (c) length measurements of the of road segments related to the driving sessions; and (d) velocity measurements related to the driving sessions; and

    calculating, based on the vehicle sensor measurements, an evaluated weight of the vehicle; wherein the calculating is based on values of energy coefficients that are indicative of energy wasted by the vehicle;
    **characterized in that**
    the calculating comprises (a) searching for values of the energy coefficients that provide at least one distribution related to weight estimates of the vehicle, the at least one distribution fulfills at least one predefined statistical significance criterion; and (b) determining weight estimates for each path segment of the plurality of path segments and for different values of the energy coefficients.

2. The method (100") according to claim 1 wherein the calculating of the evaluated weight further comprises finding a motor efficiency function and a fuel consumption error correction function.

3. The method (100") according to claim 1, wherein the calculating of the evaluated weight comprises determining weight estimates for each path segment of the plurality of path segments, according to the following equation:

$$m = \frac{ame \cdot fe \cdot fuel - k_1 x - k_3 x v^2}{g \Delta h + \frac{(v_2{}^2 - v_1{}^2)}{2} + k_2 x + k_4 x v^2}$$

wherein the group of energy coefficients comprises $k_1$, $k_2$, $k_3$ and $k_4$;
wherein ame is a value of the estimated motor efficiency function;
wherein $v_2$ is a velocity of the vehicle at an end of the path segment;
$v_1$ is a velocity of the vehicle at a start of the path segment;
v represents at least one value of a velocity of the vehicle when driving over the path segment;

x is a length of the path segment;
$\Delta$h is a height difference between the end and the start of the path segment; and
fuel is an error corrected fuel consumption related to the path segment.

4. The method (100") according to claim 1 , wherein the calculating of the evaluated weight comprises determining weight estimates for the each path segment of the plurality of path segments, for the different values of the energy coefficients and for different motor efficiency function values.

5. The method (100") according to claim 1, wherein the calculating of the evaluated weight comprises determining weight estimates for the each path segment of the plurality of path segments, for the different values of the energy coefficients and for different fuel consumption error correction function values.

6. The method (100") according to claim 1 , wherein the calculating of the evaluated weight comprises determining weight estimates for the each path segment of the plurality of path segments, for the different values of the energy coefficients, for different motor efficiency function values and for different fuel consumption error correction function values.

7. The method (100") according to claim 1, wherein the calculating of the evaluated weight comprises associating a quality attribute with each weight estimate.

8. The method (100") according to claim 1, wherein the calculating of the evaluated weight comprises associating a quality attribute with each weight estimate, wherein the at least one distribution related to weight estimates of the vehicle is a histogram, wherein the histogram comprises bins, wherein each bin is associated with a weight estimate range and has a value that represents quality attributes of weight estimates that belong to the bin.

9. The method (100") according to claim 1 comprising assigning quality attribute to vehicle sensor measurements related to a certain path segment based on a difference related to velocities of the vehicle at a start and at an end of the certain path segment.

10. The method (100") according to claim 1 comprising assigning quality attribute to vehicle sensor measurements related to a certain path segment based on a maximal velocity of the vehicle during the certain driving session.

11. The method (100") according to claim 1 comprising ignoring vehicle sensor measurements obtained at path segments in which the vehicle descended.

12. A non-transitory computer readable medium for evaluating a weight of a vehicle, the non-transitory computer readable medium stores instructions for:

obtaining during a learning period, vehicle sensor measurements regarding driving sessions of the vehicle, wherein the vehicle sensor measurement comprise (a) height measurements of paths related to the driving sessions, (b) fuel consumption measurements related to the driving sessions, (c) length measurements of the of road segments related to the driving sessions; and (d) velocity measurements related to the driving sessions; and
calculating, based on the vehicle sensor measurements, an evaluated weight of the vehicle; wherein the calculating is based on values of energy coefficients that are indicative of energy wasted by the vehicle;
**characterized in that** the calculating comprises (a) searching for values of the energy coefficients that provide at least one distribution related to weight estimates of the vehicle, the at least one distribution fulfills at least one predefined statistical significance criterion; and (b) determining weight estimates for each path segment of the plurality of path segments and for different values of the energy coefficients.

13. The non-transitory computer readable medium according to claim 12 wherein the calculating of the evaluated weight comprises determining weight estimates for each path segment of the plurality of path segments, according to the following equation:

$$ m = \frac{ame \cdot fe \cdot fuel - k_1 x - k_3 x v^2}{g\Delta h + \frac{(v_2{}^2 - v_1{}^2)}{2} + k_2 x + k_4 x v^2} $$

wherein the group of energy coefficients comprises $k_1$, $k_2$, $k_3$ and $k_4$;
wherein ame is a value of the estimated motor efficiency function;
wherein $v_2$ is a velocity of the vehicle at an end of the path segment;
$v_1$ is a velocity of the vehicle at a start of the path segment;
v represents at least one value of a velocity of the vehicle when driving over the path segment;
x is a length of the path segment;
$\triangle$h is a height difference between the end and the start of the path segment; and
fuel is an error corrected fuel consumption related to the path segment.

14. The non-transitory computer readable medium according to claim 12 wherein the calculating comprises ignoring vehicle sensor measurements obtained at path segments in which the vehicle descended.

15. The non-transitory computer readable medium according to claim 12 wherein the calculating comprises determining weight estimates for the each path segment of the plurality of path segments, for the different values of the energy coefficients and for different motor efficiency function values.

**Patentansprüche**

1. Verfahren (100") zur Bewertung des Gewichts eines Fahrzeugs, wobei das Verfahren Folgendes umfasst:

   Erhalten von Fahrzeugsensormessungen während einer Lernperiode und durch Fahrzeugsensoren, die sich auf Fahrsitzungen des Fahrzeugs beziehen, wobei die Fahrzeugsensormessung (a) Höhenmessungen von Wegen, die mit den Fahrsitzungen in Verbindung stehen, (b) Kraftstoffverbrauchsmessungen, die mit den Fahrsitzungen in Verbindung stehen, (c) Längenmessungen von Straßensegmenten, die mit den Fahrsitzungen in Verbindung stehen; und (d) Geschwindigkeitsmessungen, die mit den Fahrsitzungen in Beziehung stehen; und Berechnen, basierend auf den Fahrzeugsensormessungen, eines bewerteten Gewichts des Fahrzeugs; wobei das Berechnen basierend auf Werten von Energiekoeffizienten erfolgt, die für die vom Fahrzeug verschwendete Energie kennzeichnend sind;
   **dadurch gekennzeichnet, dass** das Berechnen (a) Suchen nach Werten der Energiekoeffizienten umfasst, die mindestens eine Verteilung in Bezug auf Gewichtsschätzungen des Fahrzeugs liefern, wobei die mindestens eine Verteilung mindestens ein vordefiniertes statistisches Signifikanzkriterium erfüllt; und (b) Bestimmen von Schätzungen der Gewichte für jeden Wegabschnitt der Vielzahl von Wegabschnitten und für verschiedene Werte der Energiekoeffizienten.

2. Verfahren (100") nach Anspruch 1, wobei das Berechnen der bewerteten Gewichtung ferner das Finden einer Motoreffizienzfunktion und einer Kraftstoffverbrauchs-Fehlerkorrekturfunktion umfasst.

3. Verfahren (100") nach Anspruch 1, wobei das Berechnen der bewerteten Gewichtung das Bestimmen von Gewichtsschätzungen für jeden Wegabschnitt der Vielzahl von Wegabschnitten nach der folgenden Gleichung umfasst

$$m = \frac{ame \cdot fe \cdot fuel - k_1 x - k_3 x v^2}{g\Delta h + \frac{(v_2^2 - v_1^2)}{2} + k_2 x + k_4 x v^2}$$

wobei die Gruppe der Energiekoeffizienten $k_1$, $k_2$, $k_3$ und $k_4$ umfasst;
wobei ame ein Wert der geschätzten Motoreffizienzfunktion ist;
wobei $v_2$ eine Geschwindigkeit des Fahrzeugs an einem Ende des Wegabschnitts ist;
$v_1$ ist die Geschwindigkeit des Fahrzeugs zu Beginn des Wegabschnitts;
v steht für mindestens einen Wert der Geschwindigkeit des Fahrzeugs beim Befahren des Wegabschnitts;
x ist eine Länge des Wegabschnitts;
$\triangle$h ist eine Höhendifferenz zwischen dem Ende und dem Anfang des Wegabschnitts; und
fuel ein fehlerbereinigter Treibstoffverbrauch bezogen auf den Pfadabschnitt ist.

4. Verfahren (100") nach Anspruch 1, wobei das Berechnen der bewerteten Gewichtung die Bestimmung von Gewichtsschätzungen für jeden Wegabschnitt der Vielzahl von Wegabschnitten, für die verschiedenen Werte der Energiekoeffizienten und für verschiedene Werte der Motoreffizienzfunktion umfasst.

5. Verfahren (100") nach Anspruch 1, wobei das Berechnen der bewerteten Gewichtung die Bestimmung von Gewichtsschätzungen für jeden Wegabschnitt der Vielzahl von Wegabschnitten, für die verschiedenen Werte der Energiekoeffizienten und für verschiedene Werte der Treibstoffverbrauchs-Fehlerkorrekturfunktion umfasst.

6. Verfahren (100") nach Anspruch 1, wobei das Berechnen der bewerteten Gewichtung das Bestimmen von Gewichtsschätzungen für jeden Wegabschnitt der Vielzahl von Wegabschnitten, für die verschiedenen Werte der Energiekoeffizienten, für verschiedene Werte der Motoreffizienzfunktion und für verschiedene Werte der Treibstoffverbrauchs-Fehlerkorrekturfunktion umfasst.

7. Verfahren (100") nach Anspruch 1, wobei das Berechnen der bewerteten Gewichtung das Zuordnen eines Qualitätsattributs zu jeder Gewichtsschätzung umfasst.

8. Verfahren (100") nach Anspruch 1, wobei das Berechnen des bewerteten Gewichts das Zuordnen eines Qualitätsattributs zu jeder Gewichtsschätzung umfasst, wobei die mindestens eine Verteilung, die sich auf die Gewichtsschätzungen des Fahrzeugs bezieht, ein Histogramm ist, wobei das Histogramm Behälter umfasst, wobei jeder Behälter mit einem Gewichtsschätzungsbereich verbunden ist und einen Wert hat, der Qualitätsattribute von Gewichtsschätzungen repräsentiert, die zu dem Behälter gehören.

9. Verfahren (100") nach Anspruch 1, das das Zuweisen eines Qualitätsattributs zu Fahrzeugsensormessungen in Bezug auf ein bestimmten Wegabschnitt basierend auf einer Differenz in Bezug auf die Geschwindigkeiten des Fahrzeugs an einem Anfang und an einem Ende des bestimmten Wegabschnitts umfasst.

10. Verfahren (100") nach Anspruch 1, das das Zuweisen eines Qualitätsattributs zu Fahrzeugsensormessungen, die sich auf ein bestimmten Wegabschnitt beziehen, basierend auf einer maximalen Geschwindigkeit des Fahrzeugs während der bestimmten Fahrsitzung umfasst.

11. Verfahren (100") nach Anspruch 1, das das Ignorieren von Fahrzeugsensormessungen umfasst, die auf Wegabschnitten erhalten wurden, auf denen das Fahrzeug abgestiegen ist.

12. Nicht-übertragbares computerlesbares Medium zum Auswerten eines Gewichts eines Fahrzeugs, wobei das nicht-übertragbare, computerlesbare Medium Anweisungen speichert für:

Erhalten von Fahrzeugsensormessungen während einer Lernperiode, die sich auf Fahrsitzungen des Fahrzeugs beziehen, wobei die Fahrzeugsensormessungen (a) Höhenmessungen von Wegen, die sich auf die Fahrsitzungen beziehen, (b) Kraftstoffverbrauchsmessungen, die sich auf die Fahrsitzungen beziehen, (c) Längenmessungen von Straßenabschnitten, die sich auf die Fahrsitzungen beziehen, und (d) Geschwindigkeitsmessungen, die sich auf die Fahrsitzungen beziehen, umfassen; und
Berechnen, basierend auf den Fahrzeugsensormessungen, eines bewerteten Gewichts des Fahrzeugs; wobei das Berechnen basierend auf Werten von Energiekoeffizienten erfolgt, die für die vom Fahrzeug verschwendete Energie kennzeichnend sind;
**dadurch gekennzeichnet, dass** das Berechnen (a) Suchen nach Werten der Energiekoeffizienten umfasst, die mindestens eine Verteilung in Bezug auf Gewichtsschätzungen des Fahrzeugs liefern, wobei die mindestens eine Verteilung mindestens ein vordefiniertes statistisches Signifikanzkriterium erfüllt; und (b) Bestimmen von Gewichtsschätzungen für jedes Wegsegment der Vielzahl von Wegsegmenten und für verschiedene Werte der Energiekoeffizienten.

13. Nicht-übertragbares computerlesbares Medium nach Anspruch 12, wobei das Berechnen der bewerteten Gewichtung das Bestimmen von Gewichtsschätzungen für jeden Wegabschnitt der Vielzahl von Wegabschnitten nach der folgenden Gleichung umfasst

$$m = \frac{ame \cdot fe \cdot fuel - k_1 x - k_3 x v^2}{g\Delta h + \frac{(v_2^2 - v_1^2)}{2} + k_2 x + k_4 x v^2}$$

wobei die Gruppe der Energiekoeffizienten $k_1$, $k_2$, $k_3$ und $k_4$ umfasst;
wobei ame ein Wert der geschätzten Motoreffizienzfunktion ist;
wobei $v_2$ eine Geschwindigkeit des Fahrzeugs an einem Ende des Wegabschnitts ist;

$v_1$ ist die Geschwindigkeit des Fahrzeugs zu Beginn des Wegabschnitts;

v steht für mindestens einen Wert der Geschwindigkeit des Fahrzeugs beim Befahren des Weges

x ist eine Länge des Wegabschnitts;

△h ist eine Höhendifferenz zwischen dem Ende und dem Anfang des Wegabschnitts; und

fuel ein fehlerbereinigter Treibstoffverbrauch bezogen auf den Pfadabschnitt ist.

14. Nicht-übertragbares computerlesbares Medium nach Anspruch 12, wobei das Berechnen das Ignorieren von Fahrzeugsensormessungen umfasst, die an Wegabschnitten erhalten wurden, in denen das Fahrzeug abgestiegen ist.

15. Nicht-übertragbares computerlesbares Medium nach Anspruch 12, wobei das Berechnen Folgendes umfasst Bestimmen von Gewichtungsschätzungen für jeden Wegabschnitt der Vielzahl von Wegabschnitten, für die verschiedenen Werte der Energiekoeffizienten und für verschiedene Werte der Motoreffizienzfunktion.

**Revendications**

1. Procédé (100") d'évaluation du poids d'un véhicule, le procédé comprenant :

l'obtention, pendant une période d'apprentissage et par des capteurs de véhicule, de mesures de capteurs de véhicule concernant des sessions de conduite du véhicule, dans lequel les mesures de capteurs de véhicule comprennent (a) des mesures de hauteur de trajets liés aux séances de conduite, (b) des mesures de consommation de carburant liées aux séances de conduite, (c) des mesures de longueur des segments de route liées aux séances de conduite ; et (d) des mesures de vitesse liées aux séances de conduite ; et

le calcul, sur la base des mesures de capteur de véhicule, d'un poids évalué du véhicule ; dans lequel le calcul est basé sur des valeurs de coefficients d'énergie qui indiquent l'énergie gaspillée par le véhicule ; **caractérisé en ce que** le calcul comprend (a) une recherche de valeurs des coefficients d'énergie qui fournissent au moins une distribution liée aux estimations de poids du véhicule, l'au moins une distribution remplit au moins un critère de signification statistique prédéfini ; et (b) la détermination d'estimations de poids pour chaque segment de trajet de la pluralité de segments de trajet et pour différentes valeurs des coefficients d'énergie.

2. Procédé (100'') selon la revendication 1, dans lequel le calcul du poids évalué comprend en outre une recherche d'une fonction d'efficacité de moteur et d'une fonction de correction d'erreur de consommation de carburant.

3. Procédé (100") selon la revendication 1, dans lequel le calcul du poids évalué comprend la détermination d'estimations de poids pour chaque segment de trajet de la pluralité de segments de trajet, selon l'équation suivante :

$$m = \frac{ame \cdot fe \cdot fuel - k_1 x - k_3 x v^2}{g\Delta h + \frac{(v_2^2 - v_1^2)}{2} + k_2 x + k_4 x v^2}$$

dans laquelle le groupe de coefficients d'énergie comprend $k_1$, $k_2$, $k_3$ et $k_4$ ;

dans laquelle *ame* est une valeur de la fonction d'efficacité de moteur estimée ;

dans laquelle $v_2$ est une vitesse du véhicule à une fin du segment de trajet ;

$v_1$ est une vitesse du véhicule au début du segment de trajet ;

*v* représente au moins une valeur d'une vitesse du véhicule lors du déplacement sur le segment de trajet ;

x est une longueur du segment de trajet ;

$\Delta h$ est une différence de hauteur entre la fin et le début du segment de trajet ; et

*fuel* est une consommation de carburant à erreur corrigée liée au segment de trajet.

4. Procédé (100'') selon la revendication 1, dans lequel le calcul du poids évalué comprend une détermination d'estimations de poids pour chaque segment de trajet de la pluralité de segments de trajet, pour les différentes valeurs des coefficients d'énergie et pour différentes valeurs de fonction d'efficacité de moteur.

5. Procédé (100") selon la revendication 1, dans lequel le calcul du poids évalué comprend la détermination d'estimations de poids pour chaque segment de trajet de la pluralité de segments de trajet, pour les différentes valeurs des coefficients d'énergie et pour différentes valeurs de fonction de correction d'erreurs de consommation de carburant.

6. Procédé (100'') selon la revendication 1, dans lequel le calcul du poids évalué comprend une détermination d'estimations de poids pour chaque segment de trajet de la pluralité de segments de trajet, pour les différentes valeurs des coefficients d'énergie, pour différentes valeurs de fonction d'efficacité de moteur et pour différentes valeurs de fonction de correction d'erreur de consommation de carburant.

7. Procédé (100'') selon la revendication 1, dans lequel le calcul du poids évalué comprend une association d'un attribut de qualité à chaque estimation de poids.

8. Procédé (100'') selon la revendication 1, dans lequel le calcul du poids évalué comprend une association d'un attribut de qualité à chaque estimation de poids, dans lequel l'au moins une distribution liée aux estimations de poids du véhicule est un histogramme, dans lequel l'histogramme comprend des cases, dans lequel chaque case est associée à une plage d'estimations de poids et a une valeur qui représente des attributs de qualité d'estimations de poids qui appartiennent à la case.

9. Procédé (100'') selon la revendication 1, comprenant une attribution d'un attribut de qualité aux mesures de capteur de véhicule liées à un certain segment de trajet sur la base d'une différence liée à des vitesses du véhicule au début et à la fin du certain segment de trajet.

10. Procédé (100'') selon la revendication 1, comprenant l'attribution d'un attribut de qualité à des mesures de capteur de véhicule liées à un certain segment de trajet sur la base d'une vitesse maximale du véhicule pendant une certaine session de conduite.

11. Procédé (100'') selon la revendication 1, comprenant une élimination de mesures de capteur de véhicule obtenues au niveau de segments de trajet dans lesquels le véhicule est descendu.

12. Support non transitoire lisible par ordinateur pour évaluer un poids d'un véhicule, le support lisible par ordinateur non transitoire stocke des instructions pour :

   obtenir, pendant une période d'apprentissage, des mesures de capteur de véhicule concernant des sessions de conduite du véhicule, dans lequel les mesures de capteur de véhicule comprennent (a) des mesures de hauteur de trajets liées aux séances de conduite, (b) des mesures de consommation de carburant liées aux séances de conduite, (c) des mesures de longueur des segments de route liées aux sessions de conduite ; et (d) des mesures de vitesse liées aux sessions de conduite ; et
   calculer, sur la base des mesures de capteur de véhicule, un poids évalué du véhicule ; dans lequel le calcul est basé sur des valeurs de coefficients d'énergie qui indiquent l'énergie gaspillée par le véhicule ; **caractérisé en ce que** le calcul comprend (a) une recherche de valeurs des coefficients d'énergie qui fournissent au moins une distribution liée à des estimations de poids du véhicule, l'au moins une distribution remplit au moins un critère de signification statistique prédéfini ; et (b) déterminer des estimations de poids pour chaque segment de trajet de la pluralité de segments de trajet et pour différentes valeurs des coefficients d'énergie.

13. Support non transitoire lisible par ordinateur selon la revendication 12, dans lequel le calcul du poids évalué comprend la détermination d'estimations de poids pour chaque segment de trajet de la pluralité de segments de trajet, selon l'équation suivante :

$$m = \frac{ame \cdot fe \cdot fuel - k_1 x - k_3 x v^2}{g\Delta h + \frac{(v_2^2 - v_1^2)}{2} + k_2 x + k_4 x v^2}$$

   dans laquelle le groupe de coefficients d'énergie comprend $k_1$, $k_2$, $k_3$ et $k_4$ ;
   dans laquelle *ame* est une valeur de la fonction d'efficacité de moteur estimée ;
   dans laquelle $v_2$ est une vitesse du véhicule à une fin du segment de trajet ;
   $v_1$ est une vitesse du véhicule au début du segment de trajet ;
   $v$ représente au moins une valeur d'une vitesse du véhicule lors du déplacement sur le segment de trajet ;
   x est une longueur du segment de trajet ;
   $\Delta h$ est une différence de hauteur entre la fin et le début du segment de trajet ; et
   *fuel* est une consommation de carburant à erreur corrigée liée au segment de trajet.

**14.** Support non transitoire lisible par ordinateur selon la revendication 12, dans lequel le calcul comprend une élimination de mesures de capteur de véhicule obtenues au niveau de segments de trajet dans lesquels le véhicule est descendu.

**15.** Support non transitoire lisible par ordinateur selon la revendication 12, dans lequel le calcul comprend une détermination d'estimations de poids pour chaque segment de trajet de la pluralité de segments de trajet, pour les différentes valeurs des coefficients d'énergie et pour différentes valeurs de fonction d'efficacité de moteur.

FIG. 1

EP 3 682 417 B1

FIG. 2

66

Network
62

Computerized
system
60

Communication
module 58

Air condition module /
fan 54

Vehicle computer 53

Window
57

Other sensors 52

Barometer 51

50

FIG. 3

Network

62

Computerized
system
60

Communication
module 58

Processor 55

Air condition module /
fan 54

Vehicle computer 53

Window
57

Other sensors 52

Barometer 51

50

FIG. 4

EP 3 682 417 B1

Initialization step. 110

Defining the elevation of new nodes (if such exist) as the elevations obtained from the new session, and (b) merging the heights estimations of the other nodes of the new session. 120

Session constant offsets compensation. 130

Initialization 132

Going over session database in an iterative manner, each iteration takes into account a new session. Each iteration may include (i) finding height estimations of overlapping nodes that belong to different sessions, (ii) calculating height estimation errors between the height estimates of the currently evaluated session and sessions that were previously processed, (iii) reducing the height estimation errors (preferably without welding). 134

Inter-session offsets compensation. 140

Searching for overlapping nodes of the new session that (i) overlap with nodes of other sessions, and (ii) had their height amended during step 130. 142

Performing height compensation (welding) so that the heights of each overlapping node of the new session and overlapping node of other sessions are equal. 144

Distributing the correction made to the heights (welding point errors) of the overlapping nodes of the new session to other nodes of the session- according to a certain error distribution. 146

100

FIG. 5

69

Initialization step. 210'

Defining the elevation of new nodes (if such exist) as the elevations obtained from the new session, and (b) merging the heights estimations of the other nodes of the new session. 220'

Session constant offsets compensation. 230'

Using, during each session, statistics related to the previous sessions and information related to the new session. 232'

Inter-session offsets compensation. 240'

200

FIG. 6

Obtaining pressure values (or height values (after constant session compensation) related to overlapping nodes from multiple sessions. 410'

Calculating the number of sessions that include the overlapping node and if there are enough sessions then calculating overlapping node pressure value statistics and remove outliers. 420

400

FIG. 7

EP 3 682 417 B1

FIG. 8

72

FIG. 9

Propagate WP1 error

Propagate WP1 error

WP1 651

620

Propagate WP1 error

610

Propagate WP1 error

Propagate WP3 error

630

Propagate WP2 error

WP3 653

Propagate WP1 error

Propagate WP3 error

WP2 652

FIG. 10

| Receiving or measuring inner vehicle pressure to provide multiple barometer measurements. The measuring is executed by a barometer of the vehicle and during a given driving session while the vehicle passes over road segments. 710 |

| Compensating, by a computer, for barometer affecting vehicle conditions to provide multiple compensated barometer measurements. 720 |

| Merging the multiple compensated barometer measurements with barometer information obtained during multiple other driving sessions that were executed by multiple vehicles, thereby providing height estimates of the road segments. The merging may or may not include at least one out of performing session constant offset compensation and performing inter session offset compensation. 730 |

700

FIG. 11

Measuring a first set of parameters by first vehicle sensors. 20'

Obtaining additional information about the vehicle and/or the road segments. 30'

Detecting by a vehicle computer, detected physical events related to the driving on the multiple road segments, wherein the detecting is based on the first set of parameters. 40'

Generating physical events information about the detected physical events. 50'

Calculating road segment attributes. 60'

Generating / Storing/ Transmitting / processing road segment information. 80'

Storing/ Transmitting / processing physical events information. 90'

Determining a location of the vehicle based on reference map and physical events information. 100'

10'

FIG. 12

Measuring a first set of
parameters by first vehicle
sensors. 20'

Obtaining additional information about
the vehicle and/or the road segments. 30'

Calculating
virtual sensors
readings 70'

Detecting by a vehicle computer, detected
physical events related to the driving on the
multiple road segments, wherein the detecting is
based on the first set of parameters. 40'

Generating physical
events information
about the detected
physical events. 50'

Calculating road
segment attributes. 60'

Generating driving
instructions and/or
suggestions  104'

Determining a location of the
vehicle based on reference map and
physical events information. 100'

Generating / Storing/
Transmitting /
processing road
segment information.
80'

Storing/ Transmitting /
processing physical
events information. 90'

Tracking the progress of the
vehicle 102'

Estimating future
path 106'

11'

FIG. 13

Basic layer 610'

Way header | RS basic attributes | RS basic attributes | RS basic attributes | Next way pointers

Basic way reference information | Basic way reference information | Basic way reference information | Basic way reference information

Fixed layer 620'

Fixed size additional reference information about any road segment of the way | Fixed size additional reference information about any road segment of the way | Fixed size additional reference information about any road segment of the way | Fixed size additional reference information about any road segment of the way

Fixed size sparse layer 630'

Fixed size additional reference information – about none or only some road segment of the way | Fixed size additional reference information – about none or only some road segment of the way | Fixed size additional reference information – about none or only some road segment of the way | Fixed size additional reference information – about none or only some road segment of the way

Variable size sparse layer 640'

variable size additional reference information – about none or only some road segment of the way | variable size additional reference information – about none or only some road segment of the way | variable size additional reference information – about none or only some road segment of the way | variable size additional reference information – about none or only some road segment of the way

Reference physical event information | Reference physical event information | Reference physical event information | Reference physical event information | Reference physical event information

Type | Position | Normalized magnitude

600'

FIG. 14

Searching within the reference map a reference sequence of physical events that fits a sequence of detected physical events  110'

Scanning the basic layer  112'

Scanning for the reference sequence of events in the variable size sparse layer that are linked to the scanned the basic layer  114'

FIG. 15

FIG. 16

FIG. 17

FIG. 18

Calibration factor

700'

Weight of vehicle

FIG. 19

FIG. 20

Receiving, by a communication interface, from multiple vehicles (a) physical events information about detected physical events that were detected by the multiple vehicles when driving over road segments that belong to the region, and (b) road segment attributes that were calculated by the multiple vehicles, the road segments attribute are related to road segments that belong to the region. 810

Calculating, by a computerized system, the reference map based on the physical events information about detected physical events that were detected by the multiple vehicles and the road segment attributes that were calculated by the multiple vehicles. 820

800

FIG. 21

Collecting vehicle profile information candidates, wherein a vehicle profile information candidate comprises fuel consumption information related to different road path and vehicle parameters; wherein at least some of the road path and the vehicle parameters are sensed by first vehicle sensors that differ from road image sensors. 910

Generating the vehicle profile based on, at least, the vehicle profile information candidates. The vehicle profile may consist, may consists essentially of or may include: (i) a cruise data structure that comprises cruise information about values of a cruise fuel consumption parameter associated with a constant velocity movement of the vehicle for different values of a first set of road path and vehicle parameters; (ii) an idle deceleration data structure that comprises idle deceleration information about values of an idle deceleration distance values associated with an idle deceleration of the vehicle for different values of a second set of road path and vehicle parameters, and (iii) an acceleration data structure that comprises acceleration information about values of an acceleration fuel consumption parameter associated with a constant acceleration of the vehicle for different values of a third set of road path and vehicle parameters. 930

Dynamically clustering the vehicle based on the vehicle profile. 930

Compressing the vehicle profile to generate a compressed vehicle profile. 940

Suggesting one or more driving parameter for a path that precedes the vehicle. 950

900

FIG. 22

Cruise data structre
1010

| Average momentarily fuel consumption 1011 | Related vehicle and road path parameters (such as velocity, slope of path segment, weight of vehicle, gear, and average throttle position)   1012 |

Vehicle profile
1000

Idle deceleration
data structre 1020

| Idle deceleration distance 1021 | Related vehicle and road path parameters (such as start velocity, slope of path segment, weight of vehicle, and gear)   1022 |

Acceleration data
structre 1030

| Accumulated fuel consumption 1031 | Related vehicle and road path parameters (such as start velocity, slope of path segment, acceleration distance, weight of vehicle, gear, and average throttle position)   1032 |

FIG. 23

| Average momentarily fuel consumption 1011 | Related vehicle and road path parameters (such as velocity, slope of path segment, weight of vehicle, gear, and average throttle position)   1012 |
|---|---|

| AVMFC(1,1,1,1,1) 1011(1,1,1,1,1) | V1, S1, W1, G1, ATP1   1012(1,1,1,1,1) |
|---|---|

| AVMFC(1,1,1,1,2) 1011(1,1,1,1,2) | V1, S1, W1, G1, ATP1   1012(1,1,1,1,2) |
|---|---|

|

|

|

| AVMFC(nv,ns,nw,ng,natp) 1011(nv,ns,nw,ng,natp) | Vnv, Sns, Wnw, Gng, ATPnatp   1012(nv,ns,nw,ng,natp) |
|---|---|

FIG. 24

| Idle deceleration distance 1021 | Related vehicle and road path parameters (such as start velocity, slope of path segment, weight of vehicle, and gear)   1022 |
|---|---|

| IDS(1,1,1,1) 1021(1,1,1,1) | V1, S1, W1, G1   1022(1,1,1,1) |
|---|---|

| IDS(1,1,1,2) 1021(1,1,1,2) | V1, S1, W1, G2   1022(1,1,1,2) |
|---|---|

|

|

|

| IDS(nv,ns,nw,ng) 1021(nv,ns,nw,ng) | Vnv, Sns, Wnw, Gng   1022(nv,ns,nw,ng) |
|---|---|

FIG. 25

| Accumulated fuel consumption 1031 | Related vehicle and road path parameters (such as start velocity, slope of path segment, acceleration distance, weight of vehicle, gear, and average throttle position)   1032 |
|---|---|

| AFC(1,1,1,1,1,1) 1031(1,1,1,1,1,1) | V1, S1, W1, AD1, G1, ATP1   1032(1,1,1,1,1,1) |
|---|---|

| AFC(1,1,1,1,1,2) 1031(1,1,1,1,1,2) | V1, S1, W1, AD1, G1, ATP2   1032(1,1,1,1,1,2) |
|---|---|

|
|
|

| AFC(Nv,Ns,Nw,Nad, Ng,Natp) 1031(Nv,Ns,Nw,Nad, Ng,Natp) | Vnv, Sns, Wnw, ADnad, Gng, ATPnatp 1032(nv,ns,nw,nad,ng,natp) |
|---|---|

FIG. 26

| Default cruise information 1010' | Cluster cruise information 1010" | Actual cruise information 1010" |
|---|---|---|

Cruise data structre 1010

| Default idle deceleration information 1020' | Cluster idle deceleration information 1020" | Actual idle deceleration information 1020" |
|---|---|---|

Idle deceleration data structre 1020

| Default acceleration information 1030' | Cluster acceleration information 1030" | Actual acceleration information 1030" |
|---|---|---|

Acceleration data structre 1030

1001

FIG. 27

Virtually segmenting a future path to portions, each portion may include one or more path segments of substantially the same slope and extrinsic limitations 1210

Calculating suggested driving parameters for the future path based on the vehicle profile, and the slopes and the extrinsic limitations of the portions 1220

Finding optimal speed for the portion based on the slope and extrinsic limitations such as maximal speed limit. 1222

Evaluating, based on driving parameters related to adjacent portions, a portion driving profile that starts a fixed acceleration period at the beginning of the portion, a constant speed portion at the optimal speed and an idle deceleration at the end of the portion. 1224

1200

FIG. 28

Maximal allowable speed

1230

V2

V1

X

Height

P1 1241

Slope 1 1241'

P2 1242

P4 1244

P3 1243

P5 1245

X

Suggested
velocity

SV5 1245

SV2 1252

SV7 1247

SV1 1251

SV9 1249

SV10 1250

SV4 1254

SV11 1251

SV3 1253

SV6 1246

SV8 1248

FIG. 29

Determining weight estimates for different combination of energy coefficient values and for each path segment of a plurality of path segments (assuming a certain motor efficiency function and a certain fuel consumption error correction function). 110"

Analyzing the plurality of weight estimates to determine the estimated weight of the vehicle 120"

Responding to the evaluated weight of the vehicle. 130"

100"

FIG. 30

1000"

1000"

1160"

FIG. 31

FIG. 32

| | $a_1$ | $a_2$ | $a_3$ |
|---|---|---|---|
| Gear 1 | $a_{1,1}$ | | $a_{1,3}$ |
| Gear 2 | | | |
| Gear 3 | | | |
| Gear 4 | | | |
| Gear 5 | | | |
| Gear 6 | | | |
| Gear 7 | | | |
| Gear 8 | | | |
| Gear 9 | | | |
| Gear 10 | | | |
| Gear 11 | | | |
| Gear 12 | | | |
| Gear 13 | | | |
| Gear 14 | | | |
| Gear 15 | | | |
| Gear 16 | $a_{1,16}$ | | $a_{3,16}$ |

1150

FIG. 33

FIG. 34

Estimated fuel
consumption
measurements error
correction function
1148

f6
f5
f4
f3

f2

f1

1141-1146

10    20    30    40    50    Fuel consumption measurements  [L/Hr]

1140

FIG. 35

FIG. 36

FIG. 37

Determining weight estimates (i) for different combination of energy coefficient values, (ii) for each path segment of a plurality of path segments, (iii) for different motor efficiency function values, and (iv) for different fuel consumption error correction function values. 210"

Analyzing the plurality of weight estimates to determine the estimated weight of the vehicle 220"

Responding to the evaluated weight of the vehicle. 230"

200"

FIG. 38

Obtaining during a learning period and by vehicle sensors, vehicle sensor measurements regarding driving sessions of the vehicle. The vehicle sensor measurement may include: Height measurements of paths related to the driving sessions. Fuel consumption measurements related to the driving sessions. Length measurements of the of road segments related to the driving sessions. 310"

Calculating, based on the vehicle sensor measurements, an evaluated weight of the vehicle 320"

Responding to the evaluated weight of the vehicle. 330"

300"

FIG. 39

FIG. 40

FIG. 41

FIG. 42

Receiving values of energy coefficients that are indicative of energy wasted by the vehicle; wherein the values of the energy coefficients were calculated based, at least in part, on vehicle sensor measurements obtained by vehicle sensors of the vehicle, the vehicle sensor measurements were obtained during driving sessions of the vehicle; wherein the vehicle sensor measurement comprise (a) height measurements of paths related to the driving sessions, (b) fuel consumption measurements related to the driving sessions, (c) length measurements of the of road segments related to the driving sessions; and (d) velocity measurements related to the driving sessions. 610"

Obtaining, during a new driving session and by the vehicle sensors, new vehicle sensor measurements related to the new driving session. 620"

Calculating the weight of the vehicle, by a vehicle computer, based on the values of the energy coefficients and the new vehicle sensor measurements. 630"

600"

FIG. 43

Monitoring wheel speeds of multiple vehicle wheels. 2110

Calculating vehicle speed estimates 2120

Detecting a breaking event 2131

Detecting high speed event 2132

Detecting turn event 2133

Detecting a Grip event. 2130

Calculating excitation. 2140

Calculating slip rate. 2150

Normalizing excitation and slip rate of multiple vehicle wheels to generate normalized excitation and normalized slip rates. 2160

Determining, based on the normalized excitation and normalized slip rates, a relevant slip curve. 2170

Responding to the determining of the relevant slip curve. 2180

2100

FIG. 44

Receive or generate first wheel speed signals 2111

Receive or generate second wheel speed signals 2112

Receive or generate third wheel speed signals 2113

Receive or generate fourth wheel speed signals 2114

Pre-processing wheel speed signals 2120

Low pass filtering, may be responsive to estimated wheel speed 2121

Detection of difference between wheels 2123

Ignoring short term variations 2124

Detecting turns 2125

Calculating compensated wheel speed readings 2126

Calculating vehicle speed based on compensated wheel speed readings. 2127

Wheel speed processing 2122

Vehicle speed

FIG. 45

109

Selecting vehicle speed estimates related to at least one part of the grip event to provide selected vehicle speed estimates while ignoring other vehicle speed estimates related to at least one other part of the grip event. 2142

Vehicle driving and/or breaking parameters

Slope of one or more path segments

Calculating the excitation based on one or more changes in the selected vehicle speed over time and on zero or more additional factors 2144

2140

Breaking pedal position

2171

2172

Time

FIG. 46

Receiving or estimating climate bias. 2161

Receiving or estimating wheel effective patch size. 2162

Receiving or estimating tire health. 2164

Receiving or estimating weight of the vehicle. 2166

Receiving or estimating Excitation. 2167

Receiving or estimating Speed. 2168

Receiving or estimating grip. 2167'

Normalizing excitation and slip rate of multiple vehicle wheels based on at least some out of speed, climate bias, wheel effective patch size, tire health, weight of vehicle and excitation 2169

2160

FIG. 47

111

Learning normalizing functions and/or selection rules. 2210

Receiving normalized slip curves related to multiple path segments and to multiple driving sessions of multiple vehicles . 2220

Building or updating a mapping between path segments and normalized slip curves. 2230

Distributing at least a part of the mapping to vehicles and/or users. 2240

2200

FIG. 48

Receiving or estimating climate bias. 2161

Receiving or estimating wheel effective patch size. 2162

Receiving or estimating tire health. 2164

Receiving or estimating weight of the vehicle. 2166

Receiving or estimating Excitation. 2167

Receiving or estimating Speed. 2168

Receiving or estimating grip. 2167'

Receiving a mapping between a path segment that precedes a current position of the vehicle and a normalized slip graph 2310

De-normalizing the normalized slip graph to provide a de-normalized slip graph. The de-normalizing is based on at least some out of speed, climate bias, wheel effective patch size, tire health, weight of vehicle and excitation 2320

Determining the marginal grip based on the de-normalized slip graph and the relevant grip-excitation coordinate on the graph 2330

Responding to the marginal grip 2340

2300

FIG. 49

Network

590

Computerized
system
592

WS 511

CM 542
W1 501

Processor 552

Vehicle computer 550

Memory
module 554

Other sensors 517

WS
512

W3 503

WS 513

W2 502

MMI 540

WS
514

W4 504

51

FIG. 50

FIG. 51

FIG. 52

Monitoring wheel speeds of multiple vehicle wheels. 2110

Calculating vehicle speed estimates 2120

Monitoring brake torque and engine torque 2115

Detecting a breaking event 2131

Detecting high speed event 2132

Detecting turn event 2133

Detecting passing an a small obstacle 2134

Detecting a Grip event. 2135

Calculating excitation. 2140'

Calculating impulse response to passing a small obstacle 2146

Calculating slip rate. 2150

Normalizing excitation and slip rate of multiple vehicle wheels to generate normalized excitation and normalized slip rates. 2160'

Determining, based on the normalized excitation and normalized slip rates, a relevant slip curve. 2170

Responding to the determining of the relevant slip curve. 2180

2105

FIG. 53

117

Selecting vehicle speed estimates related to at least one part of the grip event to provide selected vehicle speed estimates while ignoring other vehicle speed estimates related to at least one other part of the grip event. 2142

Vehicle driving and/or breaking parameters

Slope of one or more path segments

Calculating the excitation based on one or more changes in the selected vehicle speed over time and on zero or more additional factors 2144

Calculating vehicle impulse response to one or more small obstacles 2146

2140'

FIG. 54

Receiving or estimating engine torque and/or breaks torque  2163

Receiving and/or learning normalizing functions and/or selection rules. 2215

Receiving or estimating climate bias. 2161

Receiving or estimating wheel effective patch size. 2162

Receiving or estimating tire health. 2164

Receiving or estimating weight of the vehicle. 2166

Receiving or estimating Excitation. 2167

Receiving or estimating Speed. 2168

Receiving or estimating grip. 2167'

Normalizing excitation (including impulse response of the vehicle to one or more vehicles) and slip rate of multiple vehicle wheels based on at least some out of speed, climate bias, wheel effective patch size, tire health, weight of vehicle and excitation  2169'

2160'

FIG. 55

```
┌─────────────────────────────────────────────────────┐
│                       2402                           │
└─────────────────────────────────────────────────────┘
                          │
                          ▼
┌─────────────────────────────────────────────────────┐
│            2404        ┌──────────────────┐          │╌╌╌╌╌╌╌┐
│                        │      2405        │╌╌╌╌╌╌╌╌╌╌╌│       ╎
│                        └──────────────────┘          │       ╎
└─────────────────────────────────────────────────────┘       ╎
                          │                                    ╎
                          ▼                                    ╎
┌─────────────────────────────────────────────────────┐       ╎
│                       2406                           │       ╎
└─────────────────────────────────────────────────────┘       ╎
                                                               ╎
                              ┌──────────────────────────┐     ╎
                              │           2408           │◄╌╌╌╌┘
                              └──────────────────────────┘
```

2400

FIG. 56

```
┌─────────────────────────────────────────────┐
│                    2402                       │
└─────────────────────────────────────────────┘
                        │
                        ▼
┌─────────────────────────────────────────────┐
│                    2424                       │─ ─ ┐
└─────────────────────────────────────────────┘    ┊
                        ┊                            ┊
                        ▼                            ┊
┌─────────────────────────────────────────────┐    ┊
│                    2426                       │    ┊
└─────────────────────────────────────────────┘    ┊
                                                    ┊
              ┌──────────────────────┐             ┊
              │        2428          │◄─ ─ ─ ─ ─ ─ ┘
              └──────────────────────┘
```

2420

FIG. 57

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62573828
- US 62556447
- US 62556445
- US 62564270
- US 62575544
- US 62556444
- US 62556443
- US 62722210
- US 2016244067 A
- US 62556444 B
- US 62556447 B
- US 62556447 A